(19) Europäisches Patentamt
European Patent Office
Office européen des brevets

(11) EP 3 628 157 A1

(12) EUROPEAN PATENT APPLICATION

(43) Date of publication:
**01.04.2020 Bulletin 2020/14**

(21) Application number: **18197451.0**

(22) Date of filing: **28.09.2018**

(51) Int Cl.:
*A01N 43/90* (2006.01) *A01N 25/00* (2006.01)
*A01P 7/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
- **DICKHAUT, Joachim**
**67056 Ludwigshafen (DE)**
- **ADISECHAN, Ashokkumar**
**400705 Navi Mumbai (IN)**
- **DATTA, Gopal Krishna**
**37079 Goettingen (DE)**
- **KUZMINA, Olesya**
**67056 Ludwigshafen (DE)**
- **HUANG, Huazhang**
**Research Triangle Park, NC 27709 (US)**

(74) Representative: **BASF IP Association**
**BASF SE**
**G-FLP-C006**
**67056 Ludwigshafen (DE)**

# (54) METHOD OF CONTROLLING INSECTICIDE RESISTANT INSECTS AND VIRUS TRANSMISSION TO PLANTS

(57) The present invention relates to a method of controlling insects, that are resistant to one or more insecticide(s) and use or method of reducing virus transmission from insect vectors to plants comprising applying at least one compound of formula I as defined in the description.

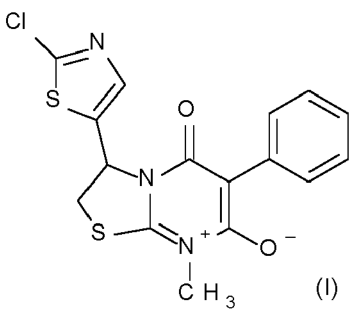

(I)

EP 3 628 157 A1

## Description

The present invention relates to a method of controlling insects, that are resistant to one or more insecticide(s).

According to the Insecticide Resistance Action Committee (IRAC), resistance may be defined as 'a heritable change in the sensitivity of a pest population that is reflected in the repeated failure of a product to achieve the expected level of control when used according to the label recommendation for that pest species' (www.irac-online.org). Cross-resistance occurs when resistance to one insecticide confers resistance to another insecticide, even where the insect has not been exposed to the latter product. Clearly, because pest insect populations are usually large in size and they breed quickly, there is always a risk that insecticide resistance may evolve, especially when insecticides are misused or over-used.

It did not take long after the introduction of synthetic organic insecticides till the first cases of resistance were detected and confirmed. With every new insecticide introduction, cases of resistance appeared after a certain period thereafter in some of key pest species. This phenomenon has been described as the pesticide treadmill'. As a result of continued applications over time the pest evolves resistance to the insecticide and the resistant strain becomes increasingly difficult to control at the labeled rate and frequency. This in turn has often led to more frequent applications of the insecticide. The phenomens of intensity of the resistance and the frequency of insecticide-resistant individuals in the population are both still increasing and problems of control continue worsen when product is applied. Eventually users may switch to another pesticide if one is available. The genetics of the heritable resistance traits and the intensive repeated application of pesticides, together are responsible for the rapid build-up of resistance in most insects and mites.

Natural selection by an insecticide allows some naturally occurring, pre-adapted insects with resistance genes to survive and to passon the resistance trait to their offspring. Through continued application of insecticides with the same MoA, selection for the resistant individuals persists so the proportion of resistant insects in the population increases, while susceptible individuals are eliminated by the insecticide. Under this permanent selection pressure, resistant insects outnumber susceptible ones and the insecticide is no longer effective. The speed with which resistance develops depends on several factors, including how fast the insects reproduce, the migration and host range of the pest, the availability of nearby susceptible populations, the persistence and specificity of the crop protection product, and the rate, timing and number of applications made. Resistance increases e.g. in greenhouses, where insects or mites reproduce quickly and when there is little or no immigration of susceptible individuals and the user may spray frequently (http://www.irac-online.org/about/resistance/).

There are several mechanisms of resistance development. The most common is resistance to metabolism. The insecticide resistant insects can detoxify by destroying or excretion in comparison to normal non-resistant insects, e.g. due to their metabolism such as their enzyme systems. Metabolic resistance is very often dependent on the structure of the active ingredient. Therefore the metabolic resistance is most likely overcome by actives with a different chemical structure. Another resistance mechanism is a modification of the target structure (protein, receptor, ion channel, etc.) of the insecticide. The insecticidal activity is reduced by a change in the binding site, e.g. due to point mutations, which are passed on. Further, there is also resistance due to behavioral change and penetration resistance (the outer shell of the insect developed barriers that slow down the penetration of insecticides in the body of the insect). In resistant pests a combination of several of these resistance mechanisms can be found.

Whether or not a resistance mechanism that is responsible for the resistance of a pest to a particular insecticide, these pests also faces a new insecticide resistant making (cross-) resistance, is difficult because of the different resistance mechanisms be fore-seen. Particularly in cases where the mechanism of action of the new insecticide is not known, or where the resistance by mechanisms other than by changing the binding site, for example by metabolic resistance is mediated, the prediction of a cross-resistance is difficult.

The management of insecticide resistance (Insecticide Resistance Management or IRM) is an important task in agriculture and is recommended as a critical component of integrated pest management (IPM).

The most important measure in the context of IRM is to reduce the selection pressure for resistant pests. This is achieved by the alternate use of various chemical classes of insecticides with different mechanisms of action, whereby the development of resistance can be slowed or prevented entirely.

The main principle of IPM is to integrate a wide range of pest management tools to prevent pests from reaching damaging levels in crops, thereby reducing reliance on any single method.

Such tools include biologicals (protection or release of parasitoids, predators and pathogens), agricultural methods such as crop hygiene, trap-crops, monitoring, use of genetic modified organisms like resistant plant varieties, transgenic plants and, of course, the correct application of insecticides.

The neonicotinoids represent the fastest-growing class of insecticides introduced to the market since the commercialization of pyrethroids (Nauen & Denholm, 2005: Archives of Insect Biochemistry and Physiology 58:200-215) and are extremely valuable insect control agents not least because they had exhibited little or no cross-resistance to the older insecticide classes, which suffer markedly from resistance problems. They showed many years to be imperishable to development of resistance, but due to the grown and extensive use of such neonicotinoid insecticides for the

control of agriculturally important crop pests and also in the control of cat and dog fleas, resistance started to be observed.

The selectivity of neonicotinoid compounds for insect species has been attributed to their binding on nicotinic acetylcholine receptors in which the negatively charged nitro- or cyano-groups of neonicotinoid compounds interact with a cationic subsite within insect nicotinic acetylcholine receptors. Resistance to neonicotinoids can arise either through nAChR subtypes expression, detoxification mechanisms and/or structural alterations of target-site proteins. Consequently, a number of derivatives and analogues of imidacloprid have been generated to date.

Even with the planthopper Nilaparvata lugens, resistance to neonicotinoid insecticides were detected (Gorman, Liu, Denholm, Brüggen, Nauen, 2008 Pest Manag Be 64. 1122 to 1125). Nilaparvata lugens is a primary insect pest of rice crops.

The term neonicotinoid insecticide as used herein refers to any insecticidal compound that acts at the insect nicotinic acetylcholine receptor, and in particular refers to those compounds classified as neonicotinoid insectides according to Yamamoto (1996, Agrochem Jpn 68:14-15). Examples of neonicotinoid insecticides include those in Group 4A of the IRAC (insecticide resistance action committee, Crop Life) mode of action classification scheme, e.g. acetamiprid, clothianidin, dinotefuran, imidacloprid, nitenpyram, thiacloprid, and thiamethoxam, as well as any compound having the same mode of action.

As mentioned above, the control of resistant pests is particularly relevant in cases where the mode of action of an insecticide is not known or where the resistance is mediated by mechanisms other than by changing the binding site.

Therefore, there is a great need for methods for controlling animal pests, especially in relation to one or more classes of insecticides known for such observed resistance, like e.g. organophosphates, carbamates, formamidines, pyrethroids, spinosyns, neonicotinoids, insect growth regulators and antifeedants (substances that have a pest discourage the feeding).

Methods for controlling such resistant insects have been described previously by the application of trifluromethylpyri(mi)dine compounds in WO2011/134819 or by the application of enaminocarbonyl compounds in WO2010078899.

The present invention is based on the surprising finding that a compound of formula (I) defined herein below, can be successfully used to control pests, which are resistant to known insecticides.

The present invention is further also based on the surprising finding that the compound of formula I or the compound of formula I with enantiomeric excess of compound I-R-1 or the compound I-R-1 (as defined hereinbelow), can be successfully used to control insecticide resistant populations of arthropods, in particular insects, and more particular insects from the order Hemiptera, Lepidoptera, Coleoptera or Diptera, and also insects from the order Thysanoptera or Homoptera.

Thus, in one aspect of the invention there is provided a method of controlling insects which are resistant to an insecticide, which method comprises applying to said insecticide resistant insects pesticidally active compound of formula (I):

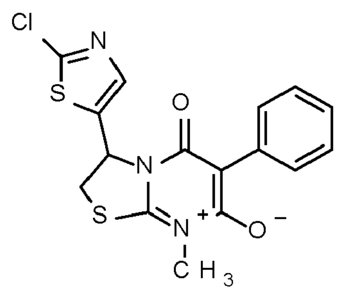

(I)

Especially the method for control of resistant pests is used against pests having developed a resistance against cyclodienes, organophosphates, carbamates, formamidines, pyrethroids, spinosyns, neonicotinoids, insect growth regulators and antifeedants.

In particular, the methods are effective against pests which have developed resistance against pyrethroids and/or chloronicotinyls, the so-called CNI or neonicotinoids.

In particular, the methods relate to controlling neonicotinoid resistant insects in the order Hemipterea, Lepidoptera, Coleoptera, Diptera, Thysanoptera or Homoptera, especially Hemiptera.

Methods of the invention find particular use in controlling resistant insects in crops of useful plants.

The increase in resistance of such insects to neonicotinoid insecticides poses a significant threat to the cultivation of a number of commercially important crops, and there is thus a need to find alternative insecticides capable of controlling neonicotinoid resistant insects (i.e. to find insecticides that do not exhibit any cross-resistance with the neonicotinoid

class).

One embodiment of the invention there provides a method of controlling species of insects which have shown resistancy effects against insecticides, in particular from the order of Hemiptera with their suborder of Homoptera and Heteroptera, but also from the orders Thysanoptera, Lepidoptera, Coleoptera or Diptera.

Particularily, the method of the present invention control pests of the suborder of auchenorrhyncha, such as cicadas, leafhoppers, treehoppers, planthoppers and froghoppers and of the suborder of sternorrhyncha, especially aphids, whiteflies and scale insects.

The method of the present invention may further control pests of the suborder heteroptera including bugs, such as shield bugs, seed bugs, assassin bugs, flower bugs, sweetpotato bugs and the water bugs.

For example, plants exhibiting aphid damage can have a variety of symptoms, such as decreased growth rates, mottled leaves, yellowing, stunted growth, curled leaves, browning, wilting, low yields and death. The removal of sap creates a lack of vigour in the plant, and aphid saliva is toxic to plants. Aphids frequently transmit disease-causing organisms like plant viruses to their hosts.

The coating of plants with honeydew can contribute to the spread of fungi which can damage plants. Honeydew produced by aphids has been observed to reduce the effectiveness of fungicides as well.

The damage of plants, and in particular commercial crops, has resulted in large amounts of resources and efforts being spent attempting to control the activities of aphids.

The compoun of formula (I) are present in two enantiomeric forms I-R-1 and I-S-1 as shown below

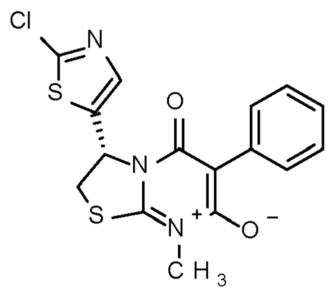

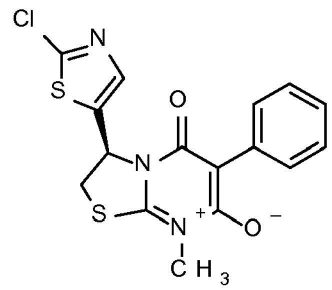

(I-R-1) (I-S-1)

The compounds of the formula (I), are present in mesomeric forms. These forms may be expressed in different isoelectronic formulae, each having the formal positive and negative charges on different atoms (as shown below). The present invention extends to all representative isoelectronic structures of compounds of formula I.

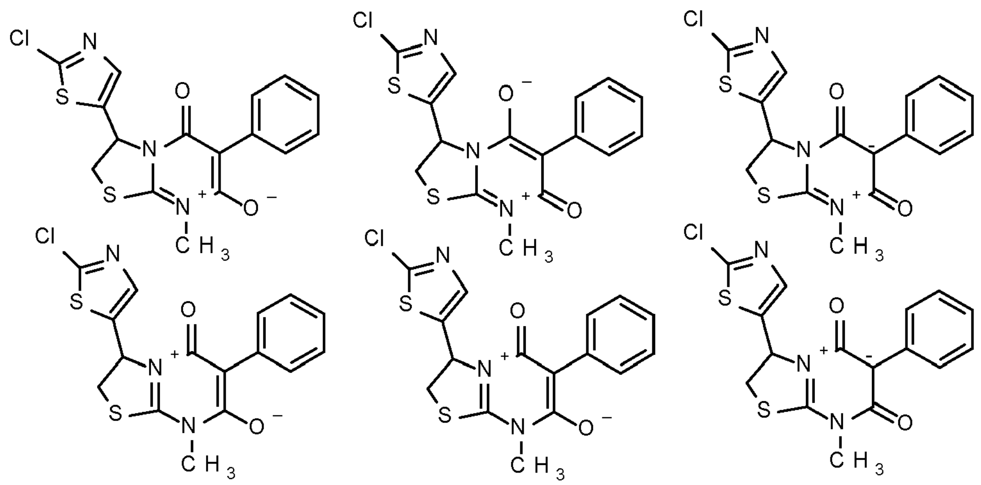

The compounds of the formula I-R-1 and I-R-S are also present in mesomeric forms analogus to the compound of formula I as shown above.

The invention relates to a method, in which the compound of formula (I) itself and its stereoisomers, salts, enantiomers or N-oxides, especially its enantiomers, and it mixtures.

As mentioned above, the presence of insect species, which are resistant to or can be hardly controlled by

insecticides, has posed a huge problem.

Accordingly, the development of a novel pest control agent having excellent insectidal activity against difficult pests, which are difficult to control because of resistance problems, is still being desired.

The present invention also relates to the use of pesticidally active compound of formula I or the compound of formula I with enantiomeric excess of compound I-R-1 or the compound I-R-1 for reducing virus transmission from insect vectors to plants.

The present invention also relates to a method of use of controlling or reducing virus transmission from insect vectors to plants by applying pesticidally active compound of formula I or the compound of formula I with enantiomeric excess of compound I-R-1 or the compound I-R-1 to the crops, plants, plant propagation materials, such as seeds, or soil or water.

The term "non-racemic compound(s) of formula (I)" refers to the compound(s) of formula (I) wherein its R- and S- enantiomers are not present in equal amount.

The term "Enantiomeric excess" indicates the excess of an enantiomer in a mixture of enantiomers, and is calculated according to the following formula:

$$ee = [\,|m_1 - m_2| / (m_1 + m_2)] \times 100\%$$

*ee*: enantiomeric excess
$m_1$: fraction of enantiomer 1
$m_2$: fraction of enantiomer 2

As used herein and unless otherwise stated, the term "enantiomer" means each individual optically active form of a compound of the invention.

The term "with enantiomeric excess" as used herein refers to a mixture of enantiomers wherein the enantiomer with respect to which the term with "enantiomeric excess" used is present in enantiomeric excees compared to other enantiomer, preferably in an amount of at least 60%, preferably at least 80%, more preferably at least 95%, most preferably at least 98% of the mixture of enantiomers. For example the term "compound of formula I-1 with enantiomeric excess of compound I-R-1" referes to compound of formula I-1 wherein the compound I-R-1 is present in enantiomeric excess amount compared to the compound I-S-1, preferably in an amount of at least 60%, preferably at least 80%, more preferably at least 95%, most preferably at least 98%.

The compounds according to the invention can be prepared analogously to the methods described in WO2014/167084, or as described below. The preparation of the compound of formula (I) above may lead to them being obtained as isomer mixtures. If desired, these can be resolved by the methods customary for this purpose, such as crystallization or chromatography, also on optically active adsorbate, to give the pure isomers.

Agronomically acceptable salts of the compounds I can be formed in a customary manner, e.g. by reaction with an acid of the anion in question.

Compounds of formula (I) can be prepared analogously to the methods described by Holyoke et al. in WO 2009/099929 (Scheme 1), from appropriately substituted compounds (III).

Scheme 1

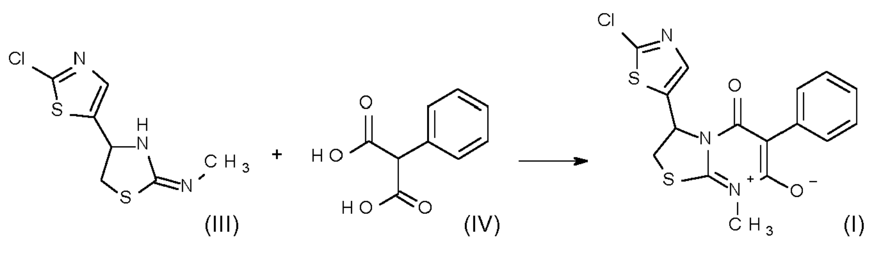
(III) (IV) (I)

Compounds (III) can be prepared by methods described e.g. by Brian R. Dixon et al in US 6, 353, 006 from e.g. 2-chloro ethanamines like compound (V), and analogous methods thereto, with appropriately substituted reactants.

Scheme 2

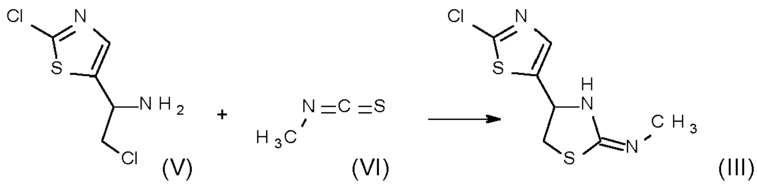

(V) (VI) (III)

2-Chloro ethanamines compounds (V) in turn are available for example by reduction of sulfinylimines as exemplified in Denolf, Bram et al, Journal of Organic Chemistry, 72(9), 3211-3217; 2007.

Scheme 3

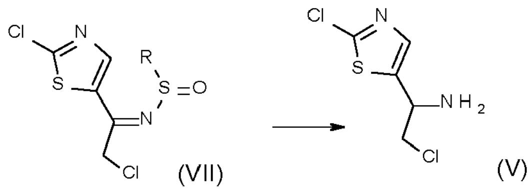

(VII) (V)

Compounds (VII) are obtained from α-halo-ketones, which are well known to persons skilled in the art.

The compound of formula I with enantiomeric excess can be prepared by the method described below:

The compound of formula I with enantiomeric excess of I-R-1 can be prepared by method comprising at least the steps of:

(A) reacting a compound of formula III,

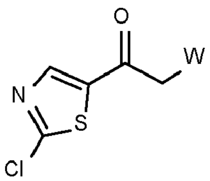

III

wherein

W is halogen, O-*p*-toluenesulfonyl, O-methanesulfonyl, or O-trifluoromethanesulfonyl;
with $M^2OR^{AC}$ wherein $M^2$ is selected from lithium, sodium, potassium, aluminium, barium, caesium, calcium, and magnesium; $R^{AC}$ is $C(=O)C_1$-$C_4$-alkyl;
to obtain the compound of formula IV,

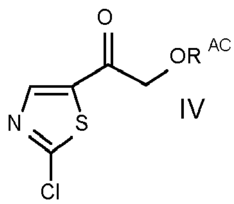

IV

wherein Het and $R^{AC}$ are as defined herein;

(B) hydrolyzing the compound of formula IV as defined herein, in the presence of an acid or a base, to obtain a compound of formula V,

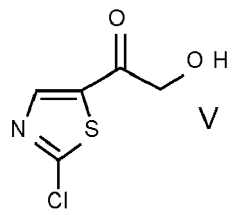

V

wherein Het is as defined in compound of formula IV;

(C) reacting the compound of formula V with $X^2SO_2NH_2$ wherein $X^2$ is halogen, to obtain the compound of formula VI

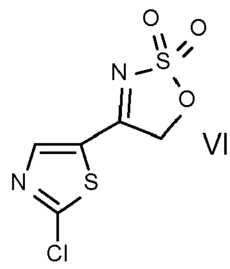

VI

(D) hydrogenation of the compound of formula VI, in the presence of a hydrogenation catalyst MXLn, wherein

M is a transition metal from group VIII to group XII of the periodic table;
X is an anion;
Ln is Ln1 or Ln2,
wherein
Ln1 is a chiral ligand of the formula Ln1

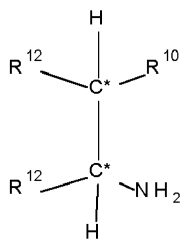

Ln1

wherein

C* is an asymmetric carbon atom of S or R-configuration;
$R^{10}$ is OH or NH-$SO_2$-$R^{11}$; wherein

$R^{11}$ is aryl unsubstituted or substituted with halogen, $C_1$-$C_{10}$-alkyl, $C_1$-$C_4$-alkoxy, $C_3$-$C_6$-cycloalkyl, $SO_3H$, or $SO_3Na$,
or
$C_1$-$C_{10}$-perfluoroalkyl, or $R^{13}R^{14}N$ wherein $R^{13}$ and $R^{14}$ independently represent $C_1$-$C_{10}$-alkyl unsubstituted or substituted with $C_6$-$C_{10}$-aryl, or $R^{13}$ and $R^{14}$ represent a $C_6$-$C_{10}$-cycloalkyl;
$R^{12}$ independently represents aryl or $C_6$-$C_{10}$-cycloalkyl ring, wherein the ring is unsubstituted or substituted independently of each other with halogen, $C_1$-$C_{10}$-alkyl, $C_1$-$C_4$-alkoxy, $C_3$-$C_6$-cycloalkyl, $SO_3H$, or $SO_3Na$, or both $R^{12}$ are linked together to form a 3- to 6-membered carbocyclic ring or a 5- to 10-membered partially unsaturated carbocyclic ring;
Ln2 is a chiral phosphorous ligand;

and a hydrogen source selected from a) mixture of $N(R)_3$, wherein R is H or $C_1$-$C_6$-alkyl, and HCOOH, b) HCOONa, and c) mixture of isopropyl alcohol, and *t*-BuOK or *t*-BuONa or *t*-BuOLi; to obtain a compound of

formula VII

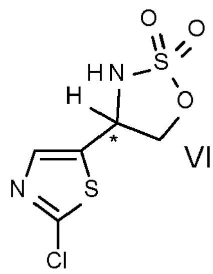

VII

wherein
C* is an asymmetric carbon atom of S or R-configuration;

(E) reacting the compound of formula VII,

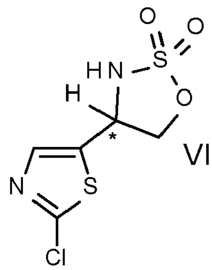

VII

wherein

C* is an asymmetric carbon atom of S or R-configuration;
with $CH_3NCS$;
in the presence of a base,
to obtain a compound of formula VIII,

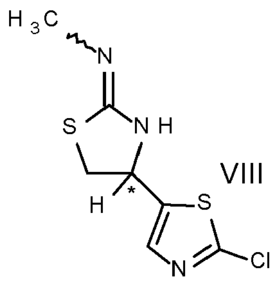

VIII

(F) reacting the compound of formula VIII as defined herein, with a compound of formula IX

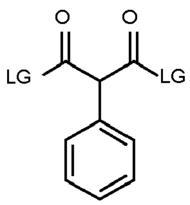

IX

wherein,

LG is a leaving group selected from halogen, $OR^u$ or $SR^u$; wherein
$R^u$ is halogen, $C_1$-$C_6$-alkyl or aryl, which is unsubstituted or substituted with halogen;

to obtain the compound of formula I with enantiomeric excess as defined herein.

However, although the compound of formula (I) itself and its combined application with other insecticides are known to have shown activity against certain crop damaging insect pests, the compounds of formula I or the compound of formula (I) with enantiomeric excess of the compound I-R-1 or the compound I-R-1 and some of their selected mixtures with other pesticidally active compounds have not yet been described for solving discussed problems as mentioned above.

In one embodiment of the invention, the compound of formula I is non-racemic;

In one embodiment of the invention, the compound of formula I is the compound I-R-1;

In one embodiment of the invention, the compound of formula (I) refer to the compound of formula (I) with enantiomeric excess of the compound I-R-1;

In one embodiment of the invention, the compound of formula (I) refer to the compound of formula (I) with enantiomeric excess of at least 55% of the compound I-R-1;

In another embodiment of the invention, the compound of formula (I) refer to the compound of formula (I) with enantiomeric excess of at least 60% of the compound I-R-1;

In another embodiment of the invention, the compound of formula (I) refer to the compound of formula (I) with enantiomeric excess of at least 65% of the compound I-R-1;

In another embodiment of the invention, the compound of formula (I) refer to the compound of formula (I) with enantiomeric excess of at least 70% of the compound I-R-1;

In another embodiment of the invention, the compound of formula (I) refer to the compound of formula (I) with enantiomeric excess of at least 75% of the compound I-R-1;

In another embodiment of the invention, the compound of formula (I) refer to the compound of formula (I) with enantiomeric excess of at least 80% of the compound I-R-1;

In another embodiment of the invention, the compound of formula (I) refer to the compound of formula (I) with enantiomeric excess of at least 85% of the compound I-R-1;

In a preferred embodiment of the invention, the compound of formula (I) refer to the compound of formula (I) with enantiomeric excess of at least 90% of the compound I-R-1;

In another preferred embodiment of the invention, the compound of formula (I) refer to the compound of formula (I) with enantiomeric excess of at least 95% of the compound I-R-1;

In another preferred embodiment of the invention, the compound of formula (I) refer to the compound of formula (I) with enantiomeric excess of at least 98% of the compound I-R-1;

In another preferred embodiment of the invention, the compound of formula (I) refer to the compound of formula (I) with enantiomeric excess of at least 99% of the compound I-R-1;

In one embodiment of the invention, the compound of formula (I) refer to the compound of formula (I) with enantiomeric excess of the compound I-R-1, wherein the the compound I-R-1 is present in an amount from ≥55% to ≤100% and the compound I-S-1 is present in an amount from ≤45% to ≥0%;

In another embodiment of the invention, the compound of formula (I) refer to the compound of formula (I) with enantiomeric excess of the compound I-R-1, wherein the the compound I-R-1 is present in an amount from ≥60% to ≤100% and the compound I-S-1 is present in an amount from ≤40% to ≥0%;

In another embodiment of the invention, the compound of formula (I) refer to the compound of formula (I) with enantiomeric excess of the compound I-R-1, wherein the the compound I-R-1 is present in an amount from ≥65% to ≤100% and the compound I-S-1 is present in an amount from ≤35% to ≥0%;

In another embodiment of the invention, the compound of formula (I) refer to the compound of formula (I) with enantiomeric excess of the compound I-R-1, wherein the the compound I-R-1 is present in an amount from ≥70% to ≤100% and the compound I-S-1 is present in an amount from ≤30% to ≥0%;

In another embodiment of the invention, the compound of formula (I) refer to the compound of formula (I) with enantiomeric excess of the compound I-R-1, wherein the the compound I-R-1 is present in an amount from ≥75% to ≤100% and the compound I-S-1 is present in an amount from ≤25% to ≥0%;

In another embodiment of the invention, the compound of formula (I) refer to the compound of formula (I) with enantiomeric excess of the compound I-R-1, wherein the the compound I-R-1 is present in an amount from ≥80% to ≤100% and the compound I-S-1 is present in an amount from ≤20% to ≥0%;

In another embodiment of the invention, the compound of formula (I) refer to the compound of formula (I) with enantiomeric excess of the compound I-R-1, wherein the the compound I-R-1 is present in an amount from ≥85% to ≤100% and the compound I-S-1 is present in an amount from ≤15% to ≥0%;

In another embodiment of the invention, the compound of formula (I) refer to the compound of formula (I) with enantiomeric excess of the compound I-R-1, wherein the the compound I-R-1 is present in an amount from ≥90% to ≤100% and the compound I-S-1 is present in an amount from ≤10% to ≥0%;

In another embodiment of the invention, the compound of formula (I) refer to the compound of formula (I) with enantiomeric excess of the compound I-R-1, wherein the the compound I-R-1 is present in an amount from ≥95% to ≤100% and the

compound I-S-1 is present in an amount from ≤5% to ≥0%;

In another embodiment of the invention, the compound of formula (I) refer to the compound of formula (I) with enantiomeric excess of the compound I-R-1, wherein the the compound I-R-1 is present in an amount from ≥98% to ≤100%, preferably ≥99% to ≤100%, and the compound I-S-1 is present in an amount from ≤2% to ≥0% , preferably ≤1% to ≥0%;

The "compound of formula I" as well "compound of formula I-R-1 ", or "compound of formula I with enantiomeric excess of compound I-R-1 ", and the terms "compound(s) for methods according to the (present) invention", "compound(s) according to the (present) invention" or which all compound(s) are applied in methods and uses according to the present invention comprise the compound(s) as defined herein as well as a known stereoisomer, salt, tautomer or N-oxide thereof (including a polymorphic crystalline form, a co-crystal or a solvate of a compound or a stereoisomer, salt, tautomer or N-oxide thereof).

The compounds according to the present invention may be provided as such or as mixtures with at least one mixing partner such as an insecticide, fungicide, or as compositions comprising an auxiliary and at least one compound of the present invention or a mixture thereof. Suitable formulations will be described further below.

he compound of the formula (I) may have one or more centers of chirality, in which case they are present as mixtures of enantiomers or diastereomers. The invention provides both the pure enantiomers or pure diastereomers of the compound of formula (I), and their mixtures and the use according to the invention of the pure enantiomers or pure diastereomers of the compound of formula (I) or its mixtures. Suitable compounds of the formula (I) also include all possible geometrical stereoisomers (cis/trans isomers) and mixtures thereof. Cis/trans isomers may be present with respect to an alkene, carbon-nitrogen double-bond, nitrogen-sulfur double bond or amide group. The term "stereoisomer(s)" encompasses both optical isomers, such as enantiomers or diastereomers, the latter existing due to more than one center of chirality in the molecule, as well as geometrical isomers (cis/trans isomers).

Salts of the compounds according to the present invention are preferably agriculturally and veterinarily acceptable salts. They can be formed in a customary method, e.g. by reacting the compound with an acid if the compound of the present invention has a basic functionality or by reacting the compound with a suitable base if the compound of the present invention has an acidic functionality.

In general, suitable "agriculturally useful salts" or "agriculturally acceptable salts" are especially the salts of those cations or the acid addition salts of those acids whose cations and anions, respectively, do not have any adverse effect on the action of the compounds according to the present invention. Suitable cations are in particular the ions of the alkali metals, preferably lithium, sodium and potassium, of the alkaline earth metals, preferably calcium, magnesium and barium, and of the transition metals, preferably manganese, copper, zinc and iron, and also ammonium ($NH_4^+$) and substituted ammonium in which one to four of the hydrogen atoms are replaced by $C_1$-$C_4$-alkyl, $C_1$-$C_4$-hydroxyalkyl, $C_1$-$C_4$-alkoxy, $C_1$-$C_4$-alkoxy-$C_1$-$C_4$-alkyl, hydroxy-$C_1$-$C_4$-alkoxy-$C_1$-$C_4$-alkyl, phenyl or benzyl. Examples of substituted ammonium ions comprise methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)ethyl-ammonium, bis(2-hydroxyethyl)ammonium, benzyltrimethylammonium and benzyltriethylammonium, furthermore phosphonium ions, sulfonium ions, preferably tri($C_1$-$C_4$-alkyl)sulfonium, and sulfoxonium ions, preferably tri($C_1$-$C_4$-alkyl)sulfoxonium.

Anions of useful acid addition salts are primarily chloride, bromide, fluoride, hydrogen sulfate, sulfate, dihydrogen phosphate, hydrogen phosphate, phosphate, nitrate, hydrogen carbonate, carbonate, hexafluorosilicate, hexafluorophosphate, benzoate, and the anions of $C_1$-$C_4$-alkanoic acids, preferably formate, acetate, propionate and butyrate. They can be formed by reacting the compounds of the formulae I with an acid of the corresponding anion, preferably of hydrochloric acid, hydrobromic acid, sulfuric acid, phosphoric acid or nitric acid.

The compound of the formula (I) may be present in the form of their N-oxides. The term "N-oxide" includes any compound of the present invention which has at least one tertiary nitrogen atom that is oxidized to an N-oxide moiety. N-oxides of compounds (I) can in particular be prepared by oxidizing the ring nitrogen atom(s) of the pyridine ring and/or the pyrazole ring with a suitable oxidizing agent, such as peroxo carboxylic acids or other peroxides. The person skilled in the art knows if and in which positions compounds of the formula (I) of the present invention may form N-oxides.

The compounds according to the present invention may be amorphous or may exist in one ore more different crystalline states (polymorphs) which may have different macroscopic properties such as stability or show different biological properties such as activities. The present invention includes both amorphous and crystalline compounds of formula (I), their enantiomers or diastereomers, mixtures of different crystalline states of the respective compound of formula (I), its enantiomers or diastereomers, as well as amorphous or crystalline salts thereof.

The term "co-crystal" denotes a complex of the compounds according to the invention or a stereoisomer, salt, tautomer or N-oxide thereof, with one or more other molecules (preferably one molecule type), wherein usually the ratio of the compound according to the invention and the other molecule is a stoichiometric ratio.

The term "solvate" denotes a co-complex of the compounds according to the invention, or a stereoisomer, salt, tautomer or N-oxide thereof, with solvent molecules. The solvent is usually liquid. Examples of solvents are methanol, ethanol, toluol, xylol. A preferred solvent which forms solvates is water, which solvates are referred to as "hydrates". A

solvate or hydrate is usually characterized by the presence of a fixed number of n molecules solvent per m molecules compound according to the invention.

The preparation of the compounds of formula I above may lead to them being obtained as isomer mixtures. If desired, these can be resolved by the methods customary for this purpose, such as crystallization or chromatography, also on optically active adsorbate, to give the pure isomers.

Agronomically acceptable salts of the compounds I can be formed in a customary manner, e.g. by reaction with an acid of the anion in question.

Methods, applications and uses of the present invention,
As explained herein above, resistance therefore means that the original activitiy of a pesticide against the target organisms (arthropods, insects) decreases or is even lost, due to genetic adaptation of the target organism.

"Resistant" to an insecticide is understood to mean resistant to at least one insecticide, i.e. the insect may be resistant to only one, but also to several insecticides.

The resistance may be also against an insecticidal effect which is due to a genetic modification of a plant (modified or transgenic plant), which caused a resistance of the plant or crop to certain pests, especially insect pests, in susceptible insects.

This is to be understood to include plants that are by the use of recombinant DNA techniques capable to synthesize one or more insecticidal proteins, especially those mentioned herein, especially those known from the bacterial genus Bacillus, particularly from Bacillus thuringiensis, such as endotoxins, e.g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, for example Photorhabdus spp. or Xenorhabdus spp., and so on.

Methods and uses of the invention as described herein may also involve a step of assessing whether insects are resistant to certain insecticides. This step will in general involve collecting a sample of insects from the area (e.g. crop, field, habitat) to be treated, before actually applying a compound of formula I, and testing (for example using any suitable phenotypic, biochemical or molecular biological technique applicable) for resistance/sensitivity.

Thus, in the first aspect of the invention there is provided a method of controlling insects which are resistant to an insecticide, which method comprises applying a composition comprising the compound of formula I or the compound of formula I with enantiomeric excess of compound I-R-1 or the compound I-R-1, in free form or in agrochemically acceptable salt form to said resistant insects.

Thus, in one aspect of the invention there is provided a method of controlling insects from the order Hemiptera, Lepidoptera, Coleoptera, or Diptera, which are resistant to an insecticide, which method comprises applying a composition comprising the compound of formula I or the compound of formula I with enantiomeric excess of compound I-R-1 or the compound I-R-1, in free form or in agrochemically acceptable salt form to said resistant insects.

Thus in one preferred aspect of the invention there is provided a method of controlling insects from the order Hemiptera, especially from the families of Aleyrodoidea, Aphididae and Delphacidae, which are resistant to an insecticide, which method comprises applying a composition comprising the compound of formula I or the compound of formula I with enantiomeric excess of compound I-R-1 or the compound I-R-1, in free form or in agrochemically acceptable salt form to said resistant insects.

Thus, in another aspect of the invention there is provided a method of controlling insects which are resistant to a neonicotinoid insecticide, which method comprises applying a composition comprising the compound of formula I or the compound of formula I with enantiomeric excess of compound I-R-1 or the compound I-R-1, in free form or in agrochemically acceptable salt form to said resistant insects.

Thus in one another aspect of the invention there is provided a method of controlling insects which are resistant to a pyrethroid insecticide, which method comprises applying a composition comprising the compound of formula I or the compound of formula I with enantiomeric excess of compound I-R-1 or the compound I-R-1, in free form or in agrochemically acceptable salt form to said resistant insects.

Thus in one another aspect of the invention there is provided a method of controlling insects which are resistant to an organophosphate insecticide, such as primicarb, which method comprises applying a composition comprising the compound of formula I or the compound of formula I with enantiomeric excess of compound I-R-1 or the compound I-R-1, in free form or in agrochemically acceptable salt form to said resistant insects.

Thus in one another aspect of the invention there is provided a method of controlling insects which are resistant to a feeding blocker insecticide, such as pymetrozine, which method comprises applying a composition comprising the compound of formula I or the compound of formula I with enantiomeric excess of compound I-R-1 or the compound I-R-1, in free form or in agrochemically acceptable salt form to said resistant insects.

Thus in one preffered aspect of the invention there is provided a method of controlling insects from the order Hemiptera, especially from the families of Aleyrodoidea, Aphididae and Delphacidae, which are resistant to a neonicotinic insecticide, which method comprises applying a composition comprising the compound of formula I or the compound of formula I with enantiomeric excess of compound I-R-1 or the compound I-R-1, in free form or in agrochemically acceptable salt form to said resistant insects.

In one another aspect of the invention there is provided a use of the compound of formula I as defined herein in methods of the invention as defined herein.

By virtue of the surprising ability of the the compound of formula I or the compound of formula I with enantiomeric excess of compound I-R-1 or the compound I-R-1 to control such resistant insects, the invention also provides a method of protecting a crop of useful plants, wherein said crop is susceptible to and/or under attack from such insects.

Such a method involves applying to said crop, treating a plant propagation material of said crop with, and/or applying to said insects, a composition comprising the compound of formula I or the compound of formula I with enantiomeric excess of compound I-R-1 or the compound I-R-1, in free form or in agrochemically acceptable salt form.

The compound of formula I or the compound of formula I with enantiomeric excess of compound I-R-1 or the compound I-R-1 may also be used in a resistance management (RM) strategy with a view to controlling resistance to the neonicotinoid class of insecticides.

Such a RM strategy may involve applying a composition comprising a mixture of a neonicotinoid and the compound of formula I or the compound of formula I with enantiomeric excess of compound I-R-1 or the compound I-R-1, or alternating applications of a composition comprising the compound of formula I or the compound of formula I with enantiomeric excess of compound I-R-1 or the compound I-R-1 and a composition comprising a neonicotinoid insecticide, either by application alternation (including different types of application, such as treatment of plant propagation material, e.g. in seed treatment, and foliar spray), or seasonal/crop alternation basis (e.g. use the compound of formula I or the compound of formula I with enantiomeric excess of compound I-R-1 or the compound I-R-1 on a first crop/for control in a first growing season, and use a neonicotinoid insecticide for a subsequent crop/growing season, or vice versa), and this forms yet a further aspect of the invention.

In such an embodiment, the neonicotinoid would be e.g. thiamethoxam or imidacloprid.

The the compound of formula I or the compound of formula I with enantiomeric excess of compound I-R-1 or the compound I-R-1 may also be used in a resistance management strategy with a view to controlling resistance to the spinosyn class of insecticides.

Such a RM strategy may involve applying a composition comprising a mixture of a neonicotinoid and the compound of formula I or the compound of formula I with enantiomeric excess of compound I-R-1 or the compound I-R-1, or alternating applications of a composition comprising the compound of formula I or the compound of formula I with enantiomeric excess of compound I-R-1 or the compound I-R-1 and a composition comprising a spinosyn insecticide, either by application alternation (including different types of application, such as treatment of plant propagation material, e.g. in seed treatment, and foliar spray), or seasonal/crop alternation basis (e.g. use the compound of formula I or the compound of formula I with enantiomeric excess of compound I-R-1 or the compound I-R-1 on a first crop/for control in a first growing season, and use a spinosyn insecticide for a subsequent crop/growing season, or vice versa), and this forms yet a further aspect of the invention.

In such an embodiment, the spinosyn would be e.g. spinosad.

In a preferred embodiment, the method according to the invention is a method of controlling insects, which are resistant to an insecticide, which method comprises applying to said insecticide resistant insects compound of formula (I), wherein the insecticide to which the insect is resistant is from the following list of pesticides, grouped and numbered according the Mode of Action Classification of the Insecticide Resistance Action Committee (IRAC):

Group. 1 Acetylcholine esterase (AChE) inhibitors from the class of

M.1A carbamates, for example aldicarb, alanycarb, bendiocarb, benfuracarb, butocar-boxim, butoxycarboxim, carbaryl, carbofuran, carbosulfan, ethiofencarb, fenobucarb, formetanate, furathiocarb, isoprocarb, methiocarb, methomyl, metolcarb, oxamyl, pi-rimicarb, propoxur, thiodicarb, thiofanox, trimethacarb, XMC, xylylcarb and triazamate; or from the class of

M.1B organophosphates, for example acephate, azamethiphos, azinphos-ethyl, az-inphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos/ DDVP, dicrotophos, dimethoate, dimethylvinphos, disulfoton, EPN, ethion, ethopro-phos, famphur, fenamiphos, fenitrothion, fenthion, fosthiazate, heptenophos, imicyafos, isofenphos, isopropyl O-(methoxyaminothiophosphoryl) salicylate, isoxathion, mala-thion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos- methyl, profenofos, prope-tamphos, prothiofos, pyraclofos, pyridaphenthion, quinalphos, sulfotep, tebupirimfos, temephos, terbufos, tetrachlorvinphos, thiometon, triazophos, trichlorfon and vamidothion;

Group.3 Sodium channel modulators from the class of

M.3A pyrethroids, for example acrinathrin, allethrin, d-cis-trans allethrin, d-trans alle-thrin, bifenthrin, bioallethrin,

bioallethrin S-cylclopentenyl, bioresmethrin, cycloprothrin, cyfluthrin, beta-cyfluthrin, cyhalothrin, lambda-cyhalothrin, gamma-cyhalothrin, cyper-methrin, alpha-cypermethrin, beta-cypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, taufluvalinate, halfenprox, imipro-thrin, meperfluthrin,metofluthrin, momfluorothrin, permethrin, phenothrin, prallethrin, profluthrin, pyrethrin (pyrethrum), resmethrin, silafluofen, tefluthrin, tetramethylfluthrin, tetramethrin, tralomethrin and transfluthrin; or
M.3B sodium channel modulators such as DDT or methoxychlor;

Group.4 Nicotinic acetylcholine receptor agonists (nAChR) from the class of

M.4A neonicotinoids, for example acteamiprid, chlothianidin, dinotefuran, imidacloprid, nitenpyram, thiacloprid and thiamethoxam; or the compounds
M.4A.1: 1-[(6-chloro-3-pyridinyl)methyl]-2,3,5,6,7,8-hexahydro-9-nitro-(5S,8R)-5,8-Epoxy-1H-imidazo[1,2-a]azepine; or
M.4A.2: 1-[(6-chloro-3-pyridyl)methyl]-2-nitro-1-[(E)-pentylideneamino]guanidine; or
M4.A.3: 1-[(6-chloro-3-pyridyl)methyl]-7-methyl-8-nitro-5-propoxy-3,5,6,7-tetrahydro-2H-imidazo[1,2-a]pyridine;
or M.4B nicotine.
M.5 Nicotinic acetylcholine receptor allosteric activators from the class of spinosyns,
for example spinosad or spinetoram

Group 9 Selective homopteran feeding blockers, for example

M.9B pymetrozine, or M.9C flonicamid;

In a further preferred embodiment of the invention, the insecticide to which the insect is resistant is spinosyns and/or neonicotinoids.

In a further preferred embodiment of the invention, the insecticide to which the insect is resistant is selected from acteamiprid, chlothianidin, dinotefuran, imidacloprid, nitenpyram, thiacloprid, thiamethoxam, alpha-cypermethrin, and Spinosad.

In a further preferred embodiment of the invention, the insecticide to which the insect is resistant is selected from acteamiprid, chlothianidin, dinotefuran, imidacloprid, nitenpyram, thiacloprid, thiamethoxam, and Spinosad.

In an especially preferred embodiment of the invention, the method according to the invention is a method of controlling insects, which are resistant to an insecticide, which method comprises applying to said insecticide resistant insects compound of formula I or the compound of formula I with enantiomeric excess of compound I-R-1 or the compound I-R-1, wherein the insecticide to which the insect is resistant is a neonicotinoid compound.

In a further preferred embodiment of the invention, the insecticide to which the insect is resistant is alpha-cypermethrin and/or spinosad and/or imidacloprid.

In a further preferred embodiment of the invention, the insecticide to which the insect is resistant is spinosad and/or imidacloprid.

In a further preferred embodiment of the invention, the invention relates to a method of protecting a crop of useful plants susceptible to and/or under attack by insects, which are resistant to an insecticide, which method comprises applying to said crop, treating a plant propagation material of said crop with, and/or applying to said insecticide resistant insects, a compound of formula I or the compound of formula I with enantiomeric excess of compound I-R-1 or the compound I-R-1 as defined herein.

In a further preferred embodiment of the invention, the invention relates to a method of controlling resistance to one or more insecticides in insects, which comprises alternately applying a compound of formula I or the compound of formula I with enantiomeric excess of compound I-R-1 or the compound I-R-1, as defined herein, and the insecticide, towards which the insects are resistant, to said insects or to a crop of useful plants susceptible to and/or under attack from said insects.

In these methods of the invention, the methods are also preferred, wherein the insecticide resistant insect is from the order Hemiptera, Lepidoptera, Coleoptera or Diptera.

In these methods of the invention, the methods are especially preferred, wherein the insecticide resistant insect is from the order selected from thrips, hoppers and whitefly.

In these methods of the invention, preferred are also the methods of protecting a crop of useful plants susceptible to and/or under attack by insects, which insects are resistant to an insecticide, and enhancing the crop, which method comprises applying to the propagation material of said crop an insecticide followed by the foliar application of a compound of formula I or the compound of formula I with enantiomeric excess of compound I-R-1 or the compound I-R-1, as defined

herein, beginning with the 3-to 5-leaf crop stage.

The compounds according to the the present invention are especially suitable for efficiently combating animal pests such as arthropods, gastropods and nematodes including but not limited to:

insects from the order of Lepidoptera, for example *Achroia grisella, Acleris* spp. such as *A. fimbriana, A. gloverana, A. variana; Acrolepiopsis assectella, Acronicta major, Adoxophyes* spp. such as *A. cyrtosema, A. orana; Aedia leucomelas, Agrotis* spp. such as *A. exclamationis, A. fucosa, A. ipsilon, A. orthogoma, A. segetum, A. subterranea; Alabama argillacea, Aleurodicus dispersus, Alsophila pometaria, Ampelophaga rubiginosa, Amyelois transitella, Anacampsis sarcitella, Anagasta kuehniella, Anarsia lineatella, Anisota senatoria, Antheraea pernyi, Anticarsia (=Thermesia)* spp. such as *A. gemmatatis; Apamea* spp., *Aproaerema modicella, Archips* spp. such as *A. argyrospila, A. fuscocupreanus, A. rosana, A. xyloseanus; Argyresthia conjugella, Argyroploce* spp., *Argyrotaenia* spp. such as *A. velutinana; Athetis mindara, Austroasca viridigrisea, Autographa gamma, Autographa nigrisigna, Barathra brassicae, Bedellia* spp., *Bonagota salubricola, Borbo cinnara, Buccutatrix thurberiella, Bupalus piniarius, Busseola* spp., *Cacoecia* spp. such as *C. murinana, C. podana; Cactoblastis cactorum, Cadra cautella, Calingo braziliensis, Caloptilis theivora, Capua reticulana, Carposina* spp. such as *C. niponensis, C. sasakii; Cephus* spp., *Chaetocnema aridula, Cheimatobia brumata, Chilo* spp. such as *C. Indicus, C. suppressalis, C. partellus; Choreutis pariana, Choristoneura* spp. such as *C. conflictana, C. fumiferana, C. longicellana, C. murinana, C. occidentalis, C. rosaceana; Chrysodeixis (=Pseudopiusia)* spp. *such as C. eriosoma, C. indudens; Cirphis unipuncta, Clysia ambiguella, Cnaphalocerus* spp., *Cnaphalocrocis medinalis, Cnephasia* spp., *Cochylis hospes, Coleophora* spp., *Colias eurytheme, Conopomorpha* spp., *Conotrachelus* spp., *Copitarsia* spp., *Corcyra cephalonica, Crambus caliginosellus, Crambus teterrellus, Crocidosema (=Epinotia) aporema, Cydalima (=Diaphania) perspectalis, Cydia (=Carpocapsa)* spp. such as *C. pomonella, C. latiferreana; Dalaca noctuides, Datana integerrima, Dasychira pinicola, Dendrolimus* spp. such as *D. pini, D. spectabilis, D. sibiricus; Desmia funeralls, Diaphania* spp. such as *D. nitidalis, D. hyalinata; Diatraea grandiosella, Diatraea saccharalis, Diphthera festiva, Earias* spp. such as *E. insulana, E. vittella; Ecdytolopha aurantianu, Egira (=Xyiomyges) curialis, Elasmopalpus lignosellus, Eldana saccharina, Endopiza viteana, Ennomos subsignaria, Eoreuma loftini, Ephestia* spp. such as *E. cautella, E. elutella, E. kuehniella; Epinotia aporema, Epiphyas postvittana, Erannis tiliaria, Erionota thrax, Etiella* spp., *Eulia* spp., *Eupoecilia ambiguella, Euproctis chrysorrhoea, Euxoa* spp., *Evetria bouliana, Faronta albilinea, Feltia* spp. such as *F. subterranean; Galleria mellonella, Gracillaria* spp., *Grapholita* spp. such as *G. funebrana, G. molesta, G. inopinata; Halysidota* spp., *Harrisina americana, Hedylepta* spp., *Helicoverpa* spp. such as *H. armigera (=Heliothis armigera), H. zea (=Heliothis zea); Heliothis* spp. such as *H. assulta, H. subflexa, H. virescens; Hellula* spp. such as *H. undalis, H. rogatalis; Helocoverpa gelotopoeon, Hemileuca oliviae, Herpetogramma licarsisalis, Hibernia defoliaria, Hofmannophila pseudospretella, Homoeosoma electellum, Homona magnanima, Hypena scabra, Hyphantria cunea, Hyponomeuta padella, Hyponomeuta malinellus, Kakivoria flavofasciata, Keiferia lycopersicella, Lambdina fiscellaria fiscellaria, Lambdina fiscellaria lugubrosa, Lamprosema indicata, Laspeyresia molesta, Leguminivora glycinivorella, Lerodea eufala, Leucinodes orbonalis, Leucoma salicis, Leucoptera* spp. such as *L. coffeella, L. scitella; Leuminivora lycinivorella, Lithocolletis blancardella, Lithophane antennata, Llattia octo (=Amyna axis), Lobesia botrana, Lophocampa* spp., *Loxagrotis albicosta, Loxostege* spp. such as *L. sticticalis, L. cereralis; Lymantria* spp. such as *L. dispar, L. monacha; Lyonetia clerkella, Lyonetia prunifoliella, Malacosoma* spp. such as *M. americanum, M. californicum, M. constrictum, M. neustria; Mamestra* spp. such as *M. brassicae, M. configurata; Mamstra brassicae, Manduca* spp. such as *M. quinquemaculata, M. sexta; Marasmia spp, Marmara* spp., *Maruca testulalis, Megalopyge lanata, Melanchra picta, Melanitis leda, Mocis* spp. such as *M. lapites, M. repanda; Mocis latipes, Monochroa fragariae, Mythimna separata, Nemapogon cloacella, Neoleucinodes elegantalis, Nepytia* spp., *Nymphula* spp., *Oiketicus* spp., *Omiodes indicata, Omphisa anastomosalis, Operophtera brumata, Orgyia pseudotsugata, Oria* spp., *Orthaga thyrisalis, Ostrinia* spp. such as *O. nubilalis; Oulema oryzae, Paleacrita vernata, Panolis flammea, Parnara* spp., *Papaipema nebris, Papilio cresphontes, Paramyelois transitella, Paranthrene regalis, Paysandisia archon, Pectinophora* spp. such as *P. gossypiella; Peridroma saucia, Perileucoptera* spp., such as *P. coffeella; Phalera bucephala, Phryganidia californica, Phthorimaea* spp. such as *P. operculella; Phyllocnistis citrella, Phyllonorycter* spp. such as *P. blancardella, P. crataegella, P. issikii, P. ringoniella; Pieris* spp. such as *P. brassicae, P. rapae, P. napi; Pilocrocis tripunctata, Plathypena scabra, Platynota* spp. such as *P. flavedana, P. idaeusalis, P. stultana; Platyptilia carduidactyla, Plebejus argus, Plodia interpunctella, Plusia spp, Plutella maculipennis, Plutella xylostella, Pontia protodica, Prays* spp., *Prodenia* spp., *Proxenus lepigone, Pseudaletia* spp. such as *P. sequax, P. unipuncta; Pyrausta nubilalis, Rachiplusia nu, Richia albicosta, Rhizobius ventralis, Rhyacionia frustrana, Sabulodes aegrotata, Schizura concinna, Schoenobius* spp., *Schreckensteinia festaliella, Scirpophaga* spp. such as *S. incertulas, S. innotata; Scotia segetum, Sesamia* spp. such as *S. inferens, Seudyra subftava, Sitotroga cerealella, Sparganothis pilleriana, Spilonota lechriaspis, S. ocellana, Spodoptera (=Lamphygma)* spp. such as *S. eridania, S. exigua, S. frugiperda, S. latisfascia, S. littoralis, S. litura, S. omithogalli; Stigmella* spp., *Stomopteryx subsecivella, Strymon bazochii, Sylepta derogata, Synanthedon*spp. such as S. exitiosa, *Tecia solanivora, Telehin licus, Thaumatopoea pityocampa, Thaumatotibia (=Cryp-*

*tophlebia) leucotreta, Thaumetopoea pityocampa, Thecla* spp., *Theresimima ampelophaga, Thyrinteina* spp, *Tildenia inconspicuella, Tinea* spp. such as *T. cloacella, T. pellionella; Tineola bisselliella, Tortrixspp.* such as *T. viridana; Trichophaga tapetzella, Trichoplusia* spp. such as *T. ni; Tuta (=Scrobipalpula) absoluta, Udea* spp. such as *U. rubigalis, U. rubigalis; Virachola* spp., *Yponomeuta padella, and Zeiraphera canadensis;*
insects from the order of Coleoptera, for example *Acalymma vittatum, Acanthoscehdes obtectus, Adoretus* spp., *Agelastica alni, Agrilus* spp. such as *A. anxius, A. planipennis, A. sinuatus; Agriotes* spp. such as *A. fuscicollis, A. lineatus, A. obscurus; Alphitobius diaperinus, Amphimallus solstitialis, Anisandrus dispar, Anisoplia austriaca, Anobium punctatum, Anomala corpulenta, Anomala rufocuprea, Anoplophora* spp. such as *A. giabripennis; Anthonomus* spp. such as *A. eugenii, A. grandis, A. pomorum; Anthrenus* spp., *Aphthona euphoridae, Apion* spp., *Apogonia* spp., *Athous haemorrhoidalis, Atomaria* spp. such as *A. linearis; Attagenus* spp., *Aulacophora femoralis, Blastophagus piniperda, Blitophaga undata, Bruchidius obtectus, Bruchus* spp. such as *B. lentis, B. pisorum, B. rufimanus; Byctiscus betulae, Callidiellum rufipenne, Callopistria floridensis, Callosobruchus chinensis, Cameraria ohridella, Cassida nebulosa, Cerotoma trifurcata, Cetonia aurata, Ceuthorhynchus* spp. such as *C. assimilis, C. napi; Chaetocnema tibialis, Cleonus mendicus, Conoderus* spp. such as *C. vespertinus; Conotrachelus nenuphar, Cosmopolites* spp., *Costelytra zealandica, Crioceris asparagi, Cryptolestes ferrugineus, Cryptorhynchus lapathi, Ctenicera* spp. such as *C. destructor; Curculio* spp., *Cylindrocopturus* spp., *Cyclocephala* spp., *Dactylispa balyi, Dectes texanus, Dermestesspp., Diabrotica* spp. such as *D. undecimpunctata, D. speciosa, D. longicornis, D. semipunctata, D. virgifera; Diaprepes abbreviates, Dichocrocis* spp., *Dicladispa armigera, Diloboderus abderus, Diocalandra frumenti (Diocalandra stigmaticollis), Enaphalodes rufulus, Epilachna* spp. such as *E. varivestis, E. vigintioctomacuiata; Epitrix* spp. such as *E. hirtipennis, E. similaris; Eutheola humilis, Eutinobothrus brasiliensis, Faustinus cubae, Gibbium psylloides, Gnathocerus cornutus, Hellula undalis, Heteronychus arator, Hylamorpha elegans, Hylobius abietis, Hylotrupes bajulus, Hypera* spp. such as *H. brunneipennis, H. postica; Hypomeces squamosus, Hypothenemus* spp., *Ips typographus, Lachnosterna consanguinea, Lasioderma serricorne, Latheticus oryzae, Lathridius* spp., *Lema* spp. such as *L. bilineata, L. melanopus; Leptinotarsa*spp. such as *L. decemlineata; Leptispa pygmaea, Limonius californicus, Lissorhoptrus oryzophilus, Lixus* spp., *Luperodes* spp., *Lyctus* spp. such as *L. bruneus; Liogenys fuscus, Macrodactylus* spp. such as *M. subspinosus; Maladera matrida, Megaplatypus mutates, Megascelis* spp., *Melanotus communis, Meligethes* spp. such as *M. aeneus; Melolontha* spp. such as *M. hippocastani, M. melolontha; Metamasius hemipterus, Microtheca* spp., *Migdolus* spp. such as *M. fryanus, Monochamus* spp. such as *M. alternatus; Naupactus xanthographus, Niptus hololeucus, Oberia brevis, Oemona hirta, Oryctes rhinoceros, Oryzaephilus surinamensis, Oryzaphagus oryzae, Otiorrhynchus sulcatus, Otiorrhynchus ovatus, Otiorrhynchus sulcatus, Oulema melanopus, Oulema oryzae, Oxycetoniajucunda, Phaedon* spp. such as *P. brassicae, P. cochleariae; Phoracantha recurva, Phyllobius pyri, Phyllopertha horticola, Phyllophaga* spp. such as *P. helleri; Phyllotreta* spp. such as *P. chrysocephala, P. nemorum, P. striolata, P. vittula; Phyllopertha horticola, Popillia japonica, Premnotrypes* spp., *Psacothea hilaris, Psylliodes chrysocephala, Prostephanus truncates, Propylaea spp. such as propylaea japonica, Psylliodes* spp., *Ptinus* spp., *Pulga saltona, Rhizopertha dominica, Rhynchophorus* spp. such as *R. billineatus, R. ferrugineus, R. palmarum, R. phoenicis, R. vuineratus; Saperda candida, Scolytus schevyrewi, Scyphophorus acupunctatus, Sitona lineatus, Sitophilus* spp. such as *S. granaria, S. oryzae, S. zeamais; Sphenophorus* spp. such as *S. levis; Stegobium paniceum, Sternechus* spp. such as *S. subsignatus; Strophomorphus ctenotus, Symphyletes* spp., *Tanymecus* spp., *Tenebrio molitor, Tenebrioides mauretanicus, Tribolium* spp. such as *T. castaneum; Trogoderma* spp., *Tychius* spp., *Xylotrechus* spp. such as *X. pyrrhoderus; and, Zabrus* spp. *such as Z. tenebrioides;*
insects from the order of Diptera for example *Aedes* spp. such as *A. aegypti, A. albopictus, A. vexans; Anastrepha ludens, Anopheles* spp. such as *A. albimanus, A. crucians, A. freeborni, A. gambiae, A. leucosphyrus, A. maculipennis, A. minimus, A. quadrimaculatus, A. sinensis; Bactrocera invadens, bactrocera zonata, Bibio hortulanus, Calliphora erythrocephala, Calliphora vicina, Ceratitis capitata, Chrysomyia* spp. such as *C. bezziana, C. hominivorax, C. macellaria; Chrysops atlanticus, Chrysops discalis, Chrysops silacea, Cochliomyia* spp. such as *C. hominivorax; Contarinia* spp. such as *C. sorghicoia; Cordylobia anthropophaga, Culex* spp. such as *C. nigripalpus, C. pipiens, C. quinquefasciatus, C. tarsalis, C. tritaeniorhynchus; Culicoides furens, Culiseta inornata, Culiseta melanura, Cuterebra* spp., *Dacus cucurbitae, Dacus oleae, Dasineura brassicae, Dasineura oxycoccana, Delia* spp. such as *D. antique, D. coarctata, D. platura, D. radicum; Dermatobia hominis, Drosophila* spp. such as *D. suzukii, Fannia* spp. such as *F. canicularis; Gastraphilus* spp. such as *G. intestinalis; Geomyza tipunctata, Glossina* spp. such as *G. fuscipes, G. morsitans, G. palpalis, G. tachinoides; Haematobia irritans, Haplodiplosis equestris, Hippelates* spp., Hylemyia spp. such as *H. platura; Hypoderma* spp. such as *H. lineata; Hyppobosca* spp., *Hydrellia philippina, Leptoconops torrens, Liriomyza* spp. such as *L. sativae, L. trifolii; Lucilia* spp. such as *L. caprina, L. cuprina, L. sericata; Lycoria pectoralis, Mansonia titillanus, Mayetiola* spp. such as *M. destructor; Musca* spp. such as *M. autumnalis, M. domestica; Muscina stabulans, Oestrus* spp. such as *O. ovis; Opomyza florum, Oscinella* spp. such as *O. frit; Orseolia oryzae, Pegomya hysocyami, Phlebotomus argentipes, Phorbia* spp. such as *P. antiqua, P. brassicae, P. coarctata; Phytomyza gymnostoma, Prosimulium mixtum, Psila rosae, Psorophora columbiae, Psorophora discolor, Rhagoletis* spp. such as *R. cerasi, R. cingulate, R. indifferens, R. mendax, R. pomonella; Rivellia*

*quadrifasciata, Sarcophaga* spp. such as *S. haemorrhoidalis; Simulium vittatum, Sitodiplosis mosellana, Stomoxys* spp. such as *S. calcitrans; Tabanus* spp. such as *T. atratus, T. bovinus, T. lineola, T. similis; Tannia spp., Thecodiplosisjaponensis, Tipula oleracea, Tipula paludosa,* and *Wohlfahrtia* spp;

insects from the order of Thysanoptera for example, *Baliothrips biformis, Dichromothrips corbetti, Dichromothrips* ssp., *Echinothrips americanus, Enneothrips flavens, Frankliniella* spp. such as *F. fusca, F. occidentalis, F. tritici; Heliothrips* spp., *Hercinothrips femoralis, Kakothrips* spp., *Microcephaiothrips abdominalis, Neohydatothrips samayunkur, Pezothrips kellyanus, Rhipiphorothrips cruentatus, Scirtothrips* spp. such as *S. citri, S. dorsalis, S. perseae; Stenchaetothrips spp, Taeniothrips cardamoni, Taeniothrips inconsequens, Thrips* spp. such as *T. imagines, T. hawaiiensis, T. oryzae, T. palmi, T. parvispinus, T. tabaci;*

insects from the order of Hemiptera for example, *Acizziajamatonica, Acrosternum* spp. such as *A. hilare;* Acyrthosipon spp. such as *A. onobrychis, A. pisum; Adelges laricis, Adelges tsugae, Adelphocoris* spp., such as *A. rapidus, A. superbus; Aeneolamia* spp., *Agonoscena* spp., *Aulacorthum solani, Aleurocanthus woglumi, Aleurodes* spp., *Aleurodicus disperses, Aleurolobus barodensis, Aleurothrixus* spp., *Amrasca* spp., *Anasa tristis, Antestiopsis* spp., *Anuraphis cardui, Aonidiella* spp., *Aphanostigma piri, Aphidula nasturtii, Aphis* spp. such as *A. craccivora, A. fabae, A. forbesi, A. gossypii, A. grossulariae, A. maidiradicis, A. pomi, A. sambuci, A. schneideri, A. spiraecoia; Arboridia apicalis, Arilus critatus, Aspidiella* spp., *Aspidiotus* spp., *Atanus* spp., *Aulacaspis yasumatsui, Aulacorthum solani, Bactericera cockerelli (Paratrioza cockerelli), Bemisia* spp. such as *B. argentifolii, B. tabaci (Aleurodes tabaci); Blissus* spp. such as *B. leucopterus; Brachycaudus* spp. such as *B. cardui, B. helichrysi, B. persicae, B. prunicola; Brachycolus* spp., *Brachycorynella asparagi, Brevicoryne brassicae, Cacopsylla* spp. such as *C. fulguralis, C. pyricola (Psylla piri); Calligypona marginata, Calocoris* spp., *Campylomma livida, Capitophorus horni, Carneocephala fulgida, Cavelerius* spp., *Ceraplastes* spp., *Ceratovacuna lanigera, Ceroplastes ceriferus, Cerosipha gossypii, Chaetosiphon fragaefolii, Chionaspis tegalensis, Chlorita onukii, Chromaphisjuglandicola, Chrysomphalus ficus, Cicadulina mbila, Cimex* spp. such as *C. hemipterus, C. lectularius; Coccomytilus halli, Coccus* spp. such as *C. hesperidum, C. pseudomagnoliarum, Corythucha arcuata, Creontiades dilutus, Cryptomyzus ribis, Chrysomphalus aonidum, Cryptomyzus ribis, Ctenarytaina spatulata, Cyrtopeltis notatus, Dalbulus* spp., *Dasynus piperis, Deraeocoris spp. such as deraeocoris brevis, Dialeurodes* spp. such as *D. citrifolii; Dalbulus maidis, Diaphorina* spp. such as *D. citri; Diaspis* spp. such as *D. bromeliae; Dichelops furcatus, Diconocoris hewetti, Doralis* spp., *Dreyfusia nordmannianae, Dreyfusia piceae, Drosicha* spp., *Dysaphis* spp. such as *D. plantaginea, D. pyri, D. radicola; Dysaulacorthum pseudosolani, Dysdercus* spp. such as *D. cingulatus, D. intermedius; Dysmicoccus* spp., *Edessa* spp., *Geocoris* spp., *Empoasca* spp. such as *E. fabae, E. solana; Epidiaspis leperii, Eriosoma* spp. such as *E. lanigerum, E. pyricola; Erythroneura* spp., *Eurygaster* spp. such as *E. integriceps; Euscelis bilo-batus, Euschistus* spp. such as *E. heros, E. impictiventris, E. servus; Fiorinia theae, Geococcus coffeae, Glycaspis brimblecombei, Halyomorpha* spp. such as *H. halys; Heliopeltis* spp. such as *Helopeltis theivora, Homalodisca vitripennis (=H. coagulata), Horcias nobilellus, Hyalopterus pruni, Hyperomyzus lactucae, Icerya* spp. such as *I. purchase; Idiocerus* spp., *Idioscopus* spp., *Laodelphax striatellus, Lecanium* spp., *Lecanoideus floccissimus, Lepidosaphes* spp. such as *L. ulmi; Leptocorisa* spp., *Leptoglossus phyllopus, Lipaphis erysimi, Lygus* spp. such as *L. hesperus, L. lineolaris, L. pratensis; Maconellicoccus hirsutus, Marchalina hellenica, Macropes excavatus, Macrosiphum* spp. such as *M. rosae, M. avenae, M. euphorbiae; Macrosteles quadrilineatus, Mahanarva fimbriolata, Megacopta cribraria, Megoura viciae, Melanaphis pyrarius, Melanaphis sacchari, Melanocallis (=Tinocallis) caryaefoliae, Metcafiella* spp., *Metopolophium dirhodum, Monellia costalis, Monelliopsis pecanis, Myzocallis coryli, Murgantia* spp., *Myzus* spp. such as *M. ascalonicus, M. cerasi, M. nicotianae, M. persicae, M. varians; Nasonovia ribis-nigri, Neotoxoptera formosana, Neomegalotomus spp, Nephotettix* spp. such as *N. malayanus, N. nigropictus, N. parvus, N. virescens; Nezara* spp. such as *N. viriduta; Nilaparvata lugens, Nysius huttoni, Oebalus* spp. such as *O. pugnax; Oncometopia* spp., *Orthezia praelonga, Oxycaraenus hyalinipennis, Parabemisia myricae, Parlatoria* spp., *Parthenolecanium* spp. such as *P. corni, P. persicae; Pemphigus* spp. such as *P. bursarius, P. populivenae; Peregrinus maidis, Perkinsiella saccharicida, Phenacoccus* spp. such as *Phenacoccus solenopsis, P. aceris, P. gossypii; Phloeomyzus passerinii, Phorodon humuli, Phylloxera* spp. such as *P. devastatrix, Piesma quadrata, Piezodorus* spp. such as *P. guildinii; Pinnaspis aspidistrae, Planococcus* spp. such as *P. citri, P. ficus; Prosapia bicincta, Protopulvinaria pyriformis, Psallus seriatus, Pseudacysta persea, Pseudaulacaspis pentagona, Pseudococcus* spp. such as *P. comstocki; Psylla* spp. such as *P. mali; Pteromalus* spp., *Pulvinaria amygdali, Pyrilla* spp., *Quadraspidiotus* spp., such as *Q. perniciosus; Quesada gigas, Rastrococcus* spp., *Reduvius senilis, Rhizoecus americanus, Rhodnius* spp., *Rhopalomyzus ascalonicus, Rhopalosiphum* spp. such as *R. pseudobrassicas, R. insertum, R. maidis, R. padi; Sagatodes* spp., *Sahlbergella singularis, Saissetia* spp., *Sappaphis mala, Sappaphis mali, Scaptocoris* spp., *Scaphoides titanus, Schizaphis graminum, Schizoneura lanuginosa, Scotinophora* spp., *Selenaspidus articulatus, Sitobion avenae, Sogata* spp., *Sogatella furcifera, Solubea insularis, Spissistilus festinus (=Stictocephala festina), Stephanitis nashi, Stephanitis pyrioides, Stephanitis takeyai, Tenalaphara malayensis, Tetraleurodes perseae, Therioaphis maculate, Thyanta* spp. such as *T. accerra, T. perditor; Tibraca* spp., *Tomaspis* spp., *Toxoptera* spp. such as *T. aurantii; Trialeurodes* spp. such as *T. abutilonea, T. ricini, T. vaporariorum; Triatoma* spp., *Trioza* spp., *Typhlocyba* spp., *Unaspis* spp. such as *U. citri,*

*U. yanonensis; and Viteus vitifolii,*

Insects from the order Hymenoptera for example *Acanthomyops interjectus, Athalia rosae, Atta* spp. *such as A. capiguara, A. cephalotes, A. cephalotes, A. laevigata, A. robusta, A. sexdens, A. texana, Bombus* spp., *Brachymyrmex* spp*., Camponotus* spp. such as *C. floridanus, C. pennsylvanicus, C. modoc; Cardiocondyla nuda, Chalibion sp, Crematogasterspp., Dasymutilla occidentalis, Diprion* spp., *Dolichovespula maculata, Dorymyrmexspp., Dryocosmus kuriphilus, Formica* spp., *Hoplocampa* spp. such as *H. minuta, H. testudinea; Iridomyrmex humilis,* Lasius spp. such as *L. niger, Linepithema humile, Liometopum* spp., *Leptocybe invasa, Monomorium* spp. such as *M. pharaonis, Monomorium, Nylandria fulva, Pachycondyla chinensis, Paratrechina longicornis, Paravespula* spp., such as *P. germanica, P. pennsylvanica, P. vulgaris; Pheidole* spp. such as *P. megacephala; Pogonomyrmex* spp. such as *P. barbatus, P. californicus, Polistes rubiginosa, Prenolepis impairs, Pseudomyrmex gracilis, Schelipron* spp., *Sirex cyaneus, Solenopsis* spp. such as *S. geminata, S.invicta, S. molesta, S. richteri, S. xyloni, Sphecius speciosus, Sphexspp., Tapinoma* spp. such as *T. melanocephalum, T. sessile; Tetramorium* spp. such as *T. caespitum, T. bicarinatum, Vespa* spp. such as *V. crabro; Vespula* spp. such as *V. squamosal; Wasmannia auropunctata, Xylocopa* sp;

Insects from the order Orthoptera for example *Acheta domesticus, Calliptamus italicus, Chortoicetes terminifera, Ceuthophilus* spp., *Diastrammena asynamora, Dociostaurus maroccanus, Gryllotalpa* spp. such as *G. africana, G. gryllotalpa; Gryllus* spp., *Hieroglyphus daganensis, Kraussaria angulifera, Locusta* spp. such as *L. migratoria, L. pardalina; Melanoplus* spp. such as *M. bivittatus, M. femurrubrum, M. mexicanus, M. sanguinipes, M. spretus; Nomadacris septemfasciata, Oedaleus senegalensis, Scapteriscus* spp., *Schistocerca* spp. such as *S. americana, S. gregaria, Stemopelmatus* spp., *Tachycines asynamorus,* and *Zonozerus variegatus;*

Pests from the Class Arachnida for example Acari,e.g. of the families Argasidae, Ixodidae and Sarcoptidae, such as *Amblyomma* spp. (e.g. *A. americanum, A. variegatum, A. maculatum*), Argas spp. such as *A. persicu), Boophilus* spp. such as *B. annulatus, B. decoloratus, B. microplus, Dermacentor* spp. such as *D.silvarum, D. andersoni, D. variabilis, Hyalomma* spp. such as *H. truncatum, Ixodes* spp. such as *I. ricinus, I. rubicundus, I. scapularis, I. holocyclus, I. pacificus, Rhipicephalus sanguineus, Ornithodorus* spp. such as *O. moubata, O. hermsi, O. turicata, Ornithonyssus bacoti, Otobius megnini, Dermanyssus gallinae, Psoroptes* spp. such as *P. ovis, Rhipicephalus* spp. such as *R. sanguineus, R. appendiculatus, Rhipicephalus evertsi, Rhizoglyphus* spp., *Sarcoptes* spp. such asS. *Scabiei*; and Family Eriophyidae including *Aceria* spp. such as *A. sheldoni, A. anthocoptes, Acallitus* spp*., Aculops* spp. such as *A. lycopersici, A. pelekassi*; *Aculus* spp. such as *A. schlechtendali; Colomerus vitis, Epitrimerus pyri, Phyllocoptruta oleivora; Eriophytes ribis* and *Eriophyes* spp. such as *Eriophyes sheldoni*; Family Tarsonemidae including *Hemitarsonemus* spp., *Phytonemus pallidus and Polyphagotarsonemus latus, Stenotarsonemus* spp. *Steneotarsonemus spinki*; Family Tenuipalpidae including Brevipalpus spp. such as *B. phoenicis;* Family Tetranychidae including *Eotetranychus* spp*., Eutetranychus* spp*., Oligonychus* spp*., Petrobia latens, Tetranychus* spp. such as *T. cinnabarinus, T. evansi, T. kanzawai, T, pacificus, T. phaseulus, T. telarius* and *T. urticae; Bryobia praetiosa; Panonychus* spp. such as *P. ulmi, P. citri*; *Metatetranychus* spp. and *Oligonychus* spp. such as *O. pratensis, O. perseae, Vasates lycopersici; Raoiella indica, Family* Carpoglyphidae including *Carpoglyphus* spp.*; Penthaleidae* spp. such as *Halotydeus destructor,* Family Demodicidae with species such as *Demodex* spp.; Family Trombicidea including *Trombicula* spp.; Family Macronyssidae including *Ornothonyssus* spp.; Family Pyemotidae including *Pyemotes tritici; Tyrophagus putrescentiae;* Family Acaridae including *Acarus siro*; Family Araneida including *Latrodectus mactans, Tegenaria agrestis, Chiracanthium sp, Lycosa sp Achaearanea tepidariorum* and *Loxosceles reclusa*;

Pests from the Phylum Nematoda, for example, plant parasitic nematodes such as root-knot nematodes, *Meloidogyne* spp. such as *M. hapla, M. incognita, M. javanica;* cyst-forming nematodes, *Globodera* spp. such as *G. rostochiensis; Heterodera* spp. such as *H. avenae, H. glycines, H. schachtii, H. trifolii;* Seed gall nematodes, *Anguina* spp.; Stem and foliar nematodes, *Aphelenchoides* spp. such as *A. besseyi;* Sting nematodes, *Belonolaimus* spp. such as *B. longicaudatus;* Pine nematodes, *Bursaphelenchus* spp. such as *B. lignicolus, B. xyiophilus;* Ring nematodes, *Criconema* spp., *Criconemella* spp. such as *C. xenoplax* and *C. ornata;* and, *Criconemoides* spp. such as *Criconemoides informis; Mesocriconema* spp.; Stem and bulb nematodes, *Ditylenchus* spp. such as *D. destructor, D. dipsaci;* Awl nematodes, *Dolichodorus* spp.*;* Spiral nematodes, *Heliocotylenchus multicinctus;* Sheath and sheathoid nematodes, *Hemicycliophora* spp. and *Hemicriconemoides* spp.*; Hirshmanniella* spp.*;* Lance nematodes, *Hoploaimus* spp.*;* False rootknot nematodes, *Nacobbus* spp.*;* Needle nematodes, *Longidorus* spp. such as *L. elongatus;* Lesion nematodes, *Pratylenchus* spp. such as *P. brachyurus, P. neglectus, P. penetrans, P. curvitatus, P. goodeyi;* Burrowing nematodes, *Radopholus* spp. such as *R. similis; Rhadopholus* spp.*; Rhodopholus* spp.*;* Reniform nematodes, *Rotylenchus* spp. such as *R. robustus, R. reniformis; Scutellonema* spp.*;* Stubby-root nematode, *Trichodorus* spp. such as *T. obtusus, T. primitivus; Paratrichodorus* spp. such as *P. minor;* Stunt nematodes, *Tylenchorhynchus* spp. such as *T. claytoni, T. dubius;* Citrus nematodes, *Tylenchulus* spp. such as *T. semipenetrans;* Dagger nematodes, *Xiphinema* spp.*;* and other plant parasitic nematode species;

Insects from the order Isoptera for example *Calotermes flavicollis, Coptotermesspp.* such as *C. formosanus, C. gestroi, C. acinaciformis; Cornitermes cumulans, Cryptotermes* spp. such as *C. brevis, C. cavifrons; Globitermes*

*sulfureus, Heterotermes* spp. such as *H. aureus, H. longiceps, H. tenuis; Leucotermes flavipes, Odontotermes spp., incisitermes* spp. such as *I. minor, I. Snyder, Marginitermes hubbardi, Mastotermes* spp. such as *M. darwiniensis Neocapritermes* spp. such as *N. opacus, N. parvus; Neotermes* spp., *Procornitermes* spp., *Zootermopsis* spp. *such as Z. angusticollis, Z. nevadensis, Reticulitermes* spp. such as *R. hesperus, R. tibialis, R. speratus, R. flavipes, R. grassei, R. lucifugus, R. santonensis, R. virginicus; Termes natalensis,*

Insects from the order Blattaria for example *Blatta* spp. such as *B. orientalis, B. lateralis; Blattella* spp. such as *B. asahinae, B. germanica; Leucophaea maderae, Panchlora nivea, Periplaneta* spp. such as *P. americana, P. australasiae, P. brunnea, P. fuligginosa, P. japonica; Supella longipalpa, Parcoblatta pennsylvanica, Eurycotis floridana, Pycnoscelus surinamensis,*

Insects from the order Siphonoptera for example *Cediopsylla simples, Ceratophyllusspp., Ctenocephalides* spp. such as *C. felis, C. canis, Xenopsylla cheopis, Pulex irritans, Trichodectes canis, Tunga penetrans,* and *Nosopsyllus fasciatus,*

Insects from the order Thysanura for example *Lepisma saccharina, Ctenolepisma urbana,* and *Thermobia domestica,*

Pests from the class Chilopoda for example *Geophilus* spp., Scutigera spp. such as *Scutigera coleoptrata*;

Pests from the class Diplopoda for example *Blaniulus guttulatus, Julus* spp., *Narceus* spp., Pests from the class Symphyla for example *Scutigerella immaculata,*

Insects from the order Dermaptera, for example *Forficula auricularia,*

Insects from the order Collembola, for example *Onychiurus* spp., such as *Onychiurus armatus,*

Pests from the order Isopoda for example, *Armadillidium vulgare, Oniscus asellus, Porcellio scaber,*

Insects from the order Phthiraptera, for example *Damalinia* spp., Pediculus spp. such as *Pediculus humanus capitis, Pediculus humanus corporis, Pediculus humanus humanus; Pthirus pubis,* Haematopinus spp. such as *Haematopinus eurysternus, Haematopinus suis*; Linognathus spp. such as *Linognathus vituli; Bovicola bovis, Menopon gallinae, Menacanthus stramineus* and *Solenopotes capillatus, Trichodectes* spp.,

Examples of further pest species which may be controlled by compounds of fomula (I) include: from the Phylum Mollusca, class Bivalvia, for example, *Dreissena* spp.; class Gastropoda, for example, *Arion* spp., *Biomphalaria* spp., *Bulinus* spp., *Deroceras* spp., *Galba* spp., *Lymnaea* spp., *Oncomelania* spp., *Pomacea canaliclata, Succinea* spp.; from the class of the helminths, for example, *Ancylostoma duodenale, Ancylostoma ceylanicum, Acylostoma braziliensis, Ancylostoma* spp., *Ascaris lubricoides, Ascaris spp., Brugia malayi, Brugia timori, Bunostomum* spp., *Chabertia* spp., *Clonorchis* spp., *Cooperia* spp., *Dicrocoelium* spp., *Dictyocaulus filaria, Diphyllobothrium latum, Dracunculus medinensis, Echinococcus granulosus, Echinococcus multilocularis, Enterobius vermicularis, Faciola* spp., Haemonchus spp. such as *Haemonchus contortus; Heterakis* spp., *Hymenolepis nana, Hyostrongulus* spp., *Loa Loa, Nematodirus* spp., *Oesophagostomum* spp., *Opisthorchis* spp., *Onchocerca volvulus, Ostertagia* spp., *Paragonimus* spp., *Schistosomen* spp., *Strongyloides fuelleborni, Strongyloides stercora lis, Stronyloides* spp., *Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.*

Further examples of pest species which may be controlled by compounds of formula (I) include: *Anisoplia austriaca, Apamea spp., Austroasca viridigrisea, Baliothrips biformis, Caenorhabditis elegans, Cephus spp., Ceutorhynchus napi, Chaetocnema aridula, Chilo auricilius, Chilo indicus, Chilo polychrysus, Chortiocetes terminifera, Cnaphalocroci medinalis, Cnaphalocrosis spp., Colias eurytheme, Collops spp., Cornitermes cumulans, Creontiades spp., Cyclocephala spp., Dalbulus maidis, Deraceras reticulatum, Diatrea saccharalis, Dichelops furcatus, Dicladispa armigera, Diloboderus spp. such as Diloboderus abderus; Edessa spp., Epinotia spp., Formici-dae, Geocoris spp., Globitermes sulfureus, Gryllotalpidae, Halotydeus destructor, Hipnodes bicolor, Hydrellia philippina, Julus spp., Laodelphax spp., Leptocorsia acuta, Leptocorsia orato-rius, Liogenys fuscus, Lucillia spp., Lyogenys fuscus, Mahanarva spp., Maladera matrida, Ma-rasmia spp., Mastotermes spp., Mealybugs, Megascelis ssp, Metamasius hemipterus, Microtheca spp., Mocis latipes, Murgantia spp., Mythemina separata , Neocapritermes opacus, Neocapritermes parvus, Neomegalotomus spp., Neotermes spp., Nymphula depunctalis, Oebalus pugnax, Orseolia spp. such as Orseolia oryzae; Oxycaraenus hyalinipennis, Plusia spp., Pomacea canaliculata, Procornitermes ssp, Procornitermes triacifer, Psylloides spp., Rachiplusia spp., Rhodopholus spp., Scaptocoris castanea, Scaptocoris spp., Scirpophaga spp. such as Scirpophaga incertulas, Scirpophaga innotata; Scotinophara spp. such as Scotinophara coarctata; Sesamia spp. such as Sesamia inferens, Sogaella frucifera, Solenapsis geminata, Spissistilus spp., Stalk borer, Stenchaetothrips biformis, Steneotarsonemus spinki, Sylepta derogata, Telehin licus, Trichostrongylus spp..*

The methods of the invention are particularly applicable to the control of resistant insects (and resistance in insects) of the family Aphididae, such as: *Acyrthosiphum pisum, Aphis citricola, Aphis craccivora, Aphis fabae, Aphis frangu-lae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Li-paphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli,*

*Rhopalosiphum insertum Wa, Rhopalosiphum Aidis Fitch, paddy L Rhopalosiphum, Schizaphis graminum Rond., Sitobion avenae, Toxoptera aurantii, Toxoptera citricola, Phylloxera vitifoliae, Acyrthosiphon dirhodum, Acyrthosiphon solani, Aphis forbesi, Aphis grossulariae, Aphis idaei, Aphis illinoisensis, Aphis maidiradicis, Aphis ruborum, Aphis schneideri, Brachycaudus persicaecola, Cavariella aegopodii Scop., Cryptomyzus galeopsidis, Cryptomyzus ribis, Hyadaphis pseudobrassicae, Hyalopterus amygdali, Hyperomyzus pallidus, Macrosiphoniella sanborni, Metopolophium dirhodum, Myzus malisuctus, Myzus varians, Neotoxoptera sp, Nippolachnus piri Mats., Oregma lanigera Zehnter, um fitchii Sand, Rhopalosiphum nymphaeae, Rhopalosiphum saccharata that, Sappaphis piricola Instant T, Schizaphis piricola, Toxoptera schtheobromae, and Phylloxera coccinea.*

The methods of the invention are particularly applicable for the control of neonicotinoid resistant insects (and the neonicotinoid resistance in such insects) of these families.

Specific examples of neonicotinoid resistant aphids include *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Lipaphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum Aidis Fitch, Rhopalosiphum padi L, Schizaphis graminum Rond., Sitobion avenae, Toxoptera aurantii, Toxoptera citricola, and Phylloxera vitifoliae.*

In another embodiment, a resistant aphid controlled by the compound of the invention is also resistant to pyrethroid insecticides, such as *Musca domestica* or Lambda-cyhalothrin, preferably *Musca domestica.*

Thus, the insect may be resistant to neonicotionid insecticide and/or pyrethroid insecticides.

In another embodiment of the invention, in the methods and uses according to the invention, the compounds according to the present invention, including their stereoisomers, salts, tautomers and N-oxides, are particularly useful for controlling chewing-biting pests, in particular insects from the order of Lepidoptera and Coleoptera.

In a further preferred embodiment of the invention, in the methods and uses according to the invention, the compounds according to the present invention, including their stereoisomers, salts, tautomers and N-oxides, are particularly useful for controlling sucking or piercing insects, in particular insects from the order Diptera.

Therefore, in an especially preferred embodiment of the invention, in the methods and uses according to the invention, the insecticide resistant insect is from the order Lepidoptera, Coleoptera or Diptera.

In one embodiment of the invention, the insecticide resistant insect is from the order Lepidoptera and is selected from *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis.*

In another embodiment of the invention, the insecticide resistant insect is from the order Coleoptera (beetles) and is selected from *Agrilus sinuatus, Agriotes lineatus, Agriotes obscurus, Amphimallus solstitialis, Anisandrus dispar, Anthonomus grandis, Anthonomus pomorum, Aphthona euphoridae, Athous haemorrhoidalis, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Cetonia aurata, Ceuthorrhynchus assimilis, Ceuthorrhynchus napi, Chaetocnema tibialis, Conoderus vespertinus, Crioceris asparagi, Ctenicera ssp., Diabrotica longicornis, Diabrotica semipunctata, Diabrotica 12-punctata Diabrotica speciosa, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Otiorrhynchus sulcatus, Otiorrhynchus ovatus, Phaedon cochleariae, Phyllobius pyri, Phyllotreta chrysocephala, Phyllophaga sp., Phyllopertha horticola, Phyllotreta nemorum, Phyllotreta striolata, Popillia japonica, Sitona lineatus* and *Sitophilus granaria.*

In a preferred embodiment of the invention, the insecticide resistant insect is a potato beetle, more specifically the Colorado potato beetle.

In another embodiment of the invention, the insecticide resistant insect is from the order Diptera and is selected from *Aedes aegypti, Aedes albopictus, Aedes vexans, Anastrepha ludens, Anopheles maculipennis, Anopheles crucians,*

*Anopheles albimanus, Anopheles gambiae, Anopheles freeborni, Anopheles leucosphyrus, Anopheles minimus, Anopheles quadrimaculatus, Calliphora vicina, Ceratitis capitata, Chrysomya bezziana, Chrysomya hominivorax, Chrysomya macellaria, Chrysops discalis, Chrysops silacea, Chrysops atlanticus, Cochliomyia hominivorax, Contarinia sorghicola Cordylobia anthropophaga, Culicoides furens, Culex pipiens, Culex nigripalpus, Culex quinquefasciatus, Culex tarsalis, Culiseta inornata, Culiseta melanura, Dacus cucurbitae, Dacus oleae, Dasineura brassicae, Delia antique, Delia coarctata, Delia platura, Delia radicum, Dermatobia hominis, Fannia canicularis, Geomyza Tripunctata, Gasterophilus intestinalis, Glossina morsitans, Glossina palpalis, Glossina fuscipes, Glossina tachinoides, Haematobia irritans, Haplodiplosis equestris, Hippelates spp., Hylemyia platura, Hypoderma lineata, Leptoconops torrens, Liriomyza sativae, Liriomyza trifolii, Lucilia caprina, Lucilia cuprina, Lucilia sericata, Lycoria pectoralis, Mansonia titillanus, Mayetiola destructor, Musca autumnalis, Musca domestica, Muscina stabulans, Oestrus ovis, Opomyza florum, Oscinella frit, Pegomya hysocyami, Phorbia antiqua, Phorbia brassicae, Phorbia coarctata, Phlebotomus argentipes, Psorophora columbiae, Psila rosae, Psorophora discolor, Prosimulium mixtum, Rhagoletis cerasi, Rhagoletis pomonella, Sarcophaga haemorrhoidalis, Sarcophaga spp., Simulium vittatum, Stomoxys calcitrans, Tabanus bovinus, Tabanus atratus, Tabanus lineola,* and *Tabanus similis, Tipula oleracea,* and *Tipula paludosa.*

In a further preferred embodiment of the invention, in the methods and uses according to the invention, the insecticide resistant insect is selected from thrips, hoppers and whitefly.

In a further preferred embodiment of the invention, in the methods and uses according to the invention, the insecticide resistant insect is one or more of *Tuta absoluta, Pieris rapae, Trichoplusia ni, Plutella xylostella, Spodoptera littoralis, Spodoptera frugiperda, Crocidolomia pavonana, Cnaphalocerus medinalis, Sesamia inferens, Chilo suppressalis, Pyrausta furnacalis, Thermesia gemmatalis, Liriomyza sp., Leptinotarsus decemlineata, Epitrix sp., Phyllotreta cruciferae, Meligethes aeneus, Hypera brunneipennis; Nephotettix virens;Acyrthosiphum pisum, Euschisuts heros, Nezara viridula, Piezodurus guildingi, Lygus hesperus, thrips spp.,; Agriothes sp., Agrotis ypsilon, Phyllotreta spp., Elasmopalpus lignosellus, Heliothis armigera, Heliothis virescens, Heliothis zea; Agriotes lineatus, Agriotes obscurus,, Anthonomus grandis, Diabrotica longicornis, Diabrotica semipunctata, Diabrotica 12-punctata, Diabrotica speciosa, Diabrotica virgifera, Epitrix hirtipennis, Phaedon cochlearieae, Phyllotreta striolata, Aphis gossypii, Acarus siro, Bactrocera zonata, Bemisia argentifolii, Bemisia tabaci, Blattella germanica, Brevicoryne brassicae, Cimex lectularius, Culex quinquefasciatus, Cydia pomonella, Deraeocoris brevis, Diaphorina citri, Frankliniella occidentalis, Helopeltis theivora, Kampimodromus aberrans, Laodelphax striatellus, Leptinotarsa decemlineata, Musca domestica, Myzus persicae, Nilaparvata lugens, Oxycarenus hyalinipennis, Phenacoccus solenopsis, Phorodon humuli, Plutella xylostella, Propylaea japonica, Spodoptera litura, Sogatella furcifera, Thrips tabaci, Trialeurodes vaporariorum.*

In a further preferred embodiment of the invention, in the methods and uses according to the invention, the insecticide resistant insect is one or more of *Aphis gossypii, Acarus siro, Bactrocera zonata, Bemisia argentifolii, Bemisia tabaci, Blattella germanica, Brevicoryne brassicae, Cimex lectularius, Culex quinquefasciatus, Cydia pomonella, Deraeocoris brevis, Diaphorina citri, Frankliniella occidentalis, Helopeltis theivora, Kampimodromus aberrans, Laodelphax striatellus, Leptinotarsa decemlineata, Musca domestica, Myzus persicae, Nilaparvata lugens, Oxycarenus hyalinipennis, Phenacoccus solenopsis, Phorodon humuli, Plutella xylostella, Propylaea japonica, Spodoptera litura, Sogatella furcifera, Thrips tabaci, Trialeurodes vaporariorum;* In particular, in the methods and uses according to the invention, the insecticide resistant insect is one or more of *Aphis gossypii, Bactrocera zonata, Bemisia argentifolii, Bemisia tabaci, Blattella germanica, Brevicoryne brassicae, Cimex lectularius, Culex quinquefasciatus, Diaphorina citri, Frankliniella occidentalis, Helopeltis theivora, Laodelphax striatellus, Leptinotarsa decemlineata, Musca domestica, Myzus persicae, Nilaparvata lugens, Oxycarenus hyalinipennis, Phenacoccus solenopsis, Phorodon humuli, Propylaea japonica, Sogatella furcifera, Thrips tabaci, Trialeurodes vaporariorum.*

In particular, in the methods and uses according to the invention, the insecticide resistant insect is one or more of *Acarus siro, Aphis gossypii, Bemisia tabaci, Brevicoryne brassicae, Cimex lectularius, Cydia pomonella, Deraeocoris brevis, Diaphorina citri, Frankliniella occidentalis, Leptinotarsa decemlineata, Musca domestica, Nilaparvata lugens, Phenacoccus solenopsis, Plutella xylostella, Spodoptera litura, Trialeurodes vaporariorum.*

In particular, in the methods and uses according to the invention, the insecticide resistant insect is one or more of *Aphis gossypii, Bemisia tabaci, Brevicoryne brassicae, Cimex lectularius, Diaphorina citri, Frankliniella occidentalis, Kampimodromus aberrans, Leptinotarsa decemlineata, Musca domestica, Myzus persicae, Nilaparvata lugens, Phenacoccus so*l*enopsis, Sogatella furcifera, Trialeurodes vaporariorum.*

In particular, in the methods and uses according to the invention, the insecticide resistant insect is one or more of *Aphis gossypii, Leptinotarsa decemlineata, Myzus persicae, Nilaparvata lugens.*

In particular, in the methods and uses according to the invention, the insecticide resistant insect is one or more of *Aphis gossypii, Bemisia tabaci, Cydia pomonella, Leptinotarsa decemlineata, Myzus persicae, Phenacoccus solenopsis, Trialeurodes vaporariorum.*

In particular, in the methods and uses according to the invention, the insecticide resistant insect is one or more of *Aphis gossypii, Bemisia tabaci, Diaphorina citri, Leptinotarsa decemlineata, Musca domestica, Oxycarenus hyalinipennis, Phenacoccus solenopsis.*

In particular, in the methods and uses according to the invention, the insecticide resistant insect is one or more of *Aphis gossypii, Bemisia tabaci, Cimex lectularius, Leptinotarsa decemlineata, Nilaparvata lugens*

In particular, in the methods and uses according to the invention, the insecticide resistant insect is one or more of Acaridae spp., *Aphis* spp., *Bemisia* spp., *Brachycolus spp, Brevicoryne brassicae, Cimex* spp., *Cydia (=Carpocapsa)* spp., *Deraeocoris spp., Diaphorina* spp., *Frankliniella* spp., *Leptinotarsa* spp., *Musca* spp., *Nezara* spp., or *Nilaparvata lugens;*

In particular, in the methods and uses according to the invention, the insecticide resistant insect is one or more of *Acarus siro, Aphis gossypii, Bemisia tabaci, Brevicoryne brassicae, Cimex lectularius, Cydia pomonella, Deraeocoris brevis, Diaphorina citri, Frankliniella occidentalis, Leptinotarsa decemlineata, Musca domestica, Nilaparvata lugens*.

In particular, in the methods and uses according to the invention, the insecticide resistant insect is one or more of *frankliniella occidentalis, Musca domestica, Laodelphax striatella, Nilaparvata lugens* and *Sogatella furcifera.*

In particular, in the methods and uses according to the invention, the insecticide resistant insect is *frankliniella occidentalis.*

In particular, in the methods and uses according to the invention, the insecticide resistant insect is one or more of *Nilaparvata lugens, Laodelphax striatellus* and *Sogatella furcifera.*

In particular, in the methods and uses according to the invention, the insecticide resistant insect is one or more of *Laodelphax striatellus* and *Sogatella furcifera.*

In particular, in the methods and uses according to the invention, the insecticide resistant insect is *Nilaparvata lugens.*

In particular, in the methods and uses according to the invention, the insecticide resistant insect is *Laodelphax striatellus.*

In particular, in the methods and uses according to the invention, the insecticide resistant insect is *Sogatella furcifera.*

In particular, in the methods and uses according to the invention, the insecticide resistant insect is *Musca domestica.*

In particular, in the methods and uses according to the invention, the insecticide resistant insect is one or more of *Tuta absoluta, Pieris rapae, Trichoplusia ni, Plutella xylostella, Chilo suppressalis, Liriomyza sp., Leptinotarsus decemlineata, Epitrix sp., Phyllotreta cruciferae, Franklinella occidentalis, Bemisia tabaci, Bemisia argentifolii, Agrotis ypsilon.*

In particular, in the methods and uses according to the invention, the insecticide resistant insect is one or more of *Agrotis ypsilon, Heliothis virescens, Plutella xylostella, Agriotes lineatus, Diabrotica virgifera, Hypera brunneipennis, Leptinotarsus decemlineata, Phyllotreta striolata.*

In another embodiment, in the methods and uses according to the invention, the following application types are used:

Virus control:

The present invention also relates to the use of pesticidally active compound of formula I or the compound of formula I with enantiomeric excess of compound I-R-1 or the compound I-R-1 for reducing virus transmission from insect vectors to plants.

Vectors are organisms that can introduce a pathogen, such as a virus, into a plant to cause an infection. Suitable vectors include aphids, whiteflies, leaf hoppers, thrips, beetles, weevils, nematodes, and mites. Virus transmission from vectors to plants is a widespread cause of plant damage, for which there are few effective measures of control.

Up to now, no anti-viral agents are known for agricultural purposes. The only effective means for reducing viral infections transmitted by vectors is the control of the vectors, e.g., by using insecticides. Insecticides alone and or in mixtures with other known pesticides, which may be used for reducing viral infections transmitted by vectors (insects), are already known. For example, the use of mixtures containing pyrethroids and pyrimicarb or tetramic acid derivatives for reducing viral infections transmitted by vectors (insects) is already known ((RM Perrin, British Crop Prot Conf-Pests and Diseases 3, 989-996, 1986), EP-A 237 227 A1, EP-A 2011394 A1). In addition, the use of mixtures of a known insecticide and a mineral oil for the control of vectors (insects) capable of transmitting plant viruses is described in DD 100135. WO 2008/020998 refers to the in-furrow fungicide application for reducing plant damage by control of insect-vectored viral infection. WO 2011/134876 discloses methods for reducing insect-vectored viral infections by application of a combination of certain insecticides, i.e. anthranilic bis-amides, and a plant activator. WO 2014/079821 relates to the use of anthranilamide compounds for reducing insect-vectored viral infections.

However, the effectiveness of these insecticides or insecticidal mixtures in terms of reducing virus transmission from insect vectors to plants is not always satisfactory.

This is due to the fact that the insect vectors are often capable of transmitting the virus before the insecticides kill them. In this regard, it has to be distinguished between non-persistently and persistently transmitted viruses. Non-persistent viruses are transferred mechanically via the mouthparts of the insect vectors during feeding (stylet-borne viruses). Non-persistent virus transmission is typically characterized by an acquisition time (time required by the insect

vector to acquire the virus) of seconds, an inoculation time (time required by the infectious insect vector to inoculate a plant) of seconds, a latent period (minimum time between acquisition of a virus and ability to transmit) of zero, and a retention time (time after acquisition that an insect vector remains capable of transmitting the virus) of minutes to hours. In terms of a primary spread of the virus, i.e. the initial spread of virus into a field by infectious insect vectors from sources outside the filed, the short inoculation time is of particular relevance. On the other hand, the low retention time prevents the spread of the virus over long distances. In terms of the secondary spread of the virus, i.e. the spread of the virus within a field via acquisition of the virus by insect vectors from sources of virus within the field and spread of the virus by these afterwards infectious insect vectors, it is of particular relevance that there is no latent period, so that an insect vector, which has acquired the virus from one plant, can directly transmit it to another plant.

Persistent viruses include circulative viruses, which must systemically move within the insect body to be transmitted, and propagative viruses, which must replicate within the insect body to be transmitted. Persistent virus transmission is typically characterized by an acquisition time of minutes, an inoculation time of minutes, a latent period of 1 or more days, and a long retention time, which often lasts for the life of the insect. As the inoculation time is also rather short in case of persistent virus transmission, primary spread is an important problem. As the retention time is long, non-infected fields may also be infected due to insect migration of insects from virus-infected fields, which are far away. However, as the latent period is rather long, secondary spread of the virus is delayed because the insect vector cannot directly transmit the virus after acquisition.

For non-persistently transmitted viruses, insecticides often act too slowly to effectively reduce both, primary and secondary spread of the virus. In case of persistently transmitted viruses, insecticides often act too slowly to effectively reduce primary spread of the virus. For the reduction of secondary spread, it is required that the insecticide effectively kills all insect vectors. Accordingly, there remains a need for effective fast-killing insecticides.

In this connection, it is also important to note that, as aphids for example move through a crop and briefly probe, by the time an aphid receives a lethal dose of the insecticide, it will often be long gone and the damage already done. Thus, there is also a need for insecticides, which not only kill the insect vectors, but also reduce their ability to transmit the virus in advance. Furthermore, there is a need for insect vectors, which reduce the ability of insect vectors to transmit the virus, if the insect control is not sufficiently effective.

Furthermore, it has been observed that some insecticides agitate the insects and encourage greater movement and feeding, resulting in increased rates of virus spread. Therefore, there is also a need for insecticides, which inhibit movement and/or feeding of the insect vectors before killing them. Moreover, it has been found that insect vectors become resistant to conventional insecticides such as carbamates, organophosphates, pyrethroids, neonicotinoids and feeding blockers, so that they can no longer be effectively controlled by these insecticides. Accordingly, there is also a need for insecticides, which overcome insect resistance problems in connection with the relevant insect vectors. It is further generally desired to reduce dosage rates of insecticides, and therefore also in connection with combating insect vectors. Accordingly, there is also a need for insecticides, which can be applied in lower doses than conventional insecticides.

It is therefore the object of the present invention to provide an insecticide or insecticidal mixtures which satisfy any of the above needs. Surprisingly, it has now been found that the compound of formula I or the compound of formula I with enantiomeric excess of compound I-R-1 or the compound I-R-1 are suitable for reducing virus transmission from insect vectors to plants. The pesticidally active compound of formula I or the compound of formula I with enantiomeric excess of compound I-R-1 or the compound I-R-1 are described in further detail hereinbefore. In particular, it has been shown that primary and secondary spread of viruses can effectively be reduced. On the one hand, it has been found that virus-infected vectors that land on an insecticide-treated plant will exhibit a reduced ability of the virus to transmit the virus. On the other hand, it has been found that non-infected insect vectors, which land on an insecticide-treated plant, will have a reduced ability to transmit the virus to adjacent healthy plants.

The compound of formula I or the compound of formula I with enantiomeric excess of compound I-R-1 or the compound I-R-1 as defined hereinabove have not yet been described for solving discussed problems as mentioned above.

Therefore, in one aspect, the present invention relates to the use of at least one pesticidally active compound of formula I or the compound of formula I with enantiomeric excess of compound I-R-1 or the compound I-R-1, for reducing virus transmission from insect vectors to plants.

In another aspect, the present invention relates to a method for reducing virus transmission from insect vectors to plants, which method comprises applying at least one pesticidally active compound of formula I or the compound of formula I with enantiomeric excess of compound I-R-1 or the compound I-R-1 as defined above or a stereoisomer, tautomer, salt or N-oxide thereof, to the crops, plants, plant propagation materials, such as seeds, or soil or water, in which the plants are growing.

In one embodiment, the present invention relates to the use or method for reducing virus transmission from insect vectors to plants, which use or method comprises applying a compound of formula I or the compound of formula I with enantiomeric excess of compound I-R-1 or the compound I-R-1 itself or a stereoisomer, salt, tautomer or N-oxide thereof, especially a salt thereof.

In another embodiment, the invention relates to the use or method for reducing virus transmission from insect vectors to plants, which use or method comprises applying a compound of formula I or the compound of formula I with enantiomeric excess of compound I-R-1 or the compound I-R-1 itself or a stereoisomer, salt, tautomer or N-oxide thereof, especially a salt thereof. As already indicated above, the compound of formula I or the compound of formula I with enantiomeric excess of compound I-R-1 or the compound I-R-1 are suitable for reducing virus transmission from insect vectors to plants.

As used herein, the term "virus transmission from insect vectors to plants" refers to the introduction of a virus into a plant to cause an infection. As already indicated above, virus transmission is typically characterized by the acquisition time, i.e. the time required by the insect vector to acquire the virus, the inoculation time, i.e. the time required by infectious insect vectors to infect the plant, the latent period, i.e. the minimum time between acquisition of a virus and ability of the insect vector to transmit the virus, and the retention time, i.e. the time after acquisition that an insect vector remains capable of transmitting the virus. As a consequence of reducing virus transmission from insect vectors to plants, insect-vectored viral infections of plants in a field can be reduced. In particular, primary spread of the virus, i.e. the initial spread of virus into a field by infectious insect vectors from sources outside the filed, and/or secondary spread of the virus, i.e. the spread of the virus within a field via acquisition of the virus by insect vectors from sources of virus within the field and spread of the virus by these afterwards infectious insect vectors, may be reduced.

As used herein, the term "virus-infected" or "viral infection" in connection with plants means that the plant has been infected with a virus. As outlined above, viral infection is typically caused by inoculation by an infectious insect vector. Generally speaking, virus transmission from insect vectors to plants typically causes viral infections.

As used herein, the term "infectious insect vector" refers to an insect vector, which has acquired a virus and is capable of transmitting the virus, which means that the latent period is already over, but the retention time is not yet over. "Infectious insect vectors" may also be described as "viruliferous insect vectors".

As used herein, the term "non-infected" in connection with plants means that the plant is healthy, i.e. not virus-infected. "Non-infected plants" may also be referred to as "virus-free plants". The compound of formula I or the compound of formula I with enantiomeric excess of compound I-R-1 or the compound I-R-1 are preferably used in fields comprising exclusively non-infected plants focusing on the reduction of primary spread of viruses or in fields comprising virus-infected and non-infected plants focussing on the reduction of secondary spread of the virus.

As used herein, the term "non-infectious" in connection with an insect vector means that the insect vector is not capable of transmitting a virus, preferably that the insect vector has not even acquired a virus.

Preferred embodiments of the use or method according to the invention for reducing virus transmission from insect vectors to plants comprising the application of the compound of formula I or the compound of formula I with enantiomeric excess of compound I-R-1 or the compound I-R-1 are described hereinabove or hereinafter. The remarks made as to the preferred embodiments of the use or method of the invention are to be understood as preferred on their own as well as preferably in combination with each other.

In one preferred embodiment of the use or method of the invention, the compound of formula I or the compound of formula I with enantiomeric excess of compound I-R-1 or the compound I-R-1 is applied to fields of non-infected plants, i.e. fields which exclusively comprise non-infected plants, but do not contain any virus-infected plants. As a consequence, primary spread of the virus can be reduced or even prevented.

In another preferred embodiment of the use or method of the invention, the compound of formula I or the compound of formula I with enantiomeric excess of compound I-R-1 or the compound I-R-1 is applied to fields comprising virus-infected and non-infected plants. This is particularly suitable to reduce secondary spread of the virus within the field.

In a preferred embodiment of the use or method of the invention, the compound of formula I or the compound of formula I with enantiomeric excess of compound I-R-1 or the compound I-R-1 is applied in combination with an adjuvant. Suitable adjuvants include surfactants, oils, acidifiers and buffers, and fertilizer adjuvants. Preferably, the compound of formula I or the compound of formula I with enantiomeric excess of compound I-R-1 or the compound I-R-1 is applied in combination with an oil adjuvant or a surfactant. The combination of the compound of formula I or the compound of formula I with enantiomeric excess of compound I-R-1 or the compound I-R-1 with adjuvants has been described in WO 20120350015, which is hereby incorporated by reference.

Preferred adjuvants comprise nonionic surfactants, in particular non-ionic surfactants, which carry at least one poly-C2-C4-alkyleneoxide moiety, preferably selected from polyethoxylated sorbitan fatty acid esters, poly(ethyleneoxide-co-propylenoxide) copolymers and poly-C2-C4-alkyleneoxide modified polydimethylsiloxanes.

Preferred oil adjuvants include petroleum based oils and vegetable oils, which are typically used in combination with an emulsifier. An exemplary oil adjuvant is E-11 oil, which is an emulsifiable concentrate formulation containing 99 % highly refined paraffinic oil.

Preferred surfactants include wetting agents, preferably non-ionic wetting agents. Such wetting agents may include, e.g., alcohol ethoxylates, propylene glycol, dimethylpolysiloxane, alkoxylated alcohols-phosphate esters, fatty acid ester, and combinations thereof. An exemplary wetting agent, which may be used as a wetting agent is Dash®, which is available from the BASF.

In another preferred embodiment of the use or method of the invention, the compound of formula I or the compound of formula I with enantiomeric excess of compound I-R-1 or the compound I-R-1 is applied to the foliage of the plants, preferably in an amount of from 1 g to 100 g per hectare, more preferably in an amount of from 10 g to 50 g per hectare, e.g. from 10 g to 20 g or from 20 g to 30 g or from 30 g to 40 g or from 40 g to 50 g per hectare.

In another preferred embodiment of the use or method of the invention, the compound of formula I or the compound of formula I with enantiomeric excess of compound I-R-1 or the compound I-R-1 is applied to the seeds of the plant, preferably in an amount of from 1 g to 200 g per 100 kg seed, preferably from 5 g to 100 kg per 100 kg of seed, e.g. from 10 to 30 g or from 40 to 60 g or from 70 to 90 g per 100 kg of seed.

In another preferred embodiment, the insect vector is selected from the group consisting of aphids, whiteflies, leaf hoppers, thrips, beetles, weevils, nematodes, and mites, and is preferably selected from the group consisting of aphids, whiteflies, leaf hoppers, and thrips, and is particularly preferably selected from the group consisting of aphids and whiteflies.

In particular, viruses may be spread by insects which are one or more of as an example *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopteruspruni, Lipaphis erysimi, Macrosiphum a venae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum maidis Fitch, Rhopalosiphum padi L, Schizaphis graminum Rond., Sitobion a venae, Toxoptera aurantii, Toxoptera citricola, Phylloxera vitifoliae, Bemisia tabaci, Myzus persicae, Nilaparvata lugens, Aphis gossypii, Trialeurodes vaporariorum, Bactericera cockerelli.*

Plants exhibiting aphid damage can have a variety of symptoms, such as decreased growth rates, mottled leaves, yellowing, stunted growth, curled leaves, browning, wilting, low yields and death. The removal of sap creates a lack of vigour in the plant, and aphid saliva is toxic to plants. Furthermore, as already indicated above, aphids, frequently transmit disease-causing organisms like plant viruses to their hosts. The green peach aphid (*Myzus persicae*) is a vector for more than 110 plant viruses. Cotton aphids (*Aphis gossypii*) often infect sugarcane, papaya and groundnuts with viruses. Aphids contributed to the spread of late blight (*Phytophthora infestans*) among potatoes in the Great Irish Potato Famine of the 1840s. The cherry aphid or black cherry aphid, *Myzus cerasi*, is responsible for some leaf curl of cherry trees. This can easily be distinguished from 'leaf curl' caused by *Taphrina* fungus species due to the presence of aphids beneath the leaves. In a particularly preferred embodiment of the invention, the insect vector is thus selected from the group consisting of *Myzus persicae, Myzus persicae, Phytophthora infestans,* and *Myzus cerasi,* most preferably the insect vector is *Myzus persicae.*

Whitefly instar nymphs and adults feed by inserting their proboscises into the leaf, penetrating the phloem and withdrawing sap. It is during this feeding process that plant viruses are acquired. In particular, adult whiteflies may disperse and transmit the virus to new plants while feeding. Whiteflies, which represent virus vectors, mainly include whiteflies in the genera *Bemisia* and *Trialeurodes.* A particularly important virus of the genera *Bemisia* includes *B. tabaci.* Important viruses of the genera *Trialeurodes* include *T. vaporariorum, T. abutilonea,* and *T. ricini.* In another particularly preferred embodiment of the invention, the insect vector is therefore selected from the group consisting of *B. tabaci, T. vaporariorum, T. abutilonea,* and *T. ricini,* most preferably the insect vector is *B. tabaci.*

In another preferred embodiment, the virus is selected from the families *Luteoviridae, Geminiviridae, Nanoviridae, Bunyaviridae, Rhabdoviridae, Reoviridae,* or *Tymoviridae,* and is preferably selected from the *Polerovirus* genus of the *Luteoviridae* family or from the *Begomovirus* genus of the *Geminiviridae* family.

The family *Luteoviridae* includes the genera of *Enamovirus, Luteovirus* and *Polerovirus* (CM Fauquet et al, Virus Taxonomy: Classification and Nomenclature of Viruses Eight Rep. Int Comm Taxon Viruses, San Diego, Elsevier Academic). These three genera have a marginally differentiated genome. For example, *Pea enation mosaic virus* 1 (PEMVI) is part of the genus *Enamovirus.* The PEMV viruses may infect plant cells in various tissues, including epidermal cells.

The family of *Geminiviridae* includes the genera *Mastrevirus, Curtovirus, Begomovirus* and *Topocuvirus* (C. Gutierrez, Geminivirus DNA Replication. Cell. Mol. Life Sci. 56, 313-329, 1999). The genus *Topocuvirus* example includes the *Tomato pseudocurly top virus* (TPCTV), which is transmitted in particular through the treehopper *M. malleifera* (*Hemiptera: Membracidae*) (R. W. Briddon et al, Virology 219, 387-394, 1996). The genus *Mastrevirus* includes the economically very important *Maize streak virus* (MSV), which can be transmitted from nine leaf cicadas species of the genus *Cicadulina* (N. A. Bosque-Perez, Virus Res 71, 107-121, 2000). The persistence of the MSV vector (insect) is very efficient, for example, *C. mbila* species remain infectious after they infect up to 35 days and can thus transmit this virus. The genus *Curtovirus* includes the *Beet curly top virus* (BCTV), which can be transmitted by the beet leaf *cicade Circulifer tenellus* (Baker) to up to 300 plant species. The genus *Begomovirus* includes species of the family *Geminiviridae.* The interaction of the *Begomovirus* of the whitefly vector is very complex. They include the *Tomato yellowleaf curl virus* (TYLCV), *Tomato yellowleafcurl Sardinia virus* (TYLCSV), *Tomato yellowleaf curl China virus* (TYLCCSV), *Tomato mottle virus* (Tomov), *Tobacco curly shoot virus* (TbCSV).

The family *Nanoviridae* includes the genera *Babuvirus* and *Nanovirus* (B. Gronenborn, Nano-viruses: Genome Organization and Protein Function Vet Microbiol. 98, 103-109, 2004.). The *Babuvirus* genus includes the *Banana bunchy top virus* (BBTV), and the *Nanovirus* genus includes the economically very important *Faba bean virus necrotic bean yellow virus* (FBNYV).

All enveloped plant viruses such as *Rhabdoviruses* and *Bunyaviruses* are transmitted in a persistent propagative way.

It is known in the art that with each vector (insect), with each vector population or each vector biotyp, depending on the sex of the vector (insect) or developmental stage (nymphs/adults), differences in virus transmission may occur (L. R. Nault, Arthropod transmission of Plant Viruses: A New Synthesis. Ann. Entomol. Soc. Am. 90, 521-541, 1997).

The genus *Tospovirus* belongs to the family *Bunyaviridae.* This family includes more than 350 virus species, which can be divided into five genera: *Hanta, Nairo, Orthobunya, Phlebo* and *Tosbo* viruses (S.T. Nichol, Bunyaviruses. In: Fields Virology, Ed DM Knipe, PM Howley, pp. 1603 -1633. New York. Lippincott Williams & Wilkins). The latter are very important because they are in particular plant infecting viruses, all other genera preferably infect vertebrates. The genus *Tospovirus* includes the *Tomato spotted will virus* (TSWV).

The *Rhabdoviridae* family includes the viruses that are transmitted on both vertebrates, invertebrates, and plants including pathogens of humans, livestock and crops can (Z. F. Fu, Genetic Comparison of the Rhabdoviruses from Animals and Plaut. In: Current Topics in World of Rhabdoviruses. Current Topics in Microbiology and Immonology. Ed. Z. F. Fu, H. Koprowski, pp. 1-24, Heidelberg / Berlin: Springer Verlag). To the plant infecting viruses belong the two genera *Nucleorhobdovirus* and *Cytorhabdovirus.* To the *Nucleorhobdovirus* genus belongs *Sonchus yellow net virus* (SYNV), *Maize mosaic virus* (MMV), *Taro vein chlorosis virus* (TaVCV), *Rice yellow stunt virus* (RYSV) and *Maize fine streak virus* (MFSV). To the genus *Cytorhabdovirus* belongs, for example, *Northern cereal mosaic virus* (NCMV) and *Lettuce necrotic yellow virus* (LNYV).

Genus *Tenuivirus* comprises in addition to the *Maize stripe virus* (MStV) and *Rice stripe virus* (RSV) also *Maize yellow stripe virus* (MYSV). For example, *Tenui viruses* can be acquired in a very short time (10 minutes to 4 hours) by vectors (insects) from infected plants.

The family *Reoviridae* includes nine genera, of which the genera *Orbireovirus, Coltivirus, Cypovirus* can infect insects as vectors, while the genera *Fijiviruses, Phytoreovirus* and *Oryzavirus* species can also infect plants. The transoviral transmission of Reo viruses in vectors (insects) was shown for the *Fiji disease virus* (FDV), *Oat sterile dwarf virus* (OSDV), *Maize rough dwarf virus* (MRDV), *Nilaparvata lugens virus* (NLV), *Rice dwarf virus* (RDV), *Wound tumor virus* (WTV) and *Rice gall dwarf virus* (RGDV). To the genus Fuji virus belongs also the *Rice black streaked dwarf virus* (RBSDV) and the *Male de Rio Cuarto virus* (MRCV).

Finally, the family of the genus *Tymoviridae* comprises the genus *Marafi virus,* which includes, for example, the *Maize ryadofino virus* (MRFV) (based on the structure of the genome, See G. P. Martelli et al, The Family Tymoviridae. Arch. Virol. 147, 1837-1846, 2002).

For certain viruses, certain insect vectors can be preferred.

For example, if the insect vector is an aphid, the virus may preferably be selected from the *Luteoviridae* family, in particular from the *Polerovirus* genus. A preferred *Polerovirus* is *Turnip yellow virus or Barley Yellow Dwarf Virus.*

For example, if the insect vector is a whitefly, the virus may preferably be selected from the *Geminiviridae* family, in particular from the *Begomovirus* genus. A preferred *Begomovirus* is *Tomato yellow leaf curl virus.*

In a preferred embodiment of the invention, the plants are selected from the group consisting of cereals, beets, fruits, leguminous plants, oil plants, cucurbits, fiber plants, citrus fruits, vegetables, lauraceous plants, energy and raw material plants, tobacco, nuts, pistachios, coffee, tea, bananas, barely, vines, hop, sweet leaf, natural rubber plants or ornamental and forestry plants, eucalyptus, turf, lawn, and grass such as grass for animal feed or ornamental uses.

In a particularly preferred embodiment of the invention, the plants are selected from the group consisting of cereals, sugar beet, oilseed rape, potatoes, tomatoes, peppers, beans, flowers, in particular from tomatoes and physalis plants.

Viruses and plants of particular relevance in the context of the present invention are further defined hereinafter.

In one embodiment, the invention relates to the use or method for reducing insect-vectored viral infection in a plant, which method or use comprises applying a compound of formula I or the compound of formula I with enantiomeric excess of compound I-R-1 or the compound I-R-1, wherein the virus is a *Sobemovirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the virus is a *Caulimovirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the virus is a *Closterovirus.*

In one embodiment, the invention relates to the use or method for reducing virus transmission to plants, which method or use comprises applying a compound of formula I or the compound of formula I with enantiomeric excess of

compound I-R-1 or the compound I-R-1, wherein the virus is a *Sequivirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the virus is a *Enamovirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the virus is a *Luteovirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the virus is a *Polerovirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the virus is a *Umbravirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the virus is a *Nanovirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the virus is a *Cytorhabdovirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the virus is a *Nucleorhabdovirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the virus is a *Begomovirus.*

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is soybean.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is rice.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is cotton.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is oilseed rape.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is peanut.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is cereal.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is wheat.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is barley.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is corn.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is a specialty crop.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is fruiting vegetable.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is leafy vegetable.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is tomato.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is pepper.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is eggplant.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is cabbage.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is lettuce.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is potato.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is onion.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is tobacco.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is sugar beet.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is bean.

In one embodiment, the invention relates to the use or method for reducing virus transmission to plants, which method or use comprises applying a compound of formula I or the compound of formula I with enantiomeric excess of compound I-R-1 or the compound I-R-1, wherein the plant is physalis.

In preferred embodiment, the invention relates to the use or method for reducing Barley Yellow Dwarf virus transmission to barely plants, which method or use comprises applying a compound of formula I or the compound of formula I with enantiomeric excess of compound I-R-1 or the compound I-R-1 to the barely plant or its plant propagation material.

In one embodiment, the invention relates to the use or method as described above for reducing virus transmission to plants, which method or use comprises applying a compound of formula I or the compound of formula I with enantiomeric excess of compound I-R-1 or the compound I-R-1.

In one embodiment of the invention the insect vector is an aphid, and the virus is selected from the *Luteoviridae* family, in particular from the *Polerovirus* genus;

In one embodiment of the invention the insect vector is a whitefly, and the virus is selected from the *Geminiviridae* family, in particular from the *Begomovirus* genus.

Individual embodiments of the present invention are such methods or uses for reducing virus transmission from insect vectors to plants, wherein the virus and the plant/crop is as defined in entries VC-1 to VC-282 of Table VC, which method or use comprises applying compound of formula I.

Preferably the compound of formula I is to be applied.

Table VC

| | Virus | Crop |
|---|---|---|
| VC-1 | Sobemovirus | soybean |
| VC-2 | Sobemovirus | rice |
| VC-3 | Sobemovirus | cotton |
| VC-4 | Sobemovirus | oilseed rape |
| VC-5 | Sobemovirus | peanut |
| VC-6 | Sobemovirus | cereal |
| VC-7 | Sobemovirus | wheat |
| VC-8 | Sobemovirus | barley |
| VC-9 | Sobemovirus | corn |
| VC-10 | Sobemovirus | specialty crops |
| VC-11 | Sobemovirus | fruiting vege-table |
| VC-12 | Sobemovirus | leafy vegeta-ble |
| VC-13 | Sobemovirus | tomato |
| VC-14 | Sobemovirus | pepper |

| | Virus | Crop |
|---|---|---|
| VC-15 | Sobemovirus | eggplant |
| VC-16 | Sobemovirus | cabbage |
| VC-17 | Sobemovirus | lettuce |
| VC-18 | Sobemovirus | potatoes |
| VC-19 | Sobemovirus | onions |
| VC-20 | Sobemovirus | tobacco |
| VC-21 | Sobemovirus | beet |
| VC-22 | Sobemovirus | bean |
| VC-23 | Sobemovirus | physalis |
| VC-24 | Caulimovirus | soybean |
| VC-25 | Caulimovirus | rice |
| VC-26 | Caulimovirus | cotton |
| VC-27 | Caulimovirus | oilseed rape |
| VC-28 | Caulimovirus | peanut |
| VC-29 | Caulimovirus | cereal |
| VC-30 | Caulimovirus | wheat |
| VC-31 | Caulimovirus | barley |

| | Virus | Crop |
|---|---|---|
| VC-32 | Caulimovirus | corn |
| VC-33 | Caulimovirus | specialty crops |
| VC-34 | Caulimovirus | fruiting vegetable |
| VC-35 | Caulimovirus | leafy vegetable |
| VC-36 | Caulimovirus | tomato |
| VC-37 | Caulimovirus | pepper |
| VC-38 | Caulimovirus | eggplant |
| VC-39 | Caulimovirus | cabbage |
| VC-40 | Caulimovirus | lettuce |
| VC-41 | Caulimovirus | potatoes |
| VC-42 | Caulimovirus | onions |
| VC-43 | Caulimovirus | tobacco |
| VC-44 | Closterovirus | soybean |
| VC-45 | Closterovirus | rice |
| VC-46 | Closterovirus | cotton |
| VC-47 | Closterovirus | oilseed rape |
| VC-48 | Closterovirus | peanut |
| VC-49 | Closterovirus | cereal |
| VC-50 | Closterovirus | wheat |
| VC-51 | Closterovirus | barley |
| VC-52 | Closterovirus | corn |
| VC-53 | Closterovirus | specialty crops |
| VC-54 | Closterovirus | fruiting vegetable |
| VC-55 | Closterovirus | leafy vegetable |
| VC-56 | Closterovirus | tomato |
| VC-57 | Closterovirus | pepper |
| VC-58 | Closterovirus | eggplant |
| VC-59 | Closterovirus | cabbage |
| VC-60 | Closterovirus | lettuce |
| VC-61 | Closterovirus | potatoes |
| VC-62 | Closterovirus | onions |
| VC-63 | Closterovirus | tobacco |
| VC-64 | Closterovirus | beet |
| VC-65 | Closterovirus | bean |
| VC-66 | Closterovirus | physalis |
| VC-67 | Sequivirus | soybean |

| | Virus | Crop |
|---|---|---|
| VC-68 | Sequivirus | rice |
| VC-69 | Sequivirus | cotton |
| VC-70 | Sequivirus | oilseed rape |
| VC-71 | Sequivirus | peanut |
| VC-72 | Sequivirus | cereal |
| VC-73 | Sequivirus | wheat |
| VC-74 | Sequivirus | barley |
| VC-75 | Sequivirus | corn |
| VC-76 | Sequivirus | specialty crops |
| VC-77 | Sequivirus | fruiting vegetable |
| VC-78 | Sequivirus | leafy vegetable |
| VC-79 | Sequivirus | tomato |
| VC-80 | Sequivirus | pepper |
| VC-81 | Sequivirus | eggplant |
| VC-82 | Sequivirus | cabbage |
| VC-83 | Sequivirus | lettuce |
| VC-84 | Sequivirus | potatoes |
| VC-85 | Sequivirus | onions |
| VC-86 | Sequivirus | tobacco |
| VC-87 | Sequivirus | beet |
| VC-88 | Sequivirus | bean |
| VC-89 | Sequivirus | physalis |
| VC-90 | Enamovirus | soybean |
| VC-91 | Enamovirus | rice |
| VC-92 | Enamovirus | cotton |
| VC-93 | Enamovirus | oilseed rape |
| VC-94 | Enamovirus | peanut |
| VC-95 | Enamovirus | cereal |
| VC-96 | Enamovirus | wheat |
| VC-97 | Enamovirus | barley |
| VC-98 | Enamovirus | corn |
| VC-99 | Enamovirus | specialty crops |
| VC-100 | Enamovirus | fruiting vegetable |
| VC-101 | Enamovirus | leafy vegetable |
| VC-102 | Enamovirus | tomato |
| VC-103 | Enamovirus | pepper |

| | Virus | Crop |
|---|---|---|
| VC-104 | Enamovirus | eggplant |
| VC-105 | Enamovirus | cabbage |
| VC-106 | Enamovirus | lettuce |
| VC-107 | Enamovirus | potatoes |
| VC-108 | Enamovirus | onions |
| VC-109 | Enamovirus | tobacco |
| VC-110 | Enamovirus | beet |
| VC-111 | Enamovirus | bean |
| VC-112 | Enamovirus | physalis |
| VC-113 | Luteovirus | soybean |
| VC-114 | Luteovirus | rice |
| VC-115 | Luteovirus | cotton |
| VC-116 | Luteovirus | oilseed rape |
| VC-117 | Luteovirus | peanut |
| VC-118 | Luteovirus | cereal |
| VC-119 | Luteovirus | wheat |
| VC-120 | Luteovirus | barley |
| VC-121 | Luteovirus | corn |
| VC-122 | Luteovirus | specialty crops |
| VC-123 | Luteovirus | fruiting vege-table |
| VC-124 | Luteovirus | leafy vegeta-ble |
| VC-125 | Luteovirus | tomato |
| VC-126 | Luteovirus | pepper |
| VC-127 | Luteovirus | eggplant |
| VC-128 | Luteovirus | cabbage |
| VC-129 | Luteovirus | lettuce |
| VC-130 | Luteovirus | potatoes |
| VC-131 | Luteovirus | onions |
| VC-132 | Luteovirus | tobacco |
| VC-133 | Luteovirus | beet |
| VC-134 | Luteovirus | bean |
| VC-135 | Luteovirus | physalis |
| VC-136 | Polerovirus | soybean |
| VC-137 | Polerovirus | rice |
| VC-138 | Polerovirus | cotton |
| VC-139 | Polerovirus | oilseed rape |
| VC-140 | Polerovirus | peanut |
| VC-141 | Polerovirus | cereal |
| VC-142 | Polerovirus | wheat |

| | Virus | Crop |
|---|---|---|
| VC-143 | Polerovirus | barley |
| VC-144 | Polerovirus | corn |
| VC-145 | Polerovirus | specialty crops |
| VC-146 | Polerovirus | fruiting vege-table |
| VC-147 | Polerovirus | leafy vegeta-ble |
| VC-148 | Polerovirus | tomato |
| VC-149 | Polerovirus | pepper |
| VC-150 | Polerovirus | eggplant |
| VC-151 | Polerovirus | cabbage |
| VC-152 | Polerovirus | lettuce |
| VC-153 | Polerovirus | potatoes |
| VC-154 | Polerovirus | onions |
| VC-155 | Polerovirus | tobacco |
| VC-156 | Polerovirus | beet |
| VC-157 | Polerovirus | bean |
| VC-158 | Polerovirus | physalis |
| VC-159 | Umbravirus | soybean |
| VC-160 | Umbravirus | rice |
| VC-161 | Umbravirus | cotton |
| VC-162 | Umbravirus | oilseed rape |
| VC-163 | Umbravirus | peanut |
| VC-164 | Umbravirus | cereal |
| VC-165 | Umbravirus | wheat |
| VC-166 | Umbravirus | barley |
| VC-167 | Umbravirus | corn |
| VC-168 | Umbravirus | specialty crops |
| VC-169 | Umbravirus | fruiting vege-table |
| VC-170 | Umbravirus | leafy vegeta-ble |
| VC-171 | Umbravirus | tomato |
| VC-172 | Umbravirus | pepper |
| VC-173 | Umbravirus | eggplant |
| VC-174 | Umbravirus | cabbage |
| VC-175 | Umbravirus | lettuce |
| VC-176 | Umbravirus | potatoes |
| VC-177 | Umbravirus | onions |
| VC-178 | Umbravirus | tobacco |

| | Virus | Crop |
|---|---|---|
| VC-179 | Umbravirus | beet |
| VC-180 | Umbravirus | bean |
| VC-181 | Umbravirus | physalis |
| VC-182 | Nanovirus | soybean |
| VC-183 | Nanovirus | rice |
| VC-184 | Nanovirus | cotton |
| VC-185 | Nanovirus | oilseed rape |
| VC-186 | Nanovirus | peanut |
| VC-187 | Nanovirus | cereal |
| VC-188 | Nanovirus | wheat |
| VC-189 | Nanovirus | barley |
| VC-190 | Nanovirus | corn |
| VC-191 | Nanovirus | specialty crops |
| VC-192 | Nanovirus | fruiting vegetable |
| VC-193 | Nanovirus | leafy vegetable |
| VC-194 | Nanovirus | tomato |
| VC-195 | Nanovirus | pepper |
| VC-196 | Nanovirus | eggplant |
| VC-197 | Nanovirus | cabbage |
| VC-198 | Nanovirus | lettuce |
| VC-199 | Nanovirus | potatoes |
| VC-200 | Nanovirus | onions |
| VC-201 | Nanovirus | tobacco |
| VC-202 | Nanovirus | beet |
| VC-203 | Nanovirus | bean |
| VC-204 | Nanovirus | physalis |
| VC-205 | Cytorhabdovirus | soybean |
| VC-206 | Cytorhabdovirus | rice |
| VC-207 | Cytorhabdovirus | cotton |
| VC-208 | Cytorhabdovirus | oilseed rape |
| VC-209 | Cytorhabdovirus | peanut |
| VC-210 | Cytorhabdovirus | cereal |
| VC-211 | Cytorhabdovirus | wheat |
| VC-212 | Cytorhabdovirus | barley |
| VC-213 | Cytorhabdovirus | corn |
| VC-214 | Cytorhabdovirus | specialty crops |
| VC-215 | Cytorhabdovirus | fruiting vegetable |

| | Virus | Crop |
|---|---|---|
| VC-216 | Cytorhabdovirus | leafy vegetable |
| VC-217 | Cytorhabdovirus | tomato |
| VC-218 | Cytorhabdovirus | pepper |
| VC-219 | Cytorhabdovirus | eggplant |
| VC-220 | Cytorhabdovirus | cabbage |
| VC-221 | Cytorhabdovirus | lettuce |
| VC-222 | Cytorhabdovirus | potatoes |
| VC-223 | Cytorhabdovirus | onions |
| VC-224 | Cytorhabdovirus | tobacco |
| VC-225 | Cytorhabdovirus | beet |
| VC-226 | Cytorhabdovirus | bean |
| VC-227 | Cytorhabdovirus | physalis |
| VC-228 | Nucleorhabdovirus | soybean |
| VC-229 | Nucleorhabdovirus | rice |
| VC-230 | Nucleorhabdovirus | cotton |
| VC-231 | Nucleorhabdovirus | oilseed rape |
| VC-232 | Nucleorhabdovirus | peanut |
| VC-233 | Nucleorhabdovirus | cereal |
| VC-234 | Nucleorhabdovirus | wheat |
| VC-235 | Nucleorhabdovirus | barley |
| VC-236 | Nucleorhabdovirus | corn |
| VC-237 | Nucleorhabdovirus | specialty crops |
| VC-238 | Nucleorhabdovirus | fruiting vegetable |
| VC-239 | Nucleorhabdovirus | leafy vegetable |
| VC-240 | Nucleorhabdovirus | tomato |
| VC-241 | Nucleorhabdovirus | pepper |

| | Virus | Crop |
|---|---|---|
| VC-242 | Nucleo-rhabdovirus | eggplant |
| VC-243 | Nucleo-rhabdovirus | cabbage |
| VC-244 | Nucleo-rhabdovirus | lettuce |
| VC-245 | Nucleo-rhabdovirus | potatoes |
| VC-246 | Nucleo-rhabdovirus | onions |
| VC-247 | Nucleo-rhabdovirus | tobacco |
| VC-248 | Nucleorhabdovirus | beet |
| VC-249 | Nucleorhabdovirus | bean |
| VC-250 | Nucleorhabdovirus | physalis |
| VC-251 | Begomovirus | soybean |
| VC-252 | Begomovirus | rice |
| VC-253 | Begomovirus | cotton |
| VC-254 | Begomovirus | oilseed rape |
| VC-255 | Begomovirus | peanut |
| VC-256 | Begomovirus | cereal |
| VC-257 | Begomovirus | wheat |
| VC-258 | Begomovirus | barley |
| VC-259 | Begomovirus | corn |
| VC-260 | Begomovirus | specialty crops |
| VC-261 | Begomovirus | fruiting vegetable |
| VC-262 | Begomovirus | leafy vegetable |
| VC-263 | Begomovirus | tomato |
| VC-264 | Begomovirus | pepper |
| VC-265 | Begomovirus | eggplant |
| VC-266 | Begomovirus | cabbage |
| VC-267 | Begomovirus | lettuce |
| VC-268 | Begomovirus | potatoes |
| VC-269 | Begomovirus | onions |
| VC-270 | Begomovirus | tobacco |
| VC-271 | Begomovirus | beet |

| | Virus | Crop |
|---|---|---|
| VC-272 | Begomovirus | bean |
| VC-273 | Begomovirus | physalis |
| VC-274 | barley yellow dwarf virus | Barley |
| VC-275 | Turnip yellow virus | oilseed rape |
| VC-276 | Turnip yellow virus | sugar beet |
| VC-277 | Turnip yellow virus | potatos |
| VC-278 | Turnip yellow virus | cereals |
| VC-279 | Turnip yellow virus | physalis |
| VC-280 | tomato yellow leaf curl virus | Tomato |
| VC-281 | tomato yellow leaf curl virus | Tomato – foliar use |
| VC-282 | tomato yellow leaf curl virus | Tomato – seed treatment |

Also analogues to VC-1 to VC-282 of table VC, preferred are the combinations VC-283 to VC-564, wherein the compound of formula I is replaced with the compound I-R-1;
These viruses are preferably spread by insects as defined above, e.g. by one or more of *Acyrthosiphum pisum, Aphis citricola, Aphis craccivora, Aphis fabae, Aphis frangulae, Aphis glycines, Aphis gossypii, Aphis nasturtii, Aphis pomi, Aphis spiraecola, Aulacorthum solani, Brachycaudus helichrysi, Brevicoryne brassicae, Diuraphis noxia, Dysaphis devecta, Dysaphis plantaginea, Eriosoma lanigerum, Hyalopterus pruni, Upaphis erysimi, Macrosiphum avenae, Macrosiphum euphorbiae, Macrosiphum rosae, Myzus cerasi F., Myzus nicotianae, Myzus persicae, Nasonovia ribisnigri, Pemphigus bursarius, Phorodon humuli, Rhopalosiphum insertum Wa, Rhopalosiphum maidis Fitch, Rhopalosiphum padi L, Schizaphis graminum Rond., Sitobion a venae, Toxoptera aurantii, Toxoptera citricola, Phylloxera vitifoliae, Bemisia tabaci, Myzus persicae, Nilaparvata lugens, Aphis gossypii, Trialeurodes vaporariorum,* and *Bactericera cockerelli.* In particular, the viruses are preferably spread by whiteflies or aphids as defined above, e.g. *Mycus persicae* or *Bemisia tabaci.*

As outlined above, insect resistance is an important problem in connection with the reduction of virus transmission from insect vectors to plants.

In a preferred embodiment, the present invention therefore relates to the use or method for reducing virus transmission from insect vectors to plants, which method or use comprises applying a compound of formula I or the compound of formula I with enantiomeric excess of compound I-R-1 or the compound I-R-1, wherein the insect vector is resistant to insecticides selected from the classes of carbamates, organophosphates, pyrethroids, neonicotinoids and feeding blockers. In one embodiment, the insect vector is resistant to feeding blockers. In a preferred embodiment, the insect vector is resistant to pymetrozine. In one embodiment, the insect vector is resistant to a neonicotinoid.

Accordingly, the compound of formula I or the compound of formula I with enantiomeric excess of compound I-R-1 or the compound I-R-1 may be also used in a resistance management strategy with a view to controlling resistance to the neonicotinoid class of insecticides. Such a strategy may involve alternating applications of a compound of formula I or the compound of formula I with enantiomeric excess of compound I-R-1 or the compound I-R-1, preferably the compound I-R-1, and a neonicotinoid insecticide, either on an application by application alternation (including different types of application, such as treatment of plant propagation material and foliar spray), or seasonal/crop alternation basis (e.g. use compound of formula I or the compound of formula I with enantiomeric excess of compound I-R-1 or the compound I-R-1 on a first crop/for control in a first growing season, and use a neonicotinoid insecticide for a subsequent crop/growing season, or vice versa), and this forms yet a further aspect of the invention.

Methods and uses of the invention as described herein may also involve a step of assessing whether insects are resistant to neonicotinoid insecticides and/or whether said insects carry a plant virus. This step will in general involve collecting a sample of insects from the area (e.g. crop, field, habitat) to be treated, before actually applying compound of formula I or the compound of formula I with enantiomeric excess of compound I-R-1 or the compound I-R-1, and testing (for example using any suitable phenotypic, biochemical or molecular biological technique applicable) for resistance/sensitivity and/or the presence or absence of a virus.

In another embodiment of the use of method of the invention, the insect vector is resistant to an insecticidal trait of a plant, which has been modified by mutagenesis or genetic engineering. Preferably, the insecticidal trait, to which the insect vector is resistant, is Lepidopteran resistance or Coleopteran resistance.

Furthermore, it has been found that the compound of formula I or the compound of formula I with enantiomeric excess of compound I-R-1 or the compound I-R-1 are especially suitable for the purpose of the invention, if applied in combination with a further pesticidally active compound.

In one embodiment, the present invention therefore relates to the use or method for reducing virus transmission from insect vectors to plants, which method or use comprises applying a compound of formula I or the compound of formula I with enantiomeric excess of compound I-R-1 or the compound I-R-1, wherein the compound of formula I or the compound of formula I with enantiomeric excess of compound I-R-1 or the compound I-R-1 is applied in combination with at least one further pesticidally active compound, which is selected from insecticides or fungicides as defined hereinafter.

The present invention also relates to a mixture of compound of formula I or the compound of formula I with enantiomeric excess of compound I-R-1 or the compound I-R-1, with at least one mixing partner as defined herein after. Preferred are binary mixtures of one compound of the present invention as component I with one mixing partner as defined herein after as component II. Preferred weight ratios for such binary mixtures are from 5000:1 to 1:5000, preferably from 1000:1 to 1:1000, more preferably from 100:1 to 1:100, particularly preferably from 10:1 to 1:10. In such binary mixtures, components I and II may be used in equal amounts, or an excess of component I, or an excess of component II may be used.

Mixing partners can be selected from pesticides, in particular insecticides, nematicides, and acaricides, fungicides, herbicides, plant growth regulators, fertilizers, and the like. Preferred mixing partners are insecticides and fungicides.

The following lists of pesticides/pesticidally active compounds together with which the compounds according

to the invention can be used and with which also potential synergistic effects might be produced, are intended to illustrate the possible combinations, but not to impose any limitation:

M.1 Acetylcholine esterase (AChE) inhibitors: M.1A carbamates, e.g. aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb and triazamate; or M.1B organophosphates, e.g. acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos/ DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxy-aminothio-phosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos- methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, and vamidothion;

M.2. GABA-gated chloride channel antagonists: M.2A cyclodiene organochlorine compounds, e.g. endosulfan or chlordane; or M.2B fiproles (phenylpyrazoles), e.g. ethiprole, fipronil, flufiprole, pyrafluprole, and pyriprole;

M.3 Sodium channel modulators from the class of M.3A pyrethroids, e.g. acrinathrin, allethrin, d-cis-trans allethrin, d-trans allethrin, bifenthrin (in particular kappa-bifenthrin), bioallethrin, bioallethrin S-cylclopentenyl, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, heptafluthrin, imiprothrin, meperfluthrin, metofluthrin, momfluorothrin (in particular epsilon-momfluorothrin), permethrin, phenothrin, prallethrin, profluthrin, pyrethrin (pyrethrum), resmethrin, silafluofen, tefluthrin (in particular kappa-tefluthrin), tetramethylfluthrin, tetramethrin, tralomethrin, and transfluthrin; or M.3B sodium channel modulators such as DDT or methoxychlor;

M.4 Nicotinic acetylcholine receptor agonists (nAChR): M.4A neonicotinoids, e.g. acetamiprid, clothianidin, cycloxaprid, dinotefuran, imidacloprid, nitenpyram, thiacloprid and thiamethoxam; or the compounds M.4A.1 4,5-Dihydro-N-nitro-1-(2-oxiranylmethyl)-1H-imidazol-2-amine,

M.4A.2: (2E-)-1-[(6-Chloropyridin-3-yl)methyl]-N'-nitro-2-pentylidenehydrazinecarboximidamide; or M4.A.3: 1-[(6-Chloropyridin-3-yl)methyl]-7-methyl-8-nitro-5-propoxy-1,2,3,5,6,7-hexahydroimidazo[1,2-a]pyridine; or M.4B nicotine; M.4C sulfoxaflor; M.4D flupyradifurone; M.4E triflumezopyrim;

M.5 Nicotinic acetylcholine receptor allosteric activators: spinosyns, e.g. spinosad or spinetoram;

M.6 Chloride channel activators from the class of avermectins and milbemycins, e.g. abamectin, emamectin benzoate, ivermectin, lepimectin, or milbemectin;

M.7 Juvenile hormone mimics, such as M.7A juvenile hormone analogues hydroprene, kinoprene, and methoprene; or M.7B fenoxycarb, or M.7C pyriproxyfen;

M.8 miscellaneous non-specific (multi-site) inhibitors, e.g. M.8A alkyl halides as methyl bromide and other alkyl halides, M.8B chloropicrin, M.8C sulfuryl fluoride, M.8D borax, or M.8E tartar emetic;

M.9 Chordotonal organ TRPV channel modulators, e.g. M.9B pymetrozine; pyrifluquinazon;

M.10 Mite growth inhibitors, e.g. M.10A clofentezine, hexythiazox, and diflovidazin, or M.10B etoxazole;

M.12 Inhibitors of mitochondrial ATP synthase, e.g. M.12A diafenthiuron, or M.12B organotin miticides such as azocyclotin, cyhexatin, or fenbutatin oxide, M.12C propargite, or M.12D tetradifon;

M.13 Uncouplers of oxidative phosphorylation via disruption of the proton gradient, e.g. chlorfenapyr, DNOC, or sulfluramid;

M.14 Nicotinic acetylcholine receptor (nAChR) channel blockers, e.g. nereistoxin analogues bensultap, cartap hydrochloride, thiocyclam, or thiosultap sodium;

M.15 Inhibitors of the chitin biosynthesis type 0, such as benzoylureas e.g. bistrifluron, chlorfluazuron, diflubenzuron, flucycloxuron, flufenoxuron, hexaflumuron, lufenuron, novaluron, noviflumuron, teflubenzuron, or triflumuron;

M.16 Inhibitors of the chitin biosynthesis type 1, e.g. buprofezin;

M.17 Moulting disruptors, Dipteran, e.g. cyromazine;

M.18 Ecdyson receptor agonists such as diacylhydrazines, e.g. methoxyfenozide, tebufenozide, halofenozide, fufenozide, or chromafenozide;

M.19 Octopamin receptor agonists, e.g. amitraz;

M.20 Mitochondrial complex III electron transport inhibitors, e.g. M.20A hydramethylnon, M.20B acequinocyl, M.20C fluacrypyrim; or M.20D bifenazate;

M.21 Mitochondrial complex I electron transport inhibitors, e.g. M.21A METI acaricides and insecticides such as fenazaquin, fenpyroximate, pyrimidifen, pyridaben, tebufenpyrad or tolfenpyrad, or M.21B rotenone;

M.22 Voltage-dependent sodium channel blockers, e.g. M.22A indoxacarb, M.22B metaflumizone, or M.22B.1: 2-[2-(4-Cyanophenyl)-1-[3-(trifluoromethyl)phenyl]ethylidene]-N-[4-(difluoro-methoxy)phenyl]-hydrazinecarboxamide or M.22B.2: N-(3-Chloro-2-methylphenyl)-2-[(4-chlorophenyl)[4-[methyl(methylsulfonyl)amino]phenyl]methylene]-hydrazinecarboxamide;

M.23 Inhibitors of the of acetyl CoA carboxylase, such as Tetronic and Tetramic acid derivatives, e.g. spirodiclofen, spiromesifen, or spirotetramat; M.23.1 spiropidion

M.24 Mitochondrial complex IV electron transport inhibitors, e.g. M.24A phosphine such as aluminium phosphide, calcium phosphide, phosphine or zinc phosphide, or M.24B cyanide;

M.25 Mitochondrial complex II electron transport inhibitors, such as beta-ketonitrile derivatives, e.g. cyenopyrafen or cyflumetofen;

M.28 Ryanodine receptor-modulators from the class of diamides, e.g. flubendiamide, chlorantraniliprole, cyantraniliprole, tetraniliprole, M.28.1: (R)-3-Chlor-N1-{2-methyl-4-[1,2,2,2-tetrafluoro-1-(trifluoromethyl)ethyl]phenyl}-N2-(1-methyl-2-methylsulfonylethyl)phthalamid, M.28.2: (S)-3-Chloro-N1-{2-methyl-4-[1,2,2,2-tetrafluoro-1-(trifluoromethyl)ethyl]phenyl}-N2-(-methyl-2-methylsulfonylethyl)phthalamid, M.28.3: cyclaniliprole, or M.28.4: methyl-2-[3,5-dibromo-2-({[3-bromo-1-(3-chlorpyridin-2-yl)-1 H-pyrazol-5-yl]carbonyl}amino)benzoyl]-1,2-dimethylhydrazine-carboxylate; or M.28.5a) N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; M.28.5b) N-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; M.28.5c) N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; M.28.5d)N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; M.28.5h) N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide; M.28.5i) N-[2-(5-Amino-1,3,4-thiadiazol-2-yl)-4-chloro-6-methylphenyl]-3-bromo-1-(3-chloro-2-pyridinyl)-1H-pyrazole-5-carboxamide; M.28.5j)3-Chloro-1-(3-chloro-2-pyridinyl)-N-[2,4-dichloro-6-[[(1-cyano-1-methylethyl)amino]carbonyl]phenyl]-1H-pyrazole-5-carboxamide; M.28.5k)3-Bromo-N-[2,4-dichloro-6-(methylcarbamoyl)phenyl]-1-(3,5-dichloro-2-pyridyl)-1H-pyrazole-5-carboxamide; M.28.5l)N-[4-Chloro-2-[[(1,1-dimethylethyl)amino]carbonyl]-6-methylphenyl]-1-(3-chloro-2-pyridinyl)-3-(fluoromethoxy)-1H-pyrazole-5-carboxamide; or

M.28.6: cyhalodiamide; or

M.29: Chordotonal organ Modulators - undefined target site, e.g. flonicamid;

M.UN. insecticidal active compounds of unknown or uncertain mode of action, e.g. afidopyropen, afoxolaner, azadirachtin, amidoflumet, benzoximate, broflanilide, bromopropylate, chinomethionat, cryolite, dicloromezotiaz, dicofol, flufenerim, flometoquin, fluensulfone, fluhexafon, fluopyram, fluralaner, metoxadiazone, piperonyl butoxide, pyflubumide, pyridalyl, tioxazafen, M.UN.3: 11-(4-chloro-2,6-dimethylphenyl)-12-hydroxy-1,4-dioxa-9-azadispiro[4.2.4.2]-tetradec-11-en-10-one,

M.UN.4: 3-(4'-fluoro-2,4-dimethylbiphenyl-3-yl)-4-hydroxy-8-oxa-1-azaspiro[4.5]dec-3-en-2-one,

M.UN.5: 1-[2-fluoro-4-methyl-5-[(2,2,2-trifluoroethyl)sulfinyl]phenyl]-3-(trifluoromethyl)-1H-1,2,4-triazole-5-amine, or actives on basis of *bacillus firmus* (Votivo, I-1582); M.UN.6: flupyrimin;

M.UN.8: fluazaindolizine; M.UN.9.a): 4-[5-(3,5-dichlorophenyl)-5-(trifluoromethyl)-4H-isoxazol-3-yl]-2-methyl-N-(1-oxothietan-3-yl)benzamide; M.UN.9.b): fluxametamide; M.UN.10: 5-[3-[2,6-dichloro-4-(3,3-dichloroallyloxy)phenoxy]propoxy]-1H-pyrazole;

M.UN.11.b) 3-(benzoylmethylamino)-N-[2-bromo-4-[1,2,2,3,3,3-hexafluoro-1-(trifluoromethyl)propyl]-6-(trifluoromethyl)phenyl]-2-fluoro-benzamide; M.UN.11.c) 3-(benzoylmethylamino)-2-fluoro-N-[2-iodo-4-[1,2,2,2-tetrafluoro-1-(trifluoromethyl)ethyl]-6-(trifluoromethyl)phenyl]-benzamide; M.UN.11.d) N-[3-[[[2-iodo-4-[1,2,2,2-tetrafluoro-1-(trifluoromethyl)ethyl]-6-(trifluoromethyl)phenyl]amino]carbonyl]phenyl]-N-methyl-benzamide; M.UN.11.e) N-[3-[[[2-bromo-4-[1,2,2,2-tetrafluoro-1-(trifluoromethyl)ethyl]-6-(trifluoromethyl)phenyl]amino]carbonyl]-2-fluorophenyl]-4-fluoro-N-methyl-benzamide; M.UN.11.f) 4-fluoro-N-[2-fluoro-3-[[[2-iodo-4-[1,2,2,2-tetrafluoro-1-(trifluoromethyl)ethyl]-6-(trifluoromethyl)phenyl]amino]carbonyl]phenyl]-N-methyl-benzamide; M.UN.11.g) 3-fluoro-N-[2-fluoro-3-[[[2-iodo-4-[1,2,2,2-tetrafluoro-1-(trifluoromethyl)-ethyl]-6-(trifluoromethyl)phenyl]amino]carbonyl]phenyl]-N-methyl-benzamide; M.UN.11.h) 2-chloro-N-[3-[[[2-iodo-4-[1,2,2,2-tetrafluoro-1-(trifluoromethyl)ethyl]-6-(trifluoromethyl)phenyl]amino]carbonyl]phenyl]- 3-pyridinecarboxamide; M.UN.11.i) 4-cyano-N-[2-cyano-5-[[2,6-dibromo-4-[1,2,2,3,3,3-hexafluoro-1-(trifluoromethyl)propyl]phenyl]carbamoyl]phenyl]-2-methyl-benzamide;

M.UN.11.j) 4-cyano-3-[(4-cyano-2-methyl-benzoyl)amino]-N-[2,6-dichloro-4-[1,2,2,3,3,3-hexafluoro-1-(trifluoromethyl)propyl]phenyl]-2-fluoro-benzamide; M.UN.11.k) N-[5-[[2-chloro-6-cyano-4-[1,2,2,3,3,3-hexafluoro-1-(trifluoromethyl)propyl]phenyl]carbamoyl]-2-cyano-phenyl]-4-cyano-2-methyl-benzamide; M.UN.11.l)N-[5-[[2-bromo-6-chloro-4-[2,2,2-trifluoro-1-hydroxy-1-(trifluoromethyl)ethyl]phenyl]carbamoyl]-2-cyano-phenyl]-4-cyano-2-methyl-benzamide; M.UN.11.m) N-[5-[[2-bromo-6-chloro-4-[1,2,2,3,3,3-hexafluoro-1-(trifluoromethyl)propyl]phenyl]carbamoyl]-2-cyano-phenyl]-4-cyano-2-methyl-benzamide; M.UN.11.n) 4-cyano-N-[2-cyano-5-[[2,6-dichloro-4-[1,2,2,3,3,3-hexafluoro-1-(trifluoromethyl)propyl]phenyl]carbamoyl]phenyl]-2-methyl-benzamide; M.UN.11.o)4-cyano-N-[2-cyano-5-[[2,6-dichloro-4-[1,2,2,2-tetrafluoro-1-(trifluoromethyl)ethyl]phenyl]carbamoyl]phenyl]-2-methyl-benzamide; M.UN.11.p) N-[5-[[2-bromo-6-chloro-4-[1,2,2,2-tetrafluoro-1-(trifluoromethyl)ethyl]phenyl]carbamoyl]-2-cyano-phenyl]-4-cyano-2-methyl-benzamide; or

M.UN.12.a) 2-(1,3-Dioxan-2-yl)-6-[2-(3-pyridinyl)-5-thiazolyl]-pyridine; M.UN.12.b) 2-[6-[2-(5-Fluoro-3-pyridinyl)-5-thiazolyl]-2-pyridinyl]-pyrimidine; M.UN.12.c) 2-[6-[2-(3-Pyridinyl)-5-thiazolyl]-2-pyridinyl]-pyrimidine; M.UN.12.d) N-Methylsulfonyl-6-[2-(3-pyridyl)thiazol-5-yl]pyridine-2-carboxamide; M.UN.12.e) N-Methylsulfonyl-6-[2-(3-pyridyl)thiazol-5-yl]pyridine-2-carboxamide; M.UN.12.f) N-Ethyl-N-[4-methyl-2-(3-pyridyl)thiazol-5-yl]-3-methylthio-propanamide; M.UN.12.g) N-Methyl-N-[4-methyl-2-(3-pyridyl)thiazol-5-yl]-3-methylthio-propanamide; M.UN.12.h) N,2-Dimethyl-N-[4-methyl-2-(3-pyridyl)thiazol-5-yl]-3-methylthio-propanamide; M.UN.12.i) N-Ethyl-2-methyl-N-[4-methyl-2-(3-pyridyl)thiazol-5-yl]-3-methylthio-propanamide; M.UN.12.j) N-[4-Chloro-2-(3-pyridyl)thiazol-5-yl]-N-ethyl-2-methyl-3-methylthio-propanamide; M.UN.12.k) N-[4-Chloro-2-(3-pyridyl)thiazol-5-yl]-N,2-dimethyl-3-methylthio-propanamide; M.UN.12.l) N-[4-Chloro-2-(3-pyridyl)thiazol-5-yl]-N-methyl-3-methylthio-propanamide; M.UN.12.m) N-[4-Chloro-2-(3-pyridyl)thiazol-5-yl]-N-ethyl-3-methylthio-propanamide;

M.UN.14a) 1-[(6-Chloro-3-pyridinyl)methyl]-1,2,3,5,6,7-hexahydro-5-methoxy-7-methyl-8-nitroimidazo[1,2-a]pyridine; or M.UN.14b) 1-[(6-Chloropyridin-3-yl)methyl]-7-methyl-8-nitro-1,2,3,5,6,7-hexahydroimidazo[1,2-a]pyridin-5-ol;

M.UN.16a) 1-isopropyl-N,5-dimethyl-N-pyridazin-4-yl-pyrazole-4-carboxamide; or M.UN.16b) 1-(1,2-dimethylpropyl)-N-ethyl-5-methyl-N-pyridazin-4-yl-pyrazole-4-carboxamide; M.UN.16c) N,5-dimethyl-N-pyridazin-4-yl-1-(2,2,2-trifluoro-1-methyl-ethyl)pyrazole-4-carboxamide; M.UN.16d) 1-[1-(1-cyanocyclopropyl)ethyl]-N-ethyl-5-methyl-N-pyridazin-4-yl-pyrazole-4-carboxamide; M.UN.16e) N-ethyl-1-(2-fluoro-1-methyl-propyl)-5-methyl-N-pyridazin-4-yl-pyrazole-4-carboxamide; M.UN.16f) 1-(1,2-dimethylpropyl)-N,5-dimethyl-N-pyridazin-4-yl-pyrazole-4-carboxamide; M.UN.16g) 1-[1-(1-cyanocyclopropyl)ethyl]-N,5-dimethyl-N-pyridazin-4-yl-pyrazole-4-carboxamide; M.UN.16h) N-methyl-1-(2-fluoro-1-methyl-propyl]-5-methyl-N-pyridazin-4-yl-pyrazole-4-carboxamide; M.UN.16i) 1-(4,4-difluorocyclohexyl)-N-ethyl-5-methyl-N-pyridazin-4-yl-pyrazole-4-carboxamide; or M.UN.16j) 1-(4,4-difluorocyclohexyl)-N,5-dimethyl-N-pyridazin-4-yl-pyrazole-4-carboxamide,

M.UN.17a) N-(1-methylethyl)-2-(3-pyridinyl)-2H-indazole-4-carboxamide; M.UN.17b) N-cyclopropyl-2-(3-pyridinyl)-2H-indazole-4-carboxamide; M.UN.17c) N-cyclohexyl-2-(3-pyridinyl)-2H-indazole-4-carboxamide; M.UN.17d) 2-(3-pyridinyl)-N-(2,2,2-trifluoroethyl)-2H-indazole-4-carboxamide; M.UN.17e) 2-(3-pyridinyl)-N-[(tetrahydro-2-furanyl)methyl]-2H-indazole-5-carboxamide; M.UN.17f) methyl 2-[[2-(3-pyridinyl)-2H-indazol-5-yl]carbonyl]hydrazinecarboxylate; M.UN.17g) N-[(2,2-difluorocyclopropyl)methyl]-2-(3-pyridinyl)-2H-indazole-5-carboxamide; M.UN.17h) N-(2,2-difluoropropyl)-2-(3-pyridinyl)-2H-indazole-5-carboxamide; M.UN.17i) 2-(3-pyridinyl)-N-(2-pyrimidinylmethyl)-2H-indazole-5-carboxamide; M.UN.17j) N-[(5-methyl-2-pyrazinyl)methyl]-2-(3-pyridinyl)-2H-indazole-5-carboxamide,

M.UN.18a) N-[3-chloro-1-(3-pyridyl)pyrazol-4-yl]-N-ethyl-3-(3,3,3-trifluoropropylsulfanyl)propanamide; M.UN.18b) N-[3-chloro-1-(3-pyridyl)pyrazol-4-yl]-N-ethyl-3-(3,3,3-trifluoropropylsulfinyl)propanamide; M.UN.18c) N-[3-chloro-1-(3-pyridyl)pyrazol-4-yl]-3-[(2,2-difluorocyclopropyl)methylsulfanyl]-N-ethyl-propanamide; M.UN.18d) N-[3-chloro-1-(3-pyridyl)pyrazol-4-yl]-3-[(2,2-difluorocyclopropyl)methylsulfinyl]-N-ethyl-propanamide;

M.UN.19 sarolaner, M.UN.20 lotilaner;

M.UN.21 N-[4-Chloro-3-[[(phenylmethyl)amino]carbonyl]phenyl]-1-methyl-3-(1,1,2,2,2-pentafluoroethyl)-4-(trifluoromethyl)-1H-pyrazole-5-carboxamide; M.UN.22a 2-(3-ethylsulfonyl-2-pyridyl)-3-methyl-6-(trifluoromethyl)imidazo[4,5-b]pyridine, or M.UN.22b 2-[3-ethylsulfonyl-5-(trifluoromethyl)-2-pyridyl]-3-methyl-6-(trifluoromethyl)imidazo[4,5-b]pyridine;

M.UN.23a 4-[5-(3,5-dichlorophenyl)-5-(trifluoromethyl)-4H-isoxazol-3-yl]-N-[(4R)-2-ethyl-3-oxo-isoxazolidin-4-yl]-2-methyl-benzamide, or M.UN.23b 4-[5-(3,5-dichloro-4-fluoro-phenyl)-5-(trifluoromethyl)-4H-isoxazol-3-yl]-N-[(4R)-2-ethyl-3-oxo-isoxazolidin-4-yl]-2-methyl-benzamide;

M.UN.24a) N-[4-chloro-3-(cyclopropylcarbamoyl)phenyl]-2-methyl-5-(1,1,2,2,2-pentafluoroethyl)-4-(trifluoromethyl)pyrazole-3-carboxamide or M.UN.24b) N-[4-chloro-3-[(1-cyanocyclopropyl)carbamoyl]phenyl]-2-methyl-5-(1,1,2,2,2-pentafluoroethyl)-4-(trifluoromethyl)pyrazole-3-carboxamide; M.UN.25 acynonapyr; M.UN.26 benzpyrimoxan; M.UN.27 2-chloro-N-(1-cyanocyclopropyl)-5-[1-[2-methyl-5-(1,1,2,2,2-pentafluoroethyl)-4-(trifluoromethyl)pyrazol-3-yl]pyrazol-4-yl]benzamide; M.UN.28 oxazosulfyl (2-(3-ethylsulfonyl-2-pyridyl)-5-(trifluoromethylsulfonyl)-1,3-benzoxazole); M.UN.29 Tetrachlorantraniliprole; M.UN.30 Tyclopyrazoflor;

A) Respiration inhibitors

- Inhibitors of complex III at Qo site: azoxystrobin (A.1.1), coumethoxystrobin (A.1.2), coumoxystrobin (A.1.3), dimoxystrobin (A.1.4), enestroburin (A.1.5), fenaminstrobin (A.1.6), fenoxystrobin/flufenoxystrobin (A.1.7), fluoxastrobin (A.1.8), kresoxim-methyl (A.1.9), mandestrobin (A.1.10), metominostrobin (A.1.11), orysastrobin (A.1.12), picoxystrobin (A.1.13), pyraclostrobin (A.1.14), pyrametostrobin (A.1.15), pyraoxystrobin

(A.1.16), trifloxystrobin (A.1.17), 2 (2-(3-(2,6-dichlorophenyl)-1-methyl-allylideneaminooxymethyl)-phenyl)-2 methoxyimino-N methyl-acetamide (A.1.18), pyribencarb (A.1.19), triclopyricarb/chlorodincarb (A.1.20), famoxadone (A.1.21), fenamidone (A.1.21), methyl-N-[2-[(1,4-dimethyl-5 phenyl-pyrazol-3-yl)oxylmethyl]phenyl]-N-methoxy-carbamate (A.1.22), 1-[3-chloro-2 [[1(4-chlorophenyl)-1H-pyrazol-3-yl]oxymethyl]phenyl]-4-methyl-tetrazol-5-one (A.1.23), 1-[3-bromo-2-[[1-(4-chlorophenyl)pyrazol-3-yl]oxymethyl]phenyl]-4-methyl-tetrazol-5-one (A.1.24), 1-[2-[[1-(4-chlorophenyl)pyrazol-3-yl]oxymethyl]-3-methyl-phenyl]-4-methyl-tetrazol-5-one (A.1.25), 1-[2-[[1-(4-chlorophenyl)pyrazol-3-yl]oxymethyl]-3-fluoro-phenyl]-4-methyl-tetrazol-5-one (A.1.26), 1-[2-[[1-(2,4-dichlorophenyl)pyrazol-3-yl]oxymethyl]-3-fluoro-phenyl]-4-methyl-tetrazol-5-one (A.1.27), 1-[3-cyclopropyl-2-[[2-methyl-4 (1 methylpyrazol-3-yl)phenoxy]methyl]phenyl]-4 methyl-tetrazol-5-one (A.1.30), 1 [3 (difluoro-methoxy)-2-[[2-methyl-4-(1 methylpyrazol-3 yl)phenoxy]methyl]phenyl]-4 methyl-tetrazol-5-one (A.1.31), 1-methyl-4-[3-methyl-2 [[2 methyl-4-(1-methylpyrazol-3 yl)phenoxy]methyl]phenyl]tetrazol-5-one (A.1.32), (Z,2E)-5-[1-(2,4-dichlorophenyl)pyrazol-3-yl]-oxy-2-methoxyimino-N,3-dimethyl-pent-3-enamide (A.1.34), (Z,2E) 5 [1(4-chlorophenyl)pyrazol-3-yl]oxy-2-methoxyimino-N,3-dimethyl-pent-3-enamide (A.1.35), pyriminostrobin (A.1.36), bifujunzhi (A.1.37), 2-(ortho-((2,5-dimethylphenyl-oxy-methylen)phenyl)-3-methoxy-acrylic acid methylester (A.1.38);

- inhibitors of complex III at Qi site: cyazofamid (A.2.1), amisulbrom (A.2.2), [(6S,7R,8R) 8 benzyl-3-[(3-hydroxy-4-methoxy-pyridine-2-carbonyl)amino]-6-methyl-4,9-dioxo-1,5-dioxonan-7-yl] 2-methylpropanoate (A.2.3), fenpicoxamid (A.2.4);
- inhibitors of complex II: benodanil (A.3.1), benzovindiflupyr (A.3.2), bixafen (A.3.3), boscalid (A.3.4), carboxin (A.3.5), fenfuram (A.3.6), fluopyram (A.3.7), flutolanil (A.3.8), fluxapyroxad (A.3.9), furametpyr (A.3.10), isofetamid (A.3.11), isopyrazam (A.3.12), mepronil (A.3.13), oxycarboxin (A.3.14), penflufen (A.3.15), penthiopyrad (A.3.16), pydiflumetofen (A.3.17), pyraziflumid (A.3.18), sedaxane (A.3.19), tecloftalam (A.3.20), thifluzamide (A.3.21), 3 (difluoromethyl)-1-methyl-N-(1,1,3-trimethylindan-4-yl)pyrazole-4 carboxamide (A.3.22), 3 (trifluoromethyl)-1-methyl-N-(1,1,3-trimethylindan-4-yl)pyrazole-4 carboxamide (A.3.23), 1,3-dimethyl-N-(1,1,3-trimethylindan-4-yl)pyrazole-4-carboxamide (A.3.24), 3-(trifluoromethyl)-1,5 dimethyl-N-(1,1,3-trimethylindan-4-yl)pyrazole-4-carboxamide (A.3.25), 1,3,5-trimethyl-N-(1,1,3-trimethylindan-4-yl)pyrazole-4-carboxamide (A.3.26), 3-(difluoromethyl)-1,5 dimethyl-N-(1,1,3-trimethylindan-4-yl)pyrazole-4-carboxamide (A.3.27), 3-(difluoromethyl)-N (7 fluoro-1,1,3-trimethyl-indan-4-yl)-1-methyl-pyrazole-4-carboxamide (A.3.28), N-[(5-chloro-2-isopropyl-phenyl)methyl]-N-cyclopropyl-5-fluoro-1,3-dimethyl-pyrazole-4-carboxamide (A.3.29), methyl (E)-2-[2-[(5-cyano-2-methyl-phenoxy)methyl]phenyl]-3-methoxy-prop-2 enoate (A.3.30), N-[(5-chloro-2-isopropyl-phenyl)methyl]-N-cyclopropyl-3-(difluoromethyl)-5 fluoro-1-methyl-pyrazole-4-carboxamide (A.3.31), 2-(difluoromethyl)-N-(1,1,3-trimethyl-indan-4-yl)pyridine-3-carboxamide (A.3.32), 2-(difluoromethyl)-N-[(3R)-1,1,3-trimethylindan-4-yl]pyridine-3-carboxamide (A.3.33), 2-(difluoromethyl)-N-(3-ethyl-1,1-dimethyl-indan-4-yl)pyridine-3-carboxamide (A.3.34), 2-(difluoromethyl)-N-[(3R)-3-ethyl-1,1-dimethyl-indan-4-yl]pyridine-3-carboxamide (A.3.35), 2-(difluoromethyl)-N-(1,1-dimethyl-3-propyl-indan-4-yl)pyridine-3-carboxamide (A.3.36), 2-(difluoromethyl)-N-[(3R)-1,1-dimethyl-3-propyl-indan-4-yl]pyridine-3-carboxamide (A.3.37), 2-(difluoromethyl)-N-(3-isobutyl-1,1-dimethyl-indan-4-yl)pyridine-3-carboxamide (A.3.38), 2-(difluoromethyl)-N-[(3R)-3-isobutyl-1,1-dimethyl-indan-4 yl]pyridine-3-carboxamide (A.3.39);
- other respiration inhibitors: diflumetorim (A.4.1); nitrophenyl derivates: binapacryl (A.4.2), dinobuton (A.4.3), dinocap (A.4.4), fluazinam (A.4.5), meptyldinocap (A.4.6), ferimzone (A.4.7); organometal compounds: fentin salts, e. g. fentin-acetate (A.4.8), fentin chloride (A.4.9) or fentin hydroxide (A.4.10); ametoctradin (A.4.11); silthiofam (A.4.12);

B) Sterol biosynthesis inhibitors (SBI fungicides)

- C14 demethylase inhibitors: triazoles: azaconazole (B.1.1), bitertanol (B.1.2), bromu-conazole (B.1.3), cyproconazole (B.1.4), difenoconazole (B.1.5), diniconazole (B.1.6), diniconazole-M (B.1.7), epoxiconazole (B.1.8), fenbuconazole (B.1.9), fluquinconazole (B.1.10), flusilazole (B.1.11), flutriafol (B.1.12), hexaconazole (B.1.13), imibenconazole (B.1.14), ipconazole (B.1.15), metconazole (B.1.17), myclobutanil (B.1.18), oxpoconazole (B.1.19), paclobutrazole (B.1.20), penconazole (B.1.21), propiconazole (B.1.22), prothioconazole (B.1.23), simeconazole (B.1.24), tebuconazole (B.1.25), tetraconazole (B.1.26), triadimefon (B.1.27), triadimenol (B.1.28), triticonazole (B.1.29), uniconazole (B.1.30), ipfentrifluconazole, (B.1.37), mefentrifluconazole (B.1.38), 2-(chloromethyl)-2-methyl-5-(p-tolylmethyl)-1 (1,2,4-triazol-1-ylmethyl)cyclopentanol (B.1.43); imidazoles: imazalil (B.1.44), pefurazoate (B.1.45), prochloraz (B.1.46), triflumizol (B.1.47); pyrimidines, pyridines and piperazines: fenarimol (B.1.49), pyrifenox (B.1.50), triforine (B.1.51), [3-(4-chloro-2-fluoro-phenyl)-5-(2,4-difluorophenyl)isoxazol-4-yl]-(3-pyridyl)methanol (B.1.52);
- Delta14-reductase inhibitors: aldimorph (B.2.1), dodemorph (B.2.2), dodemorph-acetate (B.2.3), fenpropimorph (B.2.4), tridemorph (B.2.5), fenpropidin (B.2.6), piperalin (B.2.7), spiroxamine (B.2.8);

- Inhibitors of 3-keto reductase: fenhexamid (B.3.1);
- Other Sterol biosynthesis inhibitors: chlorphenomizole (B.4.1);

C) Nucleic acid synthesis inhibitors

- phenylamides or acyl amino acid fungicides: benalaxyl (C.1.1), benalaxyl-M (C.1.2), kiralaxyl (C.1.3), metalaxyl (C.1.4), metalaxyl-M (C.1.5), ofurace (C.1.6), oxadixyl (C.1.7);
- other nucleic acid synthesis inhibitors: hymexazole (C.2.1), octhilinone (C.2.2), oxolinic acid (C.2.3), bupirimate (C.2.4), 5-fluorocytosine (C.2.5), 5-fluoro-2-(p-tolylmethoxy)pyrimidin-4 amine (C.2.6), 5-fluoro-2-(4-fluorophenylmethoxy)pyrimidin-4 amine (C.2.7), 5-fluoro-2 (4 chlorophenylmethoxy)pyrimidin-4 amine (C.2.8);

D) Inhibitors of cell division and cytoskeleton

- tubulin inhibitors: benomyl (D.1.1), carbendazim (D.1.2), fuberidazole (D1.3), thiabendazole (D.1.4), thiophanate-methyl (D.1.5), 3-chloro-4-(2,6-difluorophenyl)-6-methyl-5-phenyl-pyridazine (D.1.6), 3-chloro-6-methyl-5-phenyl-4-(2,4,6-trifluorophenyl)pyridazine (D.1.7), N ethyl-2-[(3-ethynyl-8-methyl-6-quinolyl)oxy]butanamide (D.1.8), N-ethyl-2-[(3-ethynyl-8 methyl-6 quinolyl)oxy]-2-methylsulfanyl-acetamide (D.1.9), 2-[(3-ethynyl-8-methyl-6-quinol-yl)oxy]-N (2-fluoroethyl)butanamide (D.1.10), 2-[(3-ethynyl-8-methyl-6-quinolyl)oxy]-N-(2-flu-oroethyl)-2-methoxy-acetamide (D.1.11), 2-[(3-ethynyl-8-methyl-6-quinolyl)oxy]-N-propyl-butanamide (D.1.12), 2-[(3-ethynyl-8-methyl-6-quinolyl)oxy]-2-methoxy-N-propyl-acetamide (D.1.13), 2-[(3-ethynyl-8-methyl-6-quinolyl)oxy]-2-methylsulfanyl-N-propyl-acetamide (D.1.14), 2 [(3 ethynyl-8-methyl-6-quinolyl)oxy]-N-(2-fluoroethyl)-2-methylsulfanyl-acetamide (D.1.15), 4-(2-bromo-4-fluoro-phenyl)-N-(2-chloro-6-fluoro-phenyl)-2,5-dimethyl-pyrazol-3 amine (D.1.16);
- other cell division inhibitors: diethofencarb (D.2.1), ethaboxam (D.2.2), pencycuron (D.2.3), fluopicolide (D.2.4), zoxamide (D.2.5), metrafenone (D.2.6), pyriofenone (D.2.7);

E) Inhibitors of amino acid and protein synthesis

- methionine synthesis inhibitors: cyprodinil (E.1.1), mepanipyrim (E.1.2), pyrimethanil (E.1.3);
- protein synthesis inhibitors: blasticidin-S (E.2.1), kasugamycin (E.2.2), kasugamycin hydrochloride-hydrate (E.2.3), mildiomycin (E.2.4), streptomycin (E.2.5), oxytetracyclin (E.2.6);

F) Signal transduction inhibitors

- MAP / histidine kinase inhibitors: fluoroimid (F.1.1), iprodione (F.1.2), procymidone (F.1.3), vinclozolin (F.1.4), fludioxonil (F.1.5);
- G protein inhibitors: quinoxyfen (F.2.1);

G) Lipid and membrane synthesis inhibitors

- Phospholipid biosynthesis inhibitors: edifenphos (G.1.1), iprobenfos (G.1.2), pyrazophos (G.1.3), isoprothiolane (G.1.4);
- lipid peroxidation: dicloran (G.2.1), quintozene (G.2.2), tecnazene (G.2.3), tolclofos-methyl (G.2.4), biphenyl (G.2.5), chloroneb (G.2.6), etridiazole (G.2.7);
- phospholipid biosynthesis and cell wall deposition: dimethomorph (G.3.1), flumorph (G.3.2), mandipropamid (G.3.3), pyrimorph (G.3.4), benthiavalicarb (G.3.5), iprovalicarb (G.3.6), valifenalate (G.3.7);
- compounds affecting cell membrane permeability and fatty acides: propamocarb (G.4.1);
- inhibitors of oxysterol binding protein: oxathiapiprolin (G.5.1), 2-{3-[2-(1-{[3,5-bis(difluoromethyl-1H-pyrazol-1-yl]acetyl}piperidin-4-yl)-1,3-thiazol-4-yl]-4,5-dihydro-1,2 oxazol-5-yl}phenyl methanesulfonate (G.5.2), 2-{3-[2-(1-{[3,5-bis(difluoromethyl)-1H-pyrazol-1-yl]acetyl}piperidin-4-yl) 1,3-thiazol-4-yl]-4,5-dihydro-1,2-oxazol-5 yl}-3-chlorophenyl methanesulfonate (G.5.3), 4-[1-[2-[3-(difluoromethyl)-5-methyl-pyrazol-1-yl]acetyl]-4-piperidyl]-N-tetralin-1-yl-pyridine-2-carboxamide (G.5.4), 4-[1-[2-[3,5-bis(difluoromethyl)pyrazol-1-yl]acetyl]-4-piperidyl]-N-tetralin-1-yl-pyridine-2-carboxamide (G.5.5), 4-[1-[2-[3-(difluoromethyl)-5-(trifluoromethyl)pyrazol-1-yl]acetyl]-4-piperidyl]-N-tetralin-1-yl-pyridine-2-carboxamide (G.5.6), 4-[1-[2-[5-cyclopropyl-3-(difluoromethyl)pyrazol-1-yl]acetyl]-4-piperidyl]-N-tetralin-1-yl-pyridine-2-carboxamide (G.5.7), 4-[1-[2-[5-methyl-3-(trifluoromethyl)pyrazol-1-yl]acetyl]-4-piperidyl]-N-tetralin-1-yl-pyridine-2-carboxamide (G.5.8), 4-[1-[2-[5-(difluoromethyl)-3-(trifluoromethyl)pyrazol-1-yl]acetyl]-4-piperidyl]-N-tetralin-1 - yl-pyridine-2-carboxamide (G.5.9), 4 [1[2-[3,5-bis(trifluoromethyl)pyrazol-1-yl]acetyl]-4-piperidyl]-N-tetralin-1-yl-pyridine-2-carboxamide (G.5.10), (4-[1-[2-[5-cyclopropyl-3-(trifluoromethyl)pyrazol-1-yl]acetyl]-4-piperidyl]-N-tetralin-1-yl-pyridine-2-carboxamide (G.5.11);

H) Inhibitors with Multi Site Action

- inorganic active substances: Bordeaux mixture (H.1.1), copper (H.1.2), copper acetate (H.1.3), copper hydroxide (H.1.4), copper oxychloride (H.1.5), basic copper sulfate (H.1.6), sulfur (H.1.7);
- thio- and dithiocarbamates: ferbam (H.2.1), mancozeb (H.2.2), maneb (H.2.3), metam (H.2.4), metiram (H.2.5), propineb (H.2.6), thiram (H.2.7), zineb (H.2.8), ziram (H.2.9);
- organochlorine compounds: anilazine (H.3.1), chlorothalonil (H.3.2), captafol (H.3.3), captan (H.3.4), folpet (H.3.5), dichlofluanid (H.3.6), dichlorophen (H.3.7), hexachlorobenzene (H.3.8), pentachlorphenole (H.3.9) and its salts, phthalide (H.3.10), tolylfluanid (H.3.11);
- guanidines and others: guanidine (H.4.1), dodine (H.4.2), dodine free base (H.4.3), guazatine (H.4.4), guazatine-acetate (H.4.5), iminoctadine (H.4.6), iminoctadine-triacetate (H.4.7), iminoctadine-tris(albesilate) (H.4.8), dithianon (H.4.9), 2,6-dimethyl-1H,5H-[1,4]dithiino[2,3-c:5,6-c']dipyrrole-1,3,5,7(2H,6H)-tetraone (H.4.10);

I) Cell wall synthesis inhibitors

- inhibitors of glucan synthesis: validamycin (1.1.1), polyoxin B (1.1.2);
- melanin synthesis inhibitors: pyroquilon (1.2.1), tricyclazole (1.2.2), carpropamid (1.2.3), dicyclomet (1.2.4), fenoxanil (I.2.5);

J) Plant defence inducers

- acibenzolar-S-methyl (J.1.1), probenazole (J.1.2), isotianil (J.1.3), tiadinil (J.1.4), prohexadione-calcium (J.1.5); phosphonates: fosetyl (J.1.6), fosetyl-aluminum (J.1.7), phosphorous acid and its salts (J.1.8), calcium phosphonate (J.1.11), potassium phosphonate (J.1.12), potassium or sodium bicarbonate (J.1.9), 4 cyclopropyl-N-(2,4-dimethoxyphenyl)thiadiazole-5-carboxamide (J.1.10);

K) Unknown mode of action

- bronopol (K.1.1), chinomethionat (K.1.2), cyflufenamid (K.1.3), cymoxanil (K.1.4), dazomet (K.1.5), debacarb (K.1.6), diclocymet (K.1.7), diclomezine (K.1.8), difenzoquat (K.1.9), difenzoquat-methylsulfate (K.1.10), diphenylamin (K.1.11), fenitropan (K.1.12), fenpyrazamine (K.1.13), flumetover (K.1.14), flusulfamide (K.1.15), flutianil (K.1.16), harpin (K.1.17), metha-sulfocarb (K.1.18), nitrapyrin (K.1.19), nitrothal-isopropyl (K.1.20), tolprocarb (K.1.21), oxin-copper (K.1.22), proquinazid (K.1.23), tebufloquin (K.1.24), tecloftalam (K.1.25), triazoxide (K.1.26), N'-(4-(4-chloro-3-trifluoromethyl-phenoxy)-2,5-dimethyl-phenyl)-N-ethyl-N methyl formamidine (K.1.27), N' (4-(4-fluoro-3-trifluoromethyl-phenoxy)-2,5-dimethyl-phenyl)-N-ethyl-N-methyl formamidine (K.1.28), N'-[4-[[3-[(4-chlorophenyl)methyl]-1,2,4-thiadiazol-5-yl]oxy]-2,5-dimethylphenyl]-N-ethyl-N-methyl-formamidine (K.1.29), N'-(5-bromo-6-indan-2-yloxy-2-methyl-3-pyridyl)-N-ethyl-N-methyl-formamidine (K.1.30), N'-[5-bromo-6-[1-(3,5-difluorophenyl)ethoxy]-2-methyl-3-pyridyl]-N-ethyl-N-methyl-formamidine (K.1.31), N'-[5-bromo-6-(4-isopropylcyclohexoxy)-2-methyl-3-pyridyl]-N-ethyl-N-methyl-formamidine (K.1.32), N' [5 bromo-2-methyl-6-(1-phenyl-ethoxy)-3-pyridyl]-N-ethyl-N-methyl-formamidine (K.1.33), N'-(2-methyl-5-trifluoromethyl-4-(3-trimethylsilanyl-propoxy)-phenyl)-N-ethyl-N-methyl formamidine (K.1.34), N'-(5-difluoromethyl-2 methyl-4-(3-trimethylsilanyl-propoxy)-phenyl)-N-ethyl-N-methyl formamidine (K.1.35), 2-(4-chloro-phenyl)-N-[4-(3,4-dimethoxy-phenyl)-isoxazol-5 yl]-2-prop-2-ynyloxy-acetamide (K.1.36), 3 [5-(4-chloro-phenyl)-2,3-dimethyl-isoxazolidin-3-yl]-pyridine (pyrisoxazole) (K.1.37), 3-[5-(4-methylphenyl)-2,3-dimethyl-isoxazolidin-3 yl]-pyridine (K.1.38), 5-chloro-1 (4,6-dimethoxy-pyrimidin-2-yl)-2-methyl-1H-benzoimidazole (K.1.39), ethyl (Z) 3 amino-2-cyano-3-phenyl-prop-2-enoate (K.1.40), picarbutrazox (K.1.41), pentyl N-[6-[[(Z)-[(1-methyltetrazol-5-yl)-phenyl-methylene]amino]oxymethyl]-2-pyridyl]carbamate (K.1.42), but-3-ynyl N-[6-[[(Z)-[(1-methyltetrazol-5-yl)-phenyl-methylene]amino]oxymethyl]-2-pyridyl]carbamate (K.1.43), 2-[2-[(7,8-difluoro-2-methyl-3-quinolyl)oxy]-6-fluoro-phenyl]propan-2-ol(K.1.44), 2-[2-fluoro-6-[(8-fluoro-2-methyl-3-quinolyl)oxy]phen-yl]propan-2-ol (K.1.45), quinofumelin (K.1.47), 9-fluoro-2,2-dimethyl-5-(3-quinolyl)-3H 1,4 benzoxazepine (K.1.49), 2-(6-benzyl-2-pyridyl)quinazoline (K.1.50), 2-[6-(3-fluoro-4 methoxy-phenyl)-5-methyl-2-pyridyl]quinazoline

(K.1.51), dichlobentiazox (K.1.52), N'-(2,5-dimethyl-4-phenoxy-phenyl)-N-ethyl-N-methyl-formamidine (K.1.53); dipymetitrone, isoflucypram; fluindapyr, inpyrfluxam, pyrifenamine.

The commercially available compounds of the group M listed above may be found in The Pesticide Manual, 17th Edition, C. MacBean, British Crop Protection Council (2015) among other publications. The online Pesticide Manual is updated regularly and is accessible through http://bcpcdata.com/pesticide-manual.html.

Another online data base for pesticides providing the ISO common names is http://www.alan-wood.net/pesticides.

The M.4 cycloxaprid is known from WO2010/069266 and WO2011/069456. M.4A.1 is known from CN 103814937; CN105367557, CN 105481839. M.4A.2, guadipyr, is known from WO 2013/003977, and M.4A.3 (approved as paichongding in China) is known from WO 2007/101369. M.22B.1 is described in CN10171577 and M.22B.2 in CN102126994. Spiropidion M.23.1 is known from WO 2014/191271. M.28.1 and M.28.2 are known from WO2007/101540. M.28.3 is described in WO2005/077934. M.28.4 is described in WO2007/043677. M.28.5a) to M.28.5d) and M.28.5h) are described in WO 2007/006670, WO2013/024009 and WO 2013/024010, M.28.5i) is described in WO2011/085575, M.28.5j) in WO2008/134969, M.28.5k) in US2011/046186 and M.28.5l) in WO2012/034403. M.28.6 can be found in WO2012/034472. M.UN.3 is known from WO2006/089633 and M.UN.4 from WO2008/067911.M.UN.5 is described in WO2006/043635, and biological control agents on the basis of *bacillus firmus* are described in WO2009/124707. Flupyrimin is described in WO2012/029672. M.UN.8 is known from WO2013/055584. M.UN.9.a) is described in WO2013/050317. M.UN.9.b) is described in WO2014/126208. M.UN.10 is known from WO2010/060379. Broflanilide and M.UN.11.b) to M.UN.11.h) are described in WO2010/018714, and M.UN.11i) to M.UN.11.p) in WO 2010/127926. M.UN.12.a) to M.UN.12.c) are known from WO2010/006713, M.UN.12.d) and M.UN.12.e) are known from WO2012/000896, and M.UN.12.f) to M.UN.12.m) from WO 2010/129497. M.UN.14a) and M.UN.14b) are known from WO2007/101369. M.UN.16.a) to M.UN.16h) are described in WO2010/034737, WO2012/084670, and WO2012/143317, resp., and M.UN.16i) and M.UN.16j) are described in WO2015/055497. M.UN.17a) to M.UN.17.j) are described in WO2015/038503. M.UN.18a) to M.UN.18d) are described in US2014/0213448. M.UN.19 is described in WO2014/036056. M.UN.20 is known from WO2014/090918. M.UN.21 is known from EP2910126. M.UN.22a and M.UN.22b are known from WO2015/059039 and WO2015/190316. M.UN.23a and M.UN.23b are known from WO2013/050302. M.UN.24a and M.UN.24b are known from WO2012/126766. Acynonapyr M.UN.25 is known from WO 2011/105506. Benzpyrimoxan M.UN.26 is known from WO2016/104516. M.UN.27 is known from WO2016174049. The compound M.29.28 is known from WO2017104592. The compound M.29.29 (CAS number- 1104384-14-6) and its pesticidal action is known from CN101333213, WO20103350. The compound M.29.30 (CAS number- 1477919-27-9) and its pesticidal action is known from WO201S/125S20.

The fungicides described by IUPAC nomenclature, their preparation and their pesticidal activity is also known (cf. Can. J. Plant Sci. 48(6), 587-94, 1968; EP-A 141 317; EP-A 152 031; EP-A 226 917; EP-A 243 970; EP-A 256 503; EP-A 428 941; EP-A 532 022; EP-A 1 028 125; EP-A 1 035 122; EP-A 1 201 648; EP-A 1 122 244, JP 2002316902; DE 19650197; DE 10021412; DE 102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388; WO 03/66609; WO 03/74491; WO 04/49804; WO 04/83193; WO 05/120234; WO 05/123689; WO 05/123690; WO 05/63721; WO 05/87772; WO 05/87773; WO 06/15866; WO 06/87325; WO 06/87343; WO 07/82098; WO 07/90624, WO 10/139271, WO 11/028657, WO2012/168188, WO 2007/006670, WO 2011/77514; WO13/047749, WO 10/069882, WO 13/047441, WO 03/16303, WO 09/90181, WO 13/007767, WO 13/010862, WO 13/127704, WO 13/024009, WO 13/024010 and WO 13/047441, WO 13/162072, WO 13/092224, WO 11/135833), CN 1907024, CN 1456054, CN 103387541, CN 1309897, WO 12/84812, CN 1907024, WO 09094442, WO 14/60177, WO 13/116251, WO 08/013622, WO 15/65922, WO 94/01546, EP 2865265, WO 07/129454, WO 12/165511, WO 11/081174, WO 13/47441).

In a further embodiment, the invention relates to mixtures comprising a compound of formula (I) as described above, in particular a compound I-1 or I-R-1, and at least one compound II which is metaaldehyde, in particular granular metaaldehyde.

The present invention relates to a mixture of at least one compound I or non-racemic compound of formula (I) or compound of formula (I) with enantiomeric excess of compound of formula I-R-1, of the present invention as component I with at least one mixing partner II as defined above. In one embodiment, the invention relates to binary mixtures of one components I with one mixing partner II as defined above as component II.

Preferred weight ratios for such binary mixtures are from 10000:1 to 1:10000, preferably from 7000:1 to 1:7000, also preferably from 5000:1 to 1:5000, also preferably from 1000:1 to 1:1000, more preferably from 100:1 to 1:100, also more preferably from 70:1 to 1:70, particularly preferably from 25:1 to 1:25, also particularly preferably from 10:1 to 1:10. In such binary mixtures, components I and II may be used in equal amounts, or an excess of component I, or an excess of component II may be used.

In the mixtures of the present invention, the ingredients may be used sequentially or in combination with each

other, if appropriate also added only immediately prior to use (tank mix). For example, the plant(s) may be sprayed with compound II either before or after being treated with component I .

In one embodiment of the invention, the mixtures of the present invention are mixtures of a compound of formula (I), preferably I-R-1, with a compound selected from the group of benomyl, carbendazim, epoxiconazole, fluquinconazole, flutriafol, flusilazole, metconazole, prochloraz, prothioconazole, tebuconazole, triticonazole, pyraclostrobin, trifloxystrobin, boscalid, dimethomorph, penthiopyrad, dodemorph, famoxadone, fenpropimorph, proquinazid, pyrimethanil, tridemorph, maneb, mancozeb, metiram, thiram, chlorothalonil, dithianon, flusulfamide, metrafenone, fluxapyroxad, bixafen, penflufen, sedaxane, isopyrazam, oxazosulfyl. Especially preferred is pyraclostrobin, oxazosulfyl, and fluxapyroxad.

In one embodiment of the invention, the mixtures of the present invention are mixtures of a compound of formula (I), preferably I-R-1, with a compound selected from the group of imidacloprid, clothianidin, dinotefuran, chlorantraniliprole, cyantraniliprole, spinetoram, spinosad, ethiprole, fipronil, triflumezopyrim, flonicamid, oxazosulfyl, and tetraniliprole.

In one embodiment of the invention, the mixtures of the present invention are mixtures of a compound of formula (I), preferably I-R-1, with a compound selected from the group of probenazole, isotianil, tricyclazole, pyroquilon, isoprothiolane, tolprocarb, carpropamid, diclocymet, azoxystrobin, oxazosulfyl, and orysastrobin.

In one embodiment of the invention, the mixtures of the present invention are mixtures of a compound of formula (I), preferably I-R-1, with a compound selected from the group of furametpyr, thifluzamide, simeconazole, penflufen, azoxystrobin, orysastrobin.

In one embodiment of the invention, the mixtures of the present invention are mixtures of a compound of formula (I), preferably I-R-1, with Oxazosulfyl.

In one embodiment of the invention, the mixtures of the present invention are mixtures of a non-racemic compound of formula (I), preferably compound of formula (I) with enantiomeric excess of compound I-R-1, preferably the compound I-R-1, with a compound selected from the group of M.2: GABA-gated chloride channel antagonists, M.3: Sodium channel modulators, M.4: Nicotinic acetylcholine receptor agonists, M.5: Nicotinic acetylcholine receptor allosteric activators, M.6:Chloride channel activators from the class of avermectins and milbemycins, M.9: Chordotonal organ TRPV channel modulators, M.13: Uncouplers of oxidative phosphorylation via disruption of the proton gradient, M.15: Inhibitors of the chitin biosynthesis type 0, M.16: Inhibitors of the chitin biosynthesis type, M.22: Voltage-dependent sodium channel blockers, M.23: Inhibitors of the of acetyl CoA carboxylase, M.28: Ryanodine receptor-modulators from the class of diamides, M.29:Chordotonal organ Modulators, M.UN.9.b, M.29.28, Respiration inhibitors: Inhibitors of complex III at Qo site, inhibitors of complex III at Qi site, inhibitors of complex II, Sterol biosynthesis inhibitors, Lipid and membrane synthesis inhibitors, Cell wall synthesis inhibitors preferably melanin synthesis inhibitors, Plant defence inducers, diclocymet (K.1.7), tolprocarb (K.1.21), and picarbutrazox (K.1.41).

In one embodiment of the invention, the mixtures of the present invention are mixtures of a non-racemic compound of formula (I), preferably compound of formula (I) with enantiomeric excess of compound I-R-1, preferably the compound I-R-1, with a compound selected from the group of fipronil, alpha-cypermethrin, chlorfenapyr, metaflumizone, abamectin, pymetrozine, thiamethoxam, imidacloprid, dinotefuran, dinotefuran, clothianidin, flonicamid, spirotetramat, buprofezine, chlorantraniliprole, cyantraniliprole, tetraniliprole, sulfoxaflor, indoxacarb, triflumezopyrim, ethiprole, spinetoram, spinosad, spiropidion, fluxametamide, penflufen, tricyclazole, azoxystrobin, isoprothiolane, tolprocarb, carpropamid, diclocymet, furametpyr, simeconazole, probenazole, orysastrobin, pyroquilon, thifluzamide, picarbutrazox, oxazosulfyl, methoxyfenozid, flubendiamid, flufenoxuron, cyazofamid, metalaxyl, amisulbrom, cyclaniliprole, dicyclomet, and isotianil. Especially preferred is alpha-cypermethrin, flonicamid, fluxametamide, spinetoram, indoxacarb, oxazosulfyl, pymetrozine, triflumezopyrim, flufenoxuron, furametpyr, metalaxyl, probenazole, dicyclomet, penflufen, pyroquilon, simeconazol, buprofezin, tricyclazole, or spinosad

In one embodiment of the invention, the mixtures of the present invention are mixtures of a non-racemic compound of formula (I), preferably compound of formula (I) with enantiomeric excess of compound I-R-1, preferably the compound I-R-1, with a compound selected from the group of fipronil, alpha-cypermethrin, chlorfenapyr, metaflumizone, abamectin, pymetrozine, thiamethoxam, imidacloprid, dinotefuran, dinotefuran, clothianidin, flonicamid, spirotetramat, buprofezine, chlorantraniliprole, cyantraniliprole, tetraniliprole, sulfoxaflor, indoxacarb, triflumezopyrim, ethiprole, spinetoram, spinosad, spiropidion, fluxametamide, oxazosulfyl, methoxyfenozid, flubendiamid, flufenoxuron, and cyclaniliprole.

In one embodiment of the invention, the mixtures of the present invention are mixtures of a non-racemic compound of formula (I), preferably compound of formula (I) with enantiomeric excess of compound I-R-1, preferably the compound I-R-1, with a compound selected from the group of probenazole, tricyclazole, pyroquilon, isoprothiolane, tolprocarb, carpropamid, diclocymet, azoxystrobin, orysastrobin, furametpyr, thifluzamide, simeconazole, penflufen, picarbutrazox, cyazofamid, metalaxyl, amisulbrom, and isotianil.

In another embodiment of the present invention, the mixtures comprise the compound of formula (I) and two agriculturally active components (active compound II and active compound III) selected from the insecticides and fungicides listed above.

In another embodiment of the present invention, the mixtures comprise the compound of formula (I) and one

insecticide (active compound II) and one fungicide (active compound III) selected from the insecticides and fungicides listed above.

In another embodiment of the present invention, the mixtures comprise the compound of formula (I) and one insecticide (active compound II) and another insecticide (active compound III) selected from the insecticides listed above.

In another embodiment of the present invention, the mixtures comprise compound of formula (I) and two fungicides or two insecticdes listed above.

Especially preferred mixtures according to the invention are listed in the following table M, wherein the compounds I are as defined in the description:

Mixture Examples

Examples of some mixtures according to the present invention are described in the tables here-inbelow.

The agriculturally active component II, with which the compound of formula I can be combined, is an insecticide or a fungicide as identified and abbreviated according to the codes listed in table M.

Table M

| Mixture | Comp. I | Compound II |
|---|---|---|
| M-1 | I | fipronil |
| M-2 | I | alpha-cypermethrin |

| Mixture | Comp. I | Compound II |
|---|---|---|
| M-3 | I | chlorfenapyr |
| M-4 | I | metaflumizone |

| Mixture | Comp. I | Compound II |
|---|---|---|
| M-5 | I | abamectin |
| M-6 | I | pymetrozine |
| M-7 | I | thiamethoxam |
| M-8 | I | imidacloprid |
| M-9 | I | dinotefuran |
| M-10 | I | clothianidin |
| M-11 | I | bifenthrin |
| M-12 | I | acetamiprid |
| M-13 | I | nitenpyram |
| M-14 | I | cypermethrin |
| M-15 | I | cyhalothrin |
| M-16 | I | lambda-cyhalothrin |
| M-17 | I | flonicamid |
| M-18 | I | spirotetramat |
| M-19 | I | buprofezine |
| M-20 | I | chlorantraniliprole |
| M-21 | I | cyantraniliprole |
| M-22 | I | tetraniliprole |
| M-23 | I | sulfoxaflor |
| M-24 | I | indoxacarb |
| M-25 | I | afidopyropen |
| M-26 | I | broflanilide |
| M-27 | I | pyriprole |
| M-28 | I | triflumezopyrim |
| M-29 | I | flupyradifurone |
| M-30 | I | dicloromezotiaz |
| M-31 | I | chlorpyrifos |
| M-32 | I | dichlorvos |
| M-33 | I | triazophos |
| M-34 | I | cartap |
| M-35 | I | acephate |
| M-36 | I | carbofuran |
| M-37 | I | carbosulfan |
| M-38 | I | emamectin |
| M-39 | I | ethiprole |
| M-40 | I | etofenprox |
| M-41 | I | spinetoram |
| M-42 | I | spinosad |
| M-43 | I | fluhexafon |
| M-44 | I | tefluthrin |
| M-45 | I | momfluorothrin |

| Mixture | Comp. I | Compound II |
|---|---|---|
| M-46 | I | benzpyrimoxan |
| M-47 | I | cyhalodiamide |
| M-48 | I | spiropidion |
| M-49 | I | flupyrimin |
| M-50 | I | cyclaniliprole |
| M-51 | I | fluxametamide |
| M-52 | I | tioxazafen |
| M-53 | I | fluazaindolizine |
| M-54 | I | pyrifluquinazone |
| M-55 | I | metaaldehyde (in particular granular) |
| M-56 | I | benomyl |
| M-57 | I | epoxiconazole |
| M-58 | I | fluquinconazole |
| M-59 | I | flutriafol |
| M-60 | I | flusilazole |
| M-61 | I | metconazole |
| M-62 | I | prochloraz |
| M-63 | I | prothioconazole |
| M-64 | I | tebuconazole |
| M-65 | I | triticonazole |
| M-66 | I | pyraclostrobin |
| M-67 | I | trifloxystrobin |
| M-68 | I | boscalid |
| M-69 | I | dimethomorph |
| M-70 | I | penthiopyrad |
| M-71 | I | dodemorph |
| M-72 | I | famoxadone |
| M-73 | I | fenpropimorph |
| M-74 | I | proquinazid |
| M-75 | I | pyrimethanil |
| M-76 | I | tridemorph |
| M-77 | I | maneb |
| M-78 | I | metiram |
| M-79 | I | thiram |
| M-80 | I | chlorothalonil |
| M-81 | I | dithianon |
| M-82 | I | flusulfamide |
| M-83 | I | metrafenone |
| M-84 | I | fluxapyroxad |
| M-85 | I | bixafen |

| Mixture | Comp. I | Compound II |
|---|---|---|
| M-86 | I | penflufen |
| M-87 | I | sedaxane |
| M-88 | I | isopyrazam |
| M-89 | I | tricyclazole |
| M-90 | I | azoxystrobin |
| M-91 | I | difenoconazole |
| M-92 | I | kasugamycin |
| M-93 | I | isoprothiolane |
| M-94 | I | tolprocarb |
| M-95 | I | carpropamid |
| M-96 | I | diclocymet |
| M-97 | I | furametpyr |
| M-98 | I | simeconazole |
| M-99 | I | probenazole |
| M-100 | I | mancozeb |
| M-101 | I | propiconazole |
| M-102 | I | hexaconazole |
| M-103 | I | tebuconazole |
| M-104 | I | carbendazim |
| M-105 | I | flutolanil |
| M-106 | I | hymexazol |
| M-107 | I | isotianil |
| M-108 | I | orysastrobin |
| M-109 | I | pencycuron |
| M-110 | I | phthalide |
| M-111 | I | pyroquilon |
| M-112 | I | thifluzamide |
| M-113 | I | thiophanate |
| M-114 | I | thiophanate-methyl |
| M-115 | I | tiadinil |
| M-116 | I | validamycin |
| M-117 | I | tebufloquin |
| M-118 | I | benzovindiflupyr |
| M-119 | I | picarbutrazox |
| M-120 | I | pyraziflumid |
| M-121 | I | dipymetitrone |
| M-122 | I | pydiflumetofen |
| M-123 | I | quinofumelin |
| M-124 | I | ipfentrifluconazole |
| M-125 | I | dichlobentiazox |
| M-126 | I | fenpicoxamid |

| Mixture | Comp. I | Compound II |
|---|---|---|
| M-127 | I | isoflucypram |
| M-128 | I | fluindapyr |
| M-129 | I | inpyrfluxam |
| M-130 | I | pyrifenamine |
| M-131 | I | mefentrifluconazole |
| M-132 | I | oxazosulfyl |
| M-133 | I | methoxyfenozid |
| M-134 | I | flubendiamid |
| M-135 | I | flufenoxuron |
| M-136 | I | cyazofamid |
| M-137 | I | metalaxyl |
| M-138 | I | amisulbrom |
| M-139 | I | fluopyram |
| M-140 | I | Tetra-chlorantraniliprole |
| M-141 | I | Tyclopyrazoflor |
| M-142 | I-R-1 | fipronil |
| M-143 | I-R-1 | alpha-cypermethrin |
| M-144 | I-R-1 | chlorfenapyr |
| M-145 | I-R-1 | metaflumizone |
| M-146 | I-R-1 | abamectin |
| M-147 | I-R-1 | pymetrozine |
| M-148 | I-R-1 | thiamethoxam |
| M-149 | I-R-1 | imidacloprid |
| M-150 | I-R-1 | dinotefuran |
| M-151 | I-R-1 | clothianidin |
| M-152 | I-R-1 | bifenthrin |
| M-153 | I-R-1 | acetamiprid |
| M-154 | I-R-1 | nitenpyram |
| M-155 | I-R-1 | cypermethrin |
| M-156 | I-R-1 | cyhalothrin |
| M-157 | I-R-1 | lambda-cyhalothrin |
| M-158 | I-R-1 | flonicamid |
| M-159 | I-R-1 | spirotetramat |
| M-160 | I-R-1 | buprofezine |
| M-161 | I-R-1 | chlorantraniliprole |
| M-162 | I-R-1 | cyantraniliprole |
| M-163 | I-R-1 | tetraniliprole |
| M-164 | I-R-1 | sulfoxaflor |
| M-165 | I-R-1 | indoxacarb |
| M-166 | I-R-1 | afidopyropen |

| Mixture | Comp. I | Compound II |
|---|---|---|
| M-167 | I-R-1 | broflanilide |
| M-168 | I-R-1 | pyriprole |
| M-169 | I-R-1 | triflumezopyrim |
| M-170 | I-R-1 | flupyradifurone |
| M-171 | I-R-1 | dicloromezotiaz |
| M-172 | I-R-1 | chlorpyrifos |
| M-173 | I-R-1 | dichlorvos |
| M-174 | I-R-1 | triazophos |
| M-175 | I-R-1 | cartap |
| M-176 | I-R-1 | acephate |
| M-177 | I-R-1 | carbofuran |
| M-178 | I-R-1 | carbosulfan |
| M-179 | I-R-1 | emamectin |
| M-180 | I-R-1 | ethiprole |
| M-181 | I-R-1 | etofenprox |
| M-182 | I-R-1 | spinetoram |
| M-183 | I-R-1 | spinosad |
| M-184 | I-R-1 | fluhexafon |
| M-185 | I-R-1 | tefluthrin |
| M-186 | I-R-1 | momfluorothrin |
| M-187 | I-R-1 | benzpyrimoxan |
| M-188 | I-R-1 | cyhalodiamide |
| M-189 | I-R-1 | spiropidion |
| M-190 | I-R-1 | flupyrimin |
| M-191 | I-R-1 | cyclaniliprole |
| M-192 | I-R-1 | fluxametamide |
| M-193 | I-R-1 | tioxazafen |
| M-194 | I-R-1 | fluazaindolizine |
| M-195 | I-R-1 | pyrifluquinazone |
| M-196 | I-R-1 | metaaldehyde (in particular granular) |
| M-197 | I-R-1 | benomyl |
| M-198 | I-R-1 | epoxiconazole |
| M-199 | I-R-1 | fluquinconazole |
| M-200 | I-R-1 | flutriafol |
| M-201 | I-R-1 | flusilazole |
| M-202 | I-R-1 | metconazole |
| M-203 | I-R-1 | prochloraz |
| M-204 | I-R-1 | prothioconazole |
| M-205 | I-R-1 | tebuconazole |
| M-206 | I-R-1 | triticonazole |

| Mixture | Comp. I | Compound II |
|---|---|---|
| M-207 | I-R-1 | pyraclostrobin |
| M-208 | I-R-1 | trifloxystrobin |
| M-209 | I-R-1 | boscalid |
| M-210 | I-R-1 | dimethomorph |
| M-211 | I-R-1 | penthiopyrad |
| M-212 | I-R-1 | dodemorph |
| M-213 | I-R-1 | famoxadone |
| M-214 | I-R-1 | fenpropimorph |
| M-215 | I-R-1 | proquinazid |
| M-216 | I-R-1 | pyrimethanil |
| M-217 | I-R-1 | tridemorph |
| M-218 | I-R-1 | maneb |
| M-219 | I-R-1 | metiram |
| M-220 | I-R-1 | thiram |
| M-221 | I-R-1 | chlorothalonil |
| M-222 | I-R-1 | dithianon |
| M-223 | I-R-1 | flusulfamide |
| M-224 | I-R-1 | metrafenone |
| M-225 | I-R-1 | fluxapyroxad |
| M-226 | I-R-1 | bixafen |
| M-227 | I-R-1 | penflufen |
| M-228 | I-R-1 | sedaxane |
| M-229 | I-R-1 | isopyrazam |
| M-230 | I-R-1 | tricyclazole |
| M-231 | I-R-1 | azoxystrobin |
| M-232 | I-R-1 | difenoconazole |
| M-233 | I-R-1 | kasugamycin |
| M-234 | I-R-1 | isoprothiolane |
| M-235 | I-R-1 | tolprocarb |
| M-236 | I-R-1 | carpropamid |
| M-237 | I-R-1 | diclocymet |
| M-238 | I-R-1 | furametpyr |
| M-239 | I-R-1 | simeconazole |
| M-240 | I-R-1 | probenazole |
| M-241 | I-R-1 | mancozeb |
| M-242 | I-R-1 | propiconazole |
| M-243 | I-R-1 | hexaconazole |
| M-244 | I-R-1 | tebuconazole |
| M-245 | I-R-1 | carbendazim |
| M-246 | I-R-1 | flutolanil |
| M-247 | I-R-1 | hymexazol |

| Mixture | Comp. I | Compound II |
|---|---|---|
| M-248 | I-R-1 | isotianil |
| M-249 | I-R-1 | orysastrobin |
| M-250 | I-R-1 | pencycuron |
| M-251 | I-R-1 | phthalide |
| M-252 | I-R-1 | pyroquilon |
| M-253 | I-R-1 | thifluzamide |
| M-254 | I-R-1 | thiophanate |
| M-255 | I-R-1 | thiophanate-methyl |
| M-256 | I-R-1 | tiadinil |
| M-257 | I-R-1 | validamycin |
| M-258 | I-R-1 | tebufloquin |
| M-259 | I-R-1 | benzovindiflupyr |
| M-260 | I-R-1 | picarbutrazox |
| M-261 | I-R-1 | pyraziflumid |
| M-262 | I-R-1 | dipymetitrone |
| M-263 | I-R-1 | pydiflumetofen |
| M-264 | I-R-1 | quinofumelin |
| M-265 | I-R-1 | ipfentrifluconazole |

| Mixture | Comp. I | Compound II |
|---|---|---|
| M-266 | I-R-1 | dichlobentiazox |
| M-267 | I-R-1 | fenpicoxamid |
| M-268 | I-R-1 | isoflucypram |
| M-269 | I-R-1 | fluindapyr |
| M-270 | I-R-1 | inpyrfluxam |
| M-271 | I-R-1 | pyrifenamine |
| M-272 | I-R-1 | mefentrifluconazole |
| M-273 | I-R-1 | oxazosulfyl |
| M-274 | I-R-1 | methoxyfenozid |
| M-275 | I-R-1 | flubendiamid |
| M-276 | I-R-1 | flufenoxuron |
| M-277 | I-R-1 | cyazofamid |
| M-278 | I-R-1 | metalaxyl |
| M-279 | I-R-1 | amisulbrom |
| M-280 | I-R-1 | fluopyram |
| M-281 | I-R-1 | Tetra-chlorantraniliprole |
| M-282 | I-R-1 | Tyclopyrazoflor |

The compounds according to the present invention may also be used for improving the health of a plant. Therefore, the present invention also relates to a method for improving plant health by treating a plant, plant propagation material and/or the locus where the plant is growing or is to grow with an effective and non-phytotoxic amount of a compound of the present invention. As used herein "an effective and non-phytotoxic amount" means that the compound is used in a quantity which allows to obtain the desired effect but which does not give rise to any phytotoxic symptom on the treated plant or on the plant grown from the treated propagule or treated soil.

The terms "plant" and "plant propagation material" are defined above.

"Plant health" is defined as a condition of the plant and/or its products which is determined by several aspects alone or in combination with each other such as yield (for example increased biomass and/or increased content of valuable ingredients), quality (for example improved content or composition of certain ingredients or shelf life), plant vigour (for example improved plant growth and/or greener leaves ("greening effect"), tolerance to abiotic (for example drought) and/or biotic stress (for example disease) and production efficiency (for example, harvesting efficiency, processability).

The above identified indicators for the health condition of a plant may be interdependent and may result from each other. Each indicator is defined in the art and can be determined by methods known to a skilled person.

As already indicated above, the invention in particular relates to application methods and uses for combating arthropod pests, and nematode pests, which are known to be transmit one or more virusses from to plants.

The compounds according to the present invention are particularly useful for soil application methods for controlling invertebrate pests, in particular for controlling insects, arthropods and nematodes and especially (spider) mites, which are known to transmit one or more viruses to plants.

The compounds according to the present invention are effective through both contact and ingestion. Furthermore, the compounds according to the present invention can be applied to any and all developmental stages, such as egg, larva, pupa, and adult.

The compounds according to the present invention can be applied as such or in form of compositions comprising them as defined above. Furthermore, the compounds according to the present invention can be applied together with a mixing partner as defined above or in form of compositions comprising said mixtures as defined above. The components of said mixture can be applied simultaneously, jointly or separately, or in succession, that is immediately one after another and thereby creating the mixture "in situ" on the desired location, e.g. the plant, the sequence, in the case of separate application, generally not having any effect on the result of the control measures.

The application can be carried out both before and after the infestation of the crops, plants, plant propagation

materials, such as seeds, soil, or the area, material or environment by the pests.

Suitable application methods according to the present invention include inter alia soil treatment, seed treatment, in furrow appli-cation, and foliar application. Soil treatment methods include drenching the soil, drip irrigation (drip application onto the soil), dipping roots, tubers or bulbs, or soil injection. Seed treatment techniques include seed dressing, seed coating, seed dusting, seed soaking, and seed pelleting. In furrow applications typically include the steps of making a furrow in cultivated land, seeding the furrow with seeds, applying the pesticidally active compound to the furrow, and closing the furrow. Foliar application refers to the application of the pesticidally active compound to plant foliage, e.g. through spray equipment. For foliar applications, it can be advantageous to modify the behavior of the pests by use of pheromones in combination with the compounds according to the present invention. Suitable pheromones for specific crops and pests are known to a skilled person and publicly available from databases of pheromones and semiochemicals, such as http://www.pherobase.com.

As used herein, the term "contacting" includes both direct contact (applying the compounds/compositions directly on the animal pest or plant - typically to the foliage, stem or roots of the plant) and indirect contact (applying the compounds/compositions to the locus, i.e. habitat, breeding ground, plant, seed, soil, area, material or environment in which a pest is growing or may grow, of the animal pest or plant).

The term "animal pest" includes arthropods, gastropods, and nematodes. Preferred animal pests according to the invention are arthropods, preferably insects and arachnids, in particular insects. Insects, which are of particular relevance for crops, are typically referred to as crop insect pests.

The term "crop" refers to both, growing and harvested crops.

The term "plant" includes cereals, e.g. durum and other wheat, rye, barley, triticale, oats, rice, or maize (fodder maize and sugar maize / sweet and field corn); beet, e.g. sugar beet or fodder beet; fruits, such as pomes, stone fruits or soft fruits, e.g. apples, pears, plums, peaches, nectarines, almonds, cherries, papayas, strawberries, raspberries, blackberries or gooseberries; leguminous plants, such as beans, lentils, peas, alfalfa or soybeans; oil plants, such as rape-seed (oilseed rape), turnip rape, mustard, olives, sunflowers, coconut, cocoa beans, castor oil plants, oil palms, ground nuts or soybeans; cucurbits, such as squashes, pumpkins, cucumber or melons; fiber plants, such as cotton, flax, hemp or jute; citrus fruit, such as oranges, lemons, grape-fruits or mandarins; vegetables, such as eggplant, spinach, lettuce (e.g. iceberg lettuce), chicory, cabbage, asparagus, cabbages, carrots, onions, garlic, leeks, tomatoes, potatoes, cucurbits or sweet peppers; lauraceous plants, such as avocados, cinnamon or camphor; energy and raw material plants, such as corn, soybean, rapeseed, sugar cane or oil palm; tobacco; nuts, e.g. walnuts; pistachios; coffee; tea; bananas; vines (table grapes and grape juice grape vines); hop; sweet leaf (also called Stevia); natural rubber plants or ornamental and forestry plants, such as flowers (e.g. carnation, petunias, geranium/pelargoniums, pansies and impatiens), shrubs, broad-leaved trees (e.g. poplar) or evergreens, e.g. conifers; eucalyptus; turf; lawn; grass such as grass for animal feed or ornamental uses. Preferred plants include potatoes sugar beets, tobacco, wheat, rye, barley, oats, rice, corn, cotton, soybeans, rapeseed, legumes, sunflowers, coffee or sugar cane; fruits; vines; ornamentals; or vegetables, such as cucumbers, tomatoes, beans or squashes.

The term "plant" is to be understood as including wild type plants and plants, which have been modified by either conventional breeding, or mutagenesis or genetic engineering, or by a combination thereof.

Plants, which have been modified by mutagenesis or genetic engineering, and are of particular commercial importance, include alfalfa, rapeseed (e.g. oilseed rape), bean, carnation, chicory, cotton, eggplant, eucalyptus, flax, lentil, maize, melon, papaya, petunia, plum, poplar, potato, rice, soybean, squash, sugar beet, sugarcane, sunflower, sweet pepper, tobacco, tomato, and cereals (e.g. wheat), in particular maize, soybean, cotton, wheat, and rice. In plants, which have been modified by mutagenesis or genetic engineering, one or more genes have been mutagenized or integrated into the genetic material of the plant. The one or more mutagenized or integrated genes are preferably selected from pat, epsps, cry1Ab, bar, cry1Fa2, cry1Ac, cry34Ab1, cry35AB1, cry3A, cryF, cry1F, mcry3a, cry2Ab2, cry3Bb1, cry1A.105, dfr, barnase, vip3Aa20, barstar, als, bxn, bp40, asn1, and ppo5. The mutagenesis or integration of the one or more genes is performed in order to improve certain properties of the plant. Such properties, also known as traits, include abiotic stress tolerance, altered growth/yield, disease resistance, herbicide tolerance, insect resistance, modified product quality, and pollination control. Of these properties, herbicide tolerance, e.g. imidazolinone tolerance, glyphosate tolerance, or glufosinate tolerance, is of particular importance. Several plants have been rendered tolerant to herbicides by mutagenesis, for example Clearfield® oilseed rape being tolerant to imidazolinones, e.g. imazamox. Alternatively, genetic engineering methods have been used to render plants, such as soybean, cotton, corn, beets and oil seed rape, tolerant to herbicides, such as glyphosate and glufosinate, some of which are commercially available under the trade names RoundupReady® (glyphosate) and LibertyLink® (glufosinate). Furthermore, insect resistance is of importance, in particular lepidopteran insect resistance and coleopteran insect resistance. Insect resistance is typically achieved by modifying plants by integrating cry and/or vip genes, which were isolated from Bacillus thuringiensis (Bt), and code for the respective Bt toxins. Genetically modified plants with insect resistance are commercially available under trade names including WideStrike®, Bollgard®, Agrisure®, Herculex®, YieldGard®, Genuity®, and Intacta®. Plants may be modified by mutagenesis or genetic engineering either in terms of one property (singular traits) or in terms of a combination of

properties (stacked traits). Stacked traits, e.g. the combination of herbicide tolerance and insect resistance, are of increasing importance. In general, all relevant modified plants in connection with singular or stacked traits as well as detailed information as to the mutagenized or integrated genes and the respective events are available from websites of the organizations "International Service for the Acquisition of Agri-biotech Applications (ISAAA)" (http://www.isaaa.org/gmapprovaldatabase) and "Center for Environmental Risk Assessment (CERA)" (http://cera-gmc.org/GMCropDatabase).

It has surprisingly been found that the pesticidal activity of the compounds according to the present invention may be enhanced by the insecticidal trait of a modified plant. Furthermore, it has been found that the compounds according to the present invention are suitable for preventing insects to become resistant to the insecticidal trait or for combating pests, which already have become resistant to the insecticidal trait of a modified plant. Moreover, the compounds according to the present invention are suitable for combating pests, against which the insecticidal trait is not effective, so that a com-plementary insecticidal activity can advantageously be used.

The term "plant propagation material" refers to all the generative parts of the plant such as seeds and vegetative plant material such as cuttings and tubers (e.g. potatoes), which can be used for the multiplication of the plant. This includes seeds, roots, fruits, tubers, bulbs, rhizomes, shoots, sprouts and other parts of plants. Seedlings and young plants, which are to be transplanted after germination or after emergence from soil, may also be included. These plant propagation materials may be treated prophylactically with a plant protection compound either at or before planting or transplanting.

The term "seed" embraces seeds and plant propagules of all kinds including but not limited to true seeds, seed pieces, suckers, corms, bulbs, fruit, tubers, grains, cuttings, cut shoots and the like, and means in a preferred embodiment true seeds.

In general, "pesticidally effective amount" means the amount of active ingredient needed to achieve an observable effect on growth, including the effects of necrosis, death, retardation, prevention, and removal, destruction, or otherwise diminishing the occurrence and activity of the target organism. The pesticidally effective amount can vary for the various com-pounds/compositions used in the invention. A pesticidally effective amount of the compositions will also vary according to the prevailing conditions such as desired pesticidal effect and duration, weather, target species, locus, mode of application, and the like.

In the case of soil treatment, in furrow application or of application to the pests dwelling place or nest, the quantity of active ingredient ranges from 0.0001 to 500 g per 100 m2, preferably from 0.001 to 20 g per 100 m2.

For use in treating crop plants, e.g. by foliar application, the rate of application of the active ingredients of this invention may be in the range of 0.0001 g to 4000 g per hectare, e.g. from 1 g to 2 kg per hectare or from 1 g to 750 g per hectare, desirably from 1 g to 100 g per hectare, more desirably from 10 g to 50 g per hectare, e.g., 10 to 20 g per hectare, 20 to 30 g per hectare, 30 to 40 g per hectare, or 40 to 50 g per hectare.

The compounds according to the present invention are particularly suitable for use in the treatment of seeds in order to protect the seeds from insect pests, in particular from soil-living insect pests, and the resulting seedling's roots and shoots against soil pests and foliar insects. The present invention therefore also relates to a method for the protection of seeds from insects, in particular from soil insects, and of the seedling's roots and shoots from insects, in particular from soil and foliar insects, said method comprising treating the seeds before sowing and/or after pregermination with a compound of the present invention. The protection of the seedling's roots and shoots is preferred. More preferred is the protection of seedling's shoots from piercing and sucking insects, chewing insects and nematodes.

The term "seed treatment" comprises all suitable seed treatment techniques known in the art, such as seed dressing, seed coating, seed dusting, seed soaking, seed pelleting, and in-furrow application methods. Preferably, the seed treatment application of the active compound is carried out by spraying or by dusting the seeds before sowing of the plants and before emergence of the plants.

The present invention also comprises seeds coated with or containing the active compound. The term "coated with and/or containing" generally signifies that the active ingredient is for the most part on the surface of the propagation product at the time of application, although a greater or lesser part of the ingredient may penetrate into the propagation product, depending on the method of application. When the said propagation product is (re)planted, it may absorb the active ingredient.

Suitable seed is for example seed of cereals, root crops, oil crops, vegetables, spices, ornamentals, for example seed of durum and other wheat, barley, oats, rye, maize (fodder maize and sugar maize / sweet and field corn), soybeans, oil crops, crucifers, cotton, sunflowers, bananas, rice, oilseed rape, turnip rape, sugarbeet, fodder beet, eggplants, potatoes, grass, lawn, turf, fodder grass, tomatoes, leeks, pumpkin/squash, cabbage, iceberg lettuce, pepper, cucumbers, melons, Brassica species, melons, beans, peas, garlic, onions, carrots, tuberous plants such as potatoes, sugar cane, tobacco, grapes, petunias, geranium/pelargoniums, pansies and impatiens.

In addition, the active compound may also be used for the treatment of seeds from plants, which have been modified by mutagenisis or genetic engineering, and which e.g. tolerate the action of herbicides or fungicides or insecticides. Such modified plants have been described in detail above.

Conventional seed treatment formulations include for example flowable concentrates FS, solutions LS, suspoemulsions (SE), powders for dry treatment DS, water dispersible powders for slurry treatment WS, water-soluble powders SS and emulsion ES and EC and gel formulation GF. These formulations can be applied to the seed diluted or undiluted. Application to the seeds is carried out before sowing, either directly on the seeds or after having pregerminated the latter. Preferably, the formulations are applied such that germination is not included.

The active substance concentrations in ready-to-use formulations, which may be obtained after two-to-tenfold dilution, are preferably from 0.01 to 60% by weight, more preferably from 0.1 to 40 % by weight.

In a preferred embodiment a FS formulation is used for seed treatment. Typically, a FS formulation may comprise 1-800 g/l of active ingredient, 1-200 g/l Surfactant, 0 to 200 g/l antifreezing agent, 0 to 400 g/l of binder, 0 to 200 g/l of a pigment and up to 1 liter of a solvent, preferably water.

Especially preferred FS formulations of the compounds according to the present invention for seed treatment usually comprise from 0.1 to 80% by weight (1 to 800 g/l) of the active ingredient, from 0.1 to 20 % by weight (1 to 200 g/l) of at least one surfactant, e.g. 0.05 to 5 % by weight of a wetter and from 0.5 to 15 % by weight of a dispersing agent, up to 20 % by weight, e.g. from 5 to 20 % of an anti-freeze agent, from 0 to 15 % by weight, e.g. 1 to 15 % by weight of a pigment and/or a dye, from 0 to 40 % by weight, e.g. 1 to 40 % by weight of a binder (sticker /adhesion agent), optionally up to 5 % by weight, e.g. from 0.1 to 5 % by weight of a thickener, optionally from 0.1 to 2 % of an anti-foam agent, and optionally a preservative such as a biocide, antioxidant or the like, e.g. in an amount from 0.01 to 1 % by weight and a filler/vehicle up to 100 % by weight.

In the treatment of seed, the application rates of the compounds according to the invention are generally from 0.1 g to 10 kg per 100 kg of seed, preferably from 1 g to 5 kg per 100 kg of seed, more preferably from 1 g to 1000 g per 100 kg of seed and in particular from 1 g to 200 g per 100 kg of seed, e.g. from 1 g to 100 g or from 5 g to 100 g per 100 kg of seed.

The invention therefore also relates to seed comprising a compound of the present invention, or an agriculturally useful salt thereof, as defined herein. The amount of the compound of the present invention or the agriculturally useful salt thereof will in general vary from 0.1 g to 10 kg per 100 kg of seed, preferably from 1 g to 5 kg per 100 kg of seed, in particular from 1 g to 1000 g per 100 kg of seed. For specific crops such as lettuce the rate can be higher.

The invention also relates to agrochemical compositions comprising an auxiliary and at least one compound of the present invention or a mixture thereof.

An agrochemical composition comprises a pesticidally effective amount of a compound of the present invention or a mixture thereof. The term "pesticidally effective amount" is defined below.

The compounds according to the present invention or the mixtures thereof can be converted into customary types of agro-chemical compositions, e. g. solutions, emulsions, suspensions, dusts, powders, pastes, granules, pressings, capsules, and mixtures thereof. Examples for composi-tion types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Mono-graph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Examples for suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharide powders, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylaryl-sulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethox-ylated alcohols, or of fatty acid esters. Examples of phosphates are phosphate esters. Exam-ples of carboxylates are alkyl carboxylates, and carboxylated alcohol or alkylphenol eth-oxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsitited fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are homo- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the compounds according to the present invention on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin. Suitable anti-foaming agents are silicones, long chain alcohols, and salts of fatty acids. Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinylacetates, polyvinyl alcohols, polyacrylates, biological or synthetic waxes, and cellulose ethers.

Examples for composition types and their preparation are:

i) Water-soluble concentrates (SL, LS)

10-60 wt% of a compound of formula I or the compound of formula I with enantiomeric excess of compound I-R-1 or the compound I-R-1 according to the invention and 5-15 wt% wetting agent (e.g. alcohol alkoxylates) are dissolved in water and/or in a water-soluble solvent (e.g. alcohols) up to 100 wt%. The active substance dissolves upon dilution with water.

ii) Dispersible concentrates (DC)

5-25 wt% of a compound of formula I or the compound of formula I with enantiomeric excess of compound I-R-1 or the compound I-R-1 according to the invention and 1-10 wt% dispersant (e. g. polyvinylpyrrolidone) are dissolved in up to 100 wt% organic solvent (e.g. cyclohexanone). Dilution with water gives a dispersion.

iii) Emulsifiable concentrates (EC)

15-70 wt% of a compound of formula I or the compound of formula I with enantiomeric excess of compound I-R-1 or the compound I-R-1 according to the invention and 5-10 wt% emulsifiers (e.g. calcium dodecylbenzenesulfonate and castor oil ethoxylate) are dissolved in up to 100 wt% water-insoluble organic solvent (e.g. aromatic hydrocarbon). Dilution with water gives an emulsion.

iv) Emulsions (EW, EO, ES)

5-40 wt% of a compound of formula I or the compound of formula I with enantiomeric excess of compound I-R-1 or the compound I-R-1 according to the invention and 1-10 wt% emulsifiers (e.g. calcium dodecylbenzenesulfonate and castor oil ethoxylate) are dissolved in 20-40 wt% water-insoluble organic solvent (e.g. aromatic hydrocarbon).

This mixture is introduced into up to 100 wt% water by means of an emulsifying machine and made into a homogeneous emulsion. Dilution with water gives an emulsion.

v) Suspensions (SC, OD, FS)

In an agitated ball mill, 20-60 wt% of a compound of formula I or the compound of formula I with enantiomeric excess of compound I-R-1 or the compound I-R-1 according to the invention are comminuted with addition of 2-10 wt% dispersants and wetting agents (e.g. sodium lignosulfonate and alcohol ethoxylate), 0,1-2 wt% thickener (e.g. xanthan gum) and up to 100 wt% water to give a fine active substance suspension. Dilution with water gives a stable suspension of the active sub-stance. For FS type composition up to 40 wt% binder (e.g. polyvinylalcohol) is added.

vi) Water-dispersible granules and water-soluble granules (WG, SG)

50-80 wt% of a compound of formula I or the compound of formula I with enantiomeric excess of compound I-R-1 or the compound I-R-1 according to the invention are ground finely with addition of up to 100 wt% dispersants and wetting agents (e.g. sodium lignosulfonate and alcohol ethoxylate) and prepared as water-dispersible or water-soluble granules by means of technical appliances (e. g. extrusion, spray tower, fluidized bed). Dilution with water gives a stable dispersion or solution of the active substance.

vii) Water-dispersible powders and water-soluble powders (WP, SP, WS)

50-80 wt% of a compound of formula I or the compound of formula I with enantiomeric excess of compound I-R-1 or the compound I-R-1 according to the invention are ground in a rotor-stator mill with ad-dition of 1-5 wt% dispersants (e.g. sodium lignosulfonate), 1-3 wt% wetting agents (e.g. alcohol ethoxylate) and up to 100 wt% solid carrier, e.g. silica gel. Dilution with water gives a stable dis-persion or solution of the active substance.

viii) Gel (GW, GF)

In an agitated ball mill, 5-25 wt% of a compound of formula I or the compound of formula I with enantiomeric excess of compound I-R-1 or the compound I-R-1 according to the invention are comminuted with addition of 3-10 wt% dispersants (e.g. sodium lignosulfonate), 1-5 wt% thickener (e.g. car-boxymethylcellulose) and up to 100 wt% water to give a fine suspension of the active sub-stance. Dilution with water gives a stable suspension of the active substance.

ix) Microemulsion (ME)

5-20 wt% of a compound of formula I or the compound of formula I with enantiomeric excess of compound I-R-1 or the compound I-R-1 according to the invention are added to 5-30 wt% organic solvent blend (e.g. fatty acid dimethylamide and cyclohexanone), 10-25 wt% surfactant blend (e.g. alkohol ethoxylate and arylphenol ethoxylate), and water up to 100 %. This mixture is stirred for 1 h to produce spontaneously a thermodynamically stable microemulsion.

x) Microcapsules (CS)

An oil phase comprising 5-50 wt% of a compound of formula I or the compound of formula I with enantiomeric excess of compound I-R-1 or the compound I-R-1 according to the invention, 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radi-cal initiator results in the formation of poly(meth)acrylate microcapsules. Alternatively, an oil phase comprising 5-50 wt% of a compound of formula I or the compound of formula I with enantiomeric excess of compound I-R-1 or the compound I-R-1 according to the invention, 0-40 wt% water insolu-ble organic solvent (e.g. aromatic hydrocarbon), and an isocyanate monomer (e.g. diphenylme-thene-4,4'-diisocyanatae) are dispersed into an aqueous solution of a protective colloid (e.g. polyvinyl alcohol). The addition of a polyamine (e.g. hexamethylenediamine) results in the for-mation of a polyurea microcapsule. The monomers amount to 1-10 wt%. The wt% relate to the total CS composition.

xi) Dustable powders (DP, DS)

1-10 wt% of a compound of formula I or the compound of formula I with enantiomeric excess of compound I-R-1 or the compound I-R-1 according to the invention are ground finely and mixed intimately with up to 100 wt% solid carrier, e.g. finely divided kaolin.

xii) Granules (GR, FG)

0.5-30 wt% of a compound of formula I or the compound of formula I with enantiomeric excess of compound I-R-1 or the compound I-R-1 according to the invention is ground finely and associated with up to 100 wt% solid carrier (e.g. silicate). Granulation is achieved by extrusion, spray-drying or the fluidized bed.

xiii) Ultra-low volume liquids (UL)

1-50 wt% of a compound of formula I or the compound of formula I with enantiomeric excess of compound I-R-1 or the compound I-R-1 according to the invention are dissolved in up to 100 wt% organic solvent, e.g. aromatic hydrocarbon.

The compositions types i) to xi) may optionally comprise further auxiliaries, such as 0.1-1 wt% bactericides, 5-15 wt% anti-freezing agents, 0.1-1 wt% anti-foaming agents, and 0.1-1 wt% colorants.

The agrochemical compositions generally comprise between 0.01 and 95%, preferably between 0.1 and 90%,

and most preferably between 0.5 and 75%, by weight of active sub-stance. The active substances are employed in a purity of from 90% to 100%, preferably from 95% to 100% (according to NMR spectrum).

Various types of oils, wetters, adjuvants, fertilizer, or micronutrients, and other pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage de-vice, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a kit or parts of a binary or ternary mixture may be mixed by the user himself in a spray tank and further auxiliaries may be added, if appropriate.

In a further embodiment, either individual components of the composition according to the invention or partially premixed components, e. g. components comprising compounds according to the pre-sent invention and/or mixing partners as defined below, may be mixed by the user in a spray tank and further auxiliaries and additives may be added, if appropriate.

In a further embodiment, either individual components of the composition according to the invention or partially premixed components, e. g. components comprising compounds according to the present invention and/or mixing partners as defined above, can be applied jointly (e.g. after tank mix) or consecutively.

Examples:

The present invention is now illustrated in further details by the following example, without imposing any limitation thereto.

Test compound I-R-1 used in below biological examples is in 95% enantiomeric excess unless otherwise specified.

Abbreviations:

DAP=Days After Plantation
DAA=Days After Application
DAT=Days After Treatment

Example 1

Resistant/susceptible study of plant hoppers with seedling treatment (ST) method in lab

Rice seedlings planted on urethane sponge were sprayed with an air brush (water volume: 500μl, 2 replicates, temperature: 25°C,). Treated plants were infested with 10 second instar nymphs of *Nilaparvata lugens* (NILALU), *Laodelphax striatellus* (CALGMA) and *Sogatella furcifera* (SOGAFU) at 0 days after application (DAA). Number of alive nymphs were counted at 5DAA and percent control value was calculated by SCHNEIDER-ORELLI formula: corrected percent mortality=100 X [(percent mortality in treatment - percent mortality in control)/(100- percent mortality in control)]. The resistance ratio of *N. lugens* to imidacloprid is over 100, and resistance ratio of *L. striatella* to imidacloprid is over 10.

Table 1: Efficacy of compound I-R-1 against resistant and susceptible NILALU and CALGMA through seedling spray

| Treatment | Concentration (ppm) | NILALU (IMI-S) | NILALU (IMI-R-1) | CALGMA (IMI-S) | CALGMA (IMI-R-1) |
|---|---|---|---|---|---|
| Compound I-R-1 | 1 | 100 | 100 | 100 | 100 |
| Imidacloprid (IMI) | 1 | 100 | - | 100 | 0 |
| *IMI-S and IMI-R: stand for imidacloprid susceptible and resistant colony | | | | | |

Summary: For susceptible strains (NILALU and CALGMA), both compounds I-R-1 and imidacloprid displayed excellent activity at 1 ppm. Dramatic difference in activity against resistant strains (both NILALU and CALGMA) existed between compound I-R-1 and imidacloprid. For example, for IMI-R NILALU, compound I-R-1 showed excellent activity at 1 ppm. In contrast, Imidacloprid displayed no activity. Similar phenomenon existed in IMI-R CALGMA. These data fully suggest that there is no cross resistance between compound I-R-1 and imidacloprid.

Example 2

Resistant/susceptible study of plant hoppers by drench application in lab

Freshly germinated rice seedlings were transplanted into centrifuge tubes containing 15ml soil and 5.5ml water. They were kept under 25°C (16L-8D) for 3 days. Then diluted chemical solutions were drenched on the soil by micro pipette. 0 or 7DAA, soil surface was covered with 5ml of 2% agar (45 °C). After agar became solid, 10 plant hoppers (2$^{nd}$ instar nymph) were released into a tube. And they were kept in the CTR 25°C, 16L-8D condition. Number of alive nymphs were counted at 5DAA and percent control value was calculated by SCHNEIDER-ORELLI formula: corrected percent mortality=100 X [(percent mortality in treatment - percent mortality in control)/(100- percent mortality in control)]. The resistance ratio of *N. lugens* to imidacloprid is over 100, and resistance ratio of *L. striatella* to imidacloprid is over 10.

Table 2: Efficacy of compound I-R-1 against resistant and susceptible NILALU and CALGMA through soil drench

| Treatment | Concentration (mg/plant) | NILALU (IMI-R-1) | | CALGMA (IMI-R-1) | |
|---|---|---|---|---|---|
| | | 0 DAA | 7 DAA | 0 DAA | 7 DAA |
| Compound I-R-1 | 0.005 | 100 | 100 | 100 | 100 |
| Imidacloprid | 0.05 | 21 | 79 | 47 | 94 |

Summary: For IMI-R NILALU, compound I-R-1 at 0.005 mg per seedling could show 100% control at 0 DAA and 7 DAA. However, Imidacloprid could not show such activity. For IMI-R CALGMA, imidacloprid performance was at least 10-fold lower. This experiment also suggest that there is no cross resistance between compound I-R-1 and imidacloprid.

Example 3

Efficacy of compound I-R-1 against spinosad-resistant western flower thrips by Leaf dip assay Technical grade active ingredient (TGAI) was dissolved in acetone to prepare a stock solution (2000 ppm). Application solutions (10 and 100 ppm) were made from the stock solution with 0.05% Tween 20 solution. Leaf discs with 15 mm diameter were cut with a clean puncher from 1-2 true leaf stage kidney bean plants. Leaf discs were dipped into the corresponding application solution for 2-5 seconds, and then placed face-up to dry. After dry, a single disc was placed into the corresponding vials and ready for thrips infestation. Ten adult thrips were aspirated with a 1000 microliter filter pipette tip through vacuum from an air compressor and transferred into the corresponding vial. The vials infested with thrips were sealed immediately with the caps. The vials were placed upright in a rack and held in an environmental chamber at 23°C and 16 L : 8 D cycle. Two replicates were set up for each treatment. At 2 DAT, alive thrips and feeding damage were recoded. Percent mortality was calculated as follows: percent mortality = [(dead thrips post treatment)/(alive + dead thrips post treatment) X 100. Abbott's correction for mortality in the untreated or solvent control can be performed when necessary. Resistant ratio of western flower thrips to spinosad is over 300.

Table 3: Efficacy of compound I-R-1 against spinosad-resistant western flower thrips by leaf dip assay

| Treatment | Concentration (ppm) | Abbott corrected mortality (2 DAT) | Percent feeding damage suppression (2 DAT) |
|---|---|---|---|
| Control | 0 | 0 | 0 |
| Compound I-R-1 | 100 | 15 | 100 |
| | 10 | 10 | 74 |
| Spinosad | 300 | 96 | 100 |
| | 30 | 41 | 89 |

(continued)

| Treatment | Concentration (ppm) | Abbott corrected mortality (2 DAT) | Percent feeding damage suppression (2 DAT) |
|---|---|---|---|
| Imidacloprid | 100 | 60 | 86 |

Summary: Because the resistance ratio of this western flower thrips strain to spinosad is over 300, all treatments in this experiment except for spinosad at 300 ppm did not show good mortality. However, feeding damage was opposite, i.e., all treatments displayed great to excellent feeding damage suppression. For compound I-R-1, great feeding damage suppression was observed even down to 10 ppm.

Example 4

Efficacy of compound I-R-1 against spinosad-resistant western flower thrips by foliar spray Technical grade active ingredient (TGAI) was dissolved in acetone to prepare a stock solution (2000 ppm). Application solutions (10, 30 and 100 ppm) were made from the stock solution with 0.05% Tween 20 solution. Ten milliliters of 1% agar was poured into 50 mL plastic tubes. Leaf discs with 23 mm diameter were cut with a clean puncher from 1-2 true leaf stage kidney bean plants. After agar became solid. A single disc was put the top of agar in each tube and face-up. One milliliter of Agar was added in each tube on the top of leaf disc. One hundred microliter of application solution was sprayed for each tube by airbrush. Ten adult thrips were aspirated with a 1000 microliter filter pipette tip through vacuum from an air compressor and transferred into the corresponding vial. The vials infested with thrips were sealed immediately with the caps. The vials were placed upright in a rack and held in an environmental chamber at 23-25°C and 16 L : 8 D cycle. Two replicates were set up for each treatment. At 2 DAT and 7 DAT, alive thrips and feeding damage were recoded. Percent mortality was calculated as follows: percent mortality = [(dead thrips post treatment)/(alive + dead thrips post treatment) X 100. Abbott's correction for mortality in the untreated or solvent control can be performed when necessary. Resistant ratio of western flower thrips to spinosad is over 300.

Table 4: Efficacy of compound I-R-1 against spinosad-resistant western flower thrips by foliar spray

| Treatment | Concentration (ppm) | Abbott corrected mortality (2DAT) | Percent feeding damage suppression (2 DAT) | Abbott corrected mortality (7DAT) | Percent feeding damage suppression (7 DAT) |
|---|---|---|---|---|---|
| Control | 0 | - | - | - | - |
| Compound I-R-1 | 100 | 0 | 100 | 89 | 95 |
| spinosad | 100 | 28 | 86 | 67 | 10 |

Summary: Because the resistance ratio of this western flower thrips strain to spinosad is over 300, spinosad did not show good mortality even at 100 ppm & 7DAT. Although good feeding damage suppression was observed at 100 ppm @ 2DAT, but this activity disappeared at 7DAT. In contrast, compound I-R-1 displayed great to excellent feeding damage suppression, and mortality increased from 2DAT to 7DAT, reaching over 80% mortality. These data suggested that there was no cross resistance between spinosad and compound I-R-1, and compound I-R-1 is a promising insecticide for control spinosad-resistant flower thrips.

Example-4:

Technical grade active ingredients were dissolved in acetone and added to 1:1 powdered sugar / powdered milk to obtain the desired concentrations, the resulting mixtures were allowed to dry overnight in the chemical hood. The bait was placed into test containers (16 oz clear plastic tubs with lids). Ten house flies, *Musca domestica,* (3-4 day old) were infested for each container. Four replicates were carried out for each treatment. Water was provided via cotton plugged micro-centrifuge tube in each testing container. Two house fly strains were used to compare the resistance status of the tested compounds: BI susceptible strain from Beneficial Insectary, Redding California, has been in laboratory without any pesticide exposure. LPR strain is a pyrethroid-resistant strain. At 4, 24, 48 h after infestation, observation was performed to record the individuals that lacked coordinated movement (i.e., ataxic) plus mortality (i.e., no body movement when disturbed). Data were analyzed via ANOVA and means were compared by Tukey's HSD post-hoc test

(JMP) at $\alpha$ = 0.05.

Table 1: Efficacy of alpha-cypermethrin against susceptible and pyrethroid-resistant LPR strains

| Alpha-cypermethrin treated bait | | Mean % | | | | |
|---|---|---|---|---|---|---|
| | | Ataxia + mortality | | | Mortality | |
| Strain | ppm | 4 h | 24h | 48h | 24h | 48h |
| Susceptible | 1 | 73.8 c | 40.4 b | 40.8 b | 7.1 c | 22.1 cd |
| LPR | 1 | 0.0 d | 0.0 c | 0.0 c | 0.0 c | 0.0 e |
| Susceptible | 10 | 97.9 a | 100.0 a | 100.0 a | 45.4 b | 68.3 b |
| LPR | 10 | 0.0 d | 0.0 c | 0.0 c | 0.0 c | 0.0 e |
| Susceptible | 100 | 100.0 a | 100.0 a | 100.0 a | 80.7 a | 92.7 a |
| LPR | 100 | 82.1 bc | 71.7 a | 49.0 b | 14.5 c | 40.1 c |
| LPR | 1000 | 95.0 ab | 100.0 a | 100.0 a | 58.6 b | 85.2 ab |
| Susceptible | Untreated | 0.0 d | 0.0 c | 0.0 c | 0.0 c | 0.0 e |
| LPR | Untreated | 0.0 d | 0.0 c | 10.4 c | 0.0 c | 10.4 de |

Table 2: Efficacy of compound I-R-1 against susceptible and pyrethroid-resistant LPR strains

| Compound I-R-1 treated bait | | Mean % | | | | |
|---|---|---|---|---|---|---|
| | | Ataxia + mortality | | | Mortality | |
| Strain | ppm | 4 h | 24h | 48h | 24h | 48h |
| Susceptible | 0.1 | 0.0 b | 0.0 c | 0.0 d | 0.0 c | 0.0 d |
| LPR | 0.1 | 0.0 b | 2.5 c | 7.5 d | 2.5 c | 7.5 d |
| Susceptible | 1 | 0.0 b | 0.0 c | 0.0 d | 0.0 c | 0.0 d |
| LPR | 1 | 0.0 b | 0.0 c | 2.5 d | 0.0 c | 2.5 d |
| Susceptible | 10 | 0.0 b | 0.0 c | 2.3 d | 0.0 c | 2.3 d |
| LPR | 10 | 0.0 b | 0.0 c | 11.8 d | 0.0 c | 11.8 cd |
| Susceptible | 100 | 9.8 b | 34.1 b | 74.8 bc | 5.1 c | 37.8 bc |
| LPR | 100 | 5 b | 24.5 b | 58.4 c | 12.0 bc | 56.1 ab |
| Susceptible | 1000 | 95.5 a | 90.7 a | 93.0 ab | 27.7 b | 67.5 a |
| LPR | 1000 | 92.7 a | 100.0 a | 100.0 a | 84.9 a | 77.4 a |
| Susceptible | Untreated | 0.0 b | 0.0 c | 0.0 d | 0.0 c | 0.0 d |
| LPR | Untreated | 0.0 b | 0.0 c | 10.4 d | 0.0 c | 10.4 cd |

Summary

Data (Table 1) suggested that there was a significant difference in the sensitivity to alpha-cypermethrin between susceptible and pyrethroid-resistant house fly strains. According to 24 hr mortality, 10 ppm and 1000 ppm would produce approximately 50% mortality for susceptible and resistant strains, respectively (45.4b vs 58.6 b), implying that resistance ratio of alpha-cypermethrin is close to 100-fold. In contrast, data (Table 2) suggested that the sensitivity of house fly to compound I-R-1 was very similar between the susceptible and pyrethroid-resistant strains. In a summary, there is no cross-resistance between alpha-cypermethrin and compound I-R-1 for this pyrethroid-resistant house fly.

Examples of virus transmission control:

Example 5

Suppression of barley yellow dwarf virus (BYDV) through control of bird cherry-oat aphid in laboratory seed treatment assay (Indicative study)

Seed coating: Amount of 330 mg of technical active ingredient of the test compound was dissolved in 5 ml acetone. Dilutions were prepared according to needs. Lots of 10 g barley seeds (variety: Canberra, about 170 seeds) were then placed in 50ml glass vials and soaked in 110% of the necessary volume of test dilution, considering a loss of compound from sticking to the glass vial wall. The seeds were then tumbled inside the glass vial using pressured air until the acetone was evaporated. To meet the test needs, 30 barley seeds should include an amount of technical active ingredient as follows: 0.00095, 0.0026, 0.0069, 0.0186, 0.0499, 0.1340, 0.3596, 0.9649, 2.5888, 6.9459, respectively.

Test setup: The experiment was set-up according to a randomized block design. Thirty barley seeds (1.75g) were sown into small plastic flowerpots (8 cm height, 9 cm diameter) containing 50 g of standard soil (Einheitserde Typ: VM). Twenty ml of water was given to each pot directly after sowing. Four replicates were set up for each treatment, 4 non-treated and non-infested, 4 non-treated and infested, 4 solvent blank and infested, and on ekit positive control were also set up for this experiment.

The pots were placed on saucers on a table in the growth chamber (23±3°C, 50±10%RH). In addition, to prevent aphid migration, each pot was placed in an acryl glass cylinder covered with insect screen (height: 35 cm, diameter: 13 cm) and placed in the lab under artificial light. The plants were irrigated with tap water. During irrigation, it was assured that no water was leaking out of the pots and the Petri dishes.

BYDV-infested BCOA: Bird cherry-oat aphids (*Rhopalosiphum padi*) infected with Barley Yellow Dwarf Virus (BYDV) PAV were obtained from Katz Biotech, Baruth, Germany.

Infestation and irrigation: When the plants were five days old (BBCH12), the pots were infested with BYDV viruliferous aphids and then covered with the plastic cylinders. Two spatula tips of aphids (n~100) were placed on pieces of wax paper that was placed on the soil surface in the flower pots, to prevent direct contact of the test insects with the pot soil.

Preparation of microtiter plates: Two weeks after planting, single leaves were removed from each pot, and 15 leaf disks were punched out of the tip of five different leaves. Five disks were transferred into three 96-well microtiter plates respectively. Finally, each treatment-dose combination was represented 20 times (5 x 4 replicates) in three plates. Aphids from the aphid colony were added to each well. The plates were covered with an air permeable plastic foil. The plates were incubated in sets of five at three different temperatures (13°C, 18°C and 23°C), for four days. Compound efficacy was then assessed manually using a binocular microscope. The number of life aphids was scored from 0 to >9. Data from incubation at all three temperatures were analyzed by fitting Linear Mixed-Effects Models using package Ime4 in R.

Aphid population estimation: On day 14 after the first infestation, aphid population densities were scored on the barley plants and ranked (3 = many aphids; 2 = average aphid density; 1 = few aphids; 0 = no aphids). The data were analyzed fitting Linear Mixed-Effects Models using package Ime4 in R.

ELISA test: Fifteen days after the first infestation, leaves were cut from the potted plants using a sterile scalpel, aphids were removed with a paint brush, and the leaves stored in an individual small plastic bag. The leaf samples were later used for the ELISA test. A BYDV - PAV test kit was obtained from Bioreba, Reinach, Switzerland. The leaf samples from the barley plants were extracted and treated using the materials and according to instructions provided with the test kit (www.bioreba.ch). For the ELISA test, leaves from each pot were treated separately, resulting in four replicates per treatment and dilution. For the test, three identical plates were prepared. In addition to plant material from the differently treated plants, a BYDV positive control (one well) provided with the ELISA test kit, was added to the plates. At the end of each ELISA test preparation the 96-well microtiter plates containing the sample extracts were assessed measuring optical absorbance (405 nm), after 120 minutes of incubation, using a plate reader (Spectramax M2e, Molecular Devices Inc., Sunnyvale, CA, US). Optical absorbance readings from the different microtiter plates were analyzed fitting Linear Mixed-Effects Models using package Ime4 in R.

Summary: Data from Figures 1-2 indicate a good dose-response relationship was observed for both BCOA control and BYDV infection at 14 days after infestation, implying that compound I-R-1 could suppress the BCOA population growth, therefore, inhibit the BYDV transmission. For BCOA, there was no control when rate was lower than 0.13 mg ai/pot. For BYDV infection, BYDV protein was measured with ELISA method (Figure 2). The absorbance reading (concentration of BYDV protein in the plant extracts) was very low for the non-infested control plant (<0.17), representing a non-specific background reaction of the substrate. Fifteen days after infestation the average absorbance reading in the non-treated infested plants was 1.6. Data were analyzed fitting Linear Mixed-Effects Models using package Ime4 in R. The absorbance readings declined in a dose dependent way ($p<0.05$) in the plants treated as seeds with compound I-R-1. This promising information facilitated field trials.

Example 6

Suppression of barley yellow dwarf virus (BYDV) through control of bird cherry-oat aphid in barley seed-treatment field trial

Winter barley seeds were treated with a corresponding rate (g ai/100 kg seeds) of compound I-R-1. Plot size was at least 25 $m^2$ (at least 2.5 m wide). Four replicates were set up for each treatment. Randomized bloc design was taken for this field trails. Aphids are counted on at least 5 random groups of 10 plants (in spring on 5 groups of 10 tillers of different plants) per plot, or the percentage of plants on which aphids are present is determined.
BYDV infection: BYDV infection was recorded at 32 days after planting. Take 25 randomly chosen plants in the check and then: if number of infected plants >20%, take only 25 plants for each plot; if number of infected plants is between 10% and 20%, take only 50 plants for each plot, if number of infected plants <10%, take 100 plants for each plot. Symptoms of BYDV infection were also recorded with pictures. Data were treated statistically.

Table 6: Efficacy of compound I-R-1 against bird cherry-oat aphids on winter barley in a seed treatment field trial.

| Treatment | Rate (g ai/100 kg seeds) | % BCOA control (29DAP) | % BCOA control (52 DAP) |
|---|---|---|---|
| Compound I-R-1 | 75 | 96.74a | 97.97a |
| | 150 | 92.39a | 100.00a |

Summary: At 29 and 52 DAP, compound I-R-1 demonstrated an excellent BCOA control at a rate of 150 g ai /100 kg seeds showed the lowest percent BYDV infection.
Conclusion: Examples 5-6 fully demonstrated that control of virus-carrying insects could effectively inhibit the transmission of viruses from laboratory to field trials.

**Claims**

1. A method of controlling insects, which are resistant to an insecticide, which method comprises applying to said insecticide resistant insects compound of formula (I):

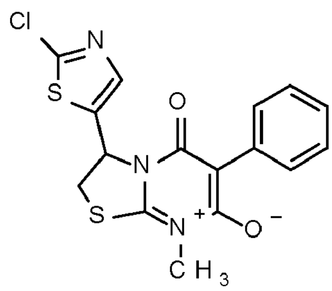

(I)

2. The method according to claim 1, wherein the compound of formula I is non-racemic.

3. The method according to claim 1 or 2, wherein the compound of formula I is with enantiomeric excess of compound I-R-1.

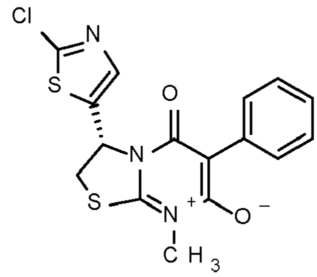

(I-R-1)

**4.** The method according to any one of claims 1 to 3 wherein the compound of formula I is with at least 90% enantiomeric excess of compound I-R-1.

**5.** The method according to any one of claims 1 to 4, wherein the compound of formula I is compound I-R-1.

**6.** A method of protecting a crop of useful plants susceptible to and/or under attack by insects, which are resistant to an insecticide, which method comprises applying to said crop, treating a plant propagation material of said crop with, and/or applying to said insecticide resistant insects, a compound of formula I as defined in any one of claims 1 to 5.

**7.** A method of controlling resistance to one or more insecticides in insects, which comprises alternately applying a compound of formula I as defined in any one of claims 1 to 5, and the insecticide, towards which the insects are resistant, to said insects or to a crop of useful plants susceptible to and/or under attack from said insects.

**8.** The method according to any one of claims 1 to 7, which method comprises applying to the propagation material of said crop an insecticide followed by the foliar application of a compound of the formula (I), as defined in any one of claims 1 to 5, beginning with the 3-to 5-leaf crop stage.

**9.** The method according to any one of claims 1 to 8, wherein the resistant insects developed resistance against cyclodienes, organophosphates, carbamates, formamidines, pyrethroids, spinosyns, neonicotinoids, insect growth regulators or antifeedants.

**10.** The method according to any one of claims 1 to 9, wherein the resistant insects developed resistance against spinosyns and/or neonicotinoids.

**11.** The method according to any one of claims 1 to 10, in which the resistant insects are selected from the group of Hemipterea, Lepidoptera, Coleoptera, Diptera, Thysanoptera and Homoptera.

**12.** The method according to any one of claims 1 to 11, in which the resistant insects are selected from *Aphis gossypii, Acarus siro, Bactrocera zonata, Bemisia argentifolii, Bemisia tabaci, Blattella germanica, Brevicoryne brassicae, Cimex lectularius, Culex quinquefasciatus, Cydia pomonella, Deraeocoris brevis, Diaphorina citri, Frankliniella occidentalis, Hel opeltis theivora, Kampimodromus aberrans, Laodelphax striatellus, Leptinotarsa decemlineata, Musca domestica, Myzus persicae, Nilaparvata lugens, Oxycarenus hyalinipennis, Phenacoccus solenopsis, Phorodon humuli, Plutella xylostella, Propylaea japonica, Spodoptera litura, Sogatella furcifera, Thrips tabaci, and Trialeurodes vaporariorum.*

**13.** Use of a compound compound of formula I as defined in any one of claims 1 to 5 in a method according to any one of claims 1 to 12.

**14.** Use of the compound of formula I as defined in any one of claims 1 to 5 for reducing virus transmission from insect vectors to plants.

**15.** The use according to claim 14, wherein the compound of formula I or the compound of formula I as defined in any one of claims 1 to 5 is applied to fields of non-infected plants.

**16.** The use according to claim 14, wherein the compound of formula I as defined in any one of claims 1 to 5 is applied to fields comprising virus-infected and non-infected plants.

**17.** The use according to any one of claim 14 to 16, wherein the compound of formula I is applied in combination with an adjuvant, preferably in combination with an oil adjuvant or a surfactant.

**18.** The use according to any one of claim 14 to 17, wherein the compound of formula I is applied to the foliage of the plants, preferably in an amount of from 1 g to 100 g per hectare, more preferably in an amount of from 10 g to 50 g per hectare.

**19.** The use according to any one of claim 14 to 17, wherein the compound of formula I is applied to the seeds of the plant, preferably in an amount of from 1 g to 200 g per 100 kg seed, preferably from 5 g to 100 kg per 100 kg of seed.

**20.** The use according to any one of claims 14 to 19, wherein the insect vector, is selected from the group consisting of aphids, whiteflies, leaf hoppers, thrips, beetles, weevils, nematodes, and mites, and is preferably selected from the group consisting of aphids and whiteflies.

**21.** The use according to any one of claims 14 to 20, wherein the virus is selected from the families *Luteoviridae, Geminiviridae, Nanoviridae, Bunyaviridae, Rhabdoviridae, Reoviridae,* or *Tymoviridae,* and is preferably selected from the *Polerovirus* genus of the *Luteoviridae* family or from the *Begomovirus* genus of the *Geminiviridae* family.

**22.** The use according to any one of claims 14 to 21, wherein

(i) the insect vector is an aphid, and the virus is selected from the *Luteoviridae* family, in particular from the *Polerovirus* genus, or

wherein

(ii) the insect vector is a whitefly, and the virus is selected from the *Geminiviridae* family, in particular from the *Begomovirus* genus.

**23.** The use according to any one of claims 14 to 22, wherein the plants are selected from the group consisting of cereals, beets, fruits, leguminous plants, oil plants, cucurbits, fiber plants, citrus fruits, vegetables, lauraceous plants, energy and raw material plants, tobacco, nuts, pistachios, coffee, tea, bananas, vines, hop, sweet leaf, natural rubber plants or ornamental and forestry plants, eucalyptus, turf, lawn, and grass such as grass for animal feed or ornamental uses.

**24.** The method according to any one of claims 1 to 12 or the use according to any one of claims 13 to 23, wherein the compound of formula I is applied in combination with at least one further pesticidally active compound selected from insecticides or fungicides.

**25.** A method for reducing virus transmission from insect vectors to plants, which method comprises applying at least one pesticidally active compound of formula I as defined in any one of claims 1 to 5, to the crops, plants, plant propagation materials, such as seeds, or soil or water, in which the plants are growing.

**26.** The method according to claim 25, wherein the wherein the compound of formula I is applied to fields of non-infected plants or to fields comprising virus-infected and non-infected plants.

**27.** The method according to claim 25 or 26, wherein the compound of formula I is applied in combination with an adjuvant, preferably in combination with an oil adjuvant or a surfactant.

**28.** The method according to any one of claims 25 to 27, wherein the compound of formula I is applied to the foliage of the plants, preferably in an amount of from 1 g to 100 g per hectare, more preferably in an amount of from 10 g to 50 g per hectare, or to the seeds of the plant, preferably in an amount of from 1 g to 200 g per 100 kg seed, preferably from 5 g to 100 kg per 100 kg of seed.

**29.** The method according to any one of claims 25 to 28, wherein the insect vector is selected from the group consisting of aphids, whiteflies, leaf hoppers, thrips, beetles, weevils, nematodes, and mites, and is preferably selected from the group consisting of aphids and whiteflies, and/or
wherein the virus is selected from the families *Luteoviridae, Geminiviridae, Nanoviridae, Bunyaviridae, Rhabdoviridae, Reoviridae,* or *Tymoviridae,* and is preferably selected from the *Polerovirus* genus of the *Luteoviridae* family

or from the *Begomovirus* genus of the *Geminiviridae* family, and/or
wherein the crops or plants are selected from the group consisting of cereals, beets, fruits, leguminous plants, oil plants, cucurbits, fiber plants, citrus fruits, vegetables, lauraceous plants, energy and raw material plants, tobacco, nuts, pistachios, coffee, tea, bananas, barely, vines, hop, sweet leaf, natural rubber plants or ornamental and forestry plants, eucalyptus, turf, lawn, and grass such as grass for animal feed or ornamental uses.

**30.** The method according to any one of claims 25 to 29, wherein the insect vector is resistant to insecticides selected from the classes of carbamates, organophosphates, pyrethroids, neonicotinoids and feeding blockers and any insecticidally active compound having the same mode of action, in particular to pymetrozine or neonicotinoid and/or wherein the insect vector is resistant to an insecticidal trait of a plant, which has been modified by mutagenesis or genetic engineering.

**31.** The method according to any one of claims 25 to 30, wherein the compound of formula I is applied to insect vector in combination with at least one further pesticidally active compound.

Figure 1: Ranked aphid density (0 = no aphids, 100 = high aphid density) on barley plants through seed treatment with compound I-R-1 at different doses per pot (30 seeds) at 14 days after 1st infestation.

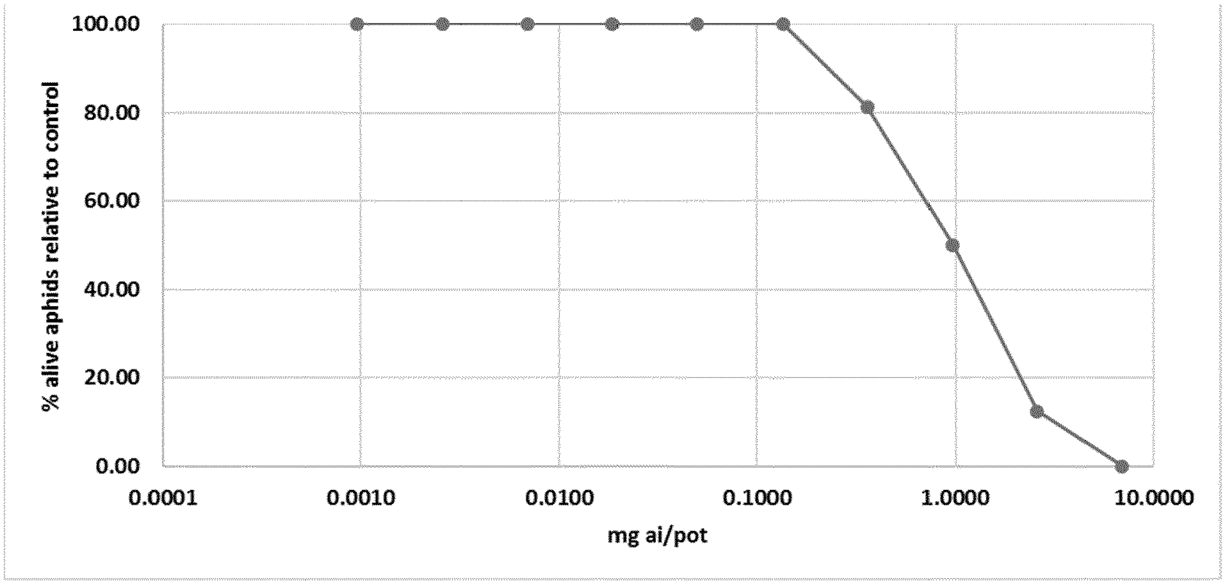


Figure 2: Average absorbance (BYDV protein concentration) in an ELISA test of extracts of plants treated as seed with different amounts per pot (30 seeds) of compound I-R-1 at 14 days after infestation with aphids

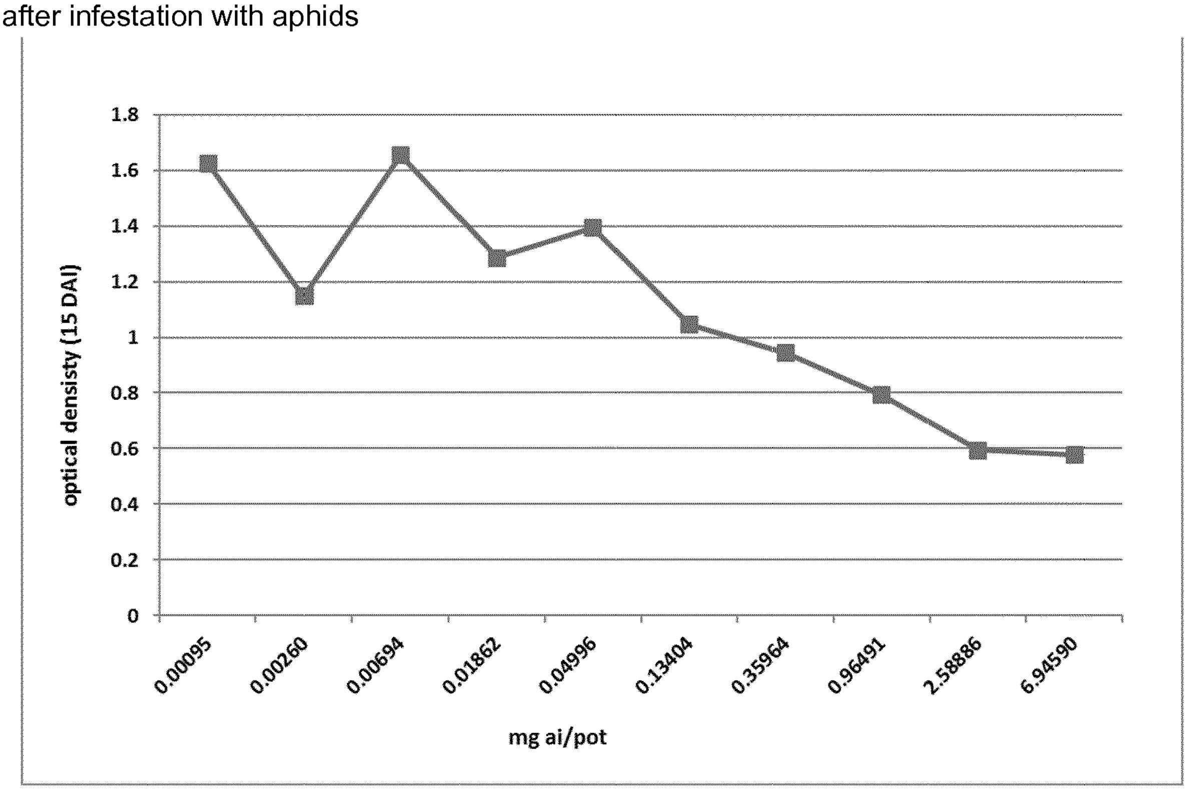

Europäisches Patentamt
European Patent Office
Office européen des brevets

# EUROPEAN SEARCH REPORT

Application Number
EP 18 19 7451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2018/177970 A1 (BASF SE [DE]) 4 October 2018 (2018-10-04)<br>* claims 6-17 *<br>* compounds I-1 *<br>* claim 17 *<br>* examples *<br>* page 49, lines 29-34 *<br>* page 49, line 43 - page 50, line 6 *<br>----- | 1-7, 11-13,24 | INV.<br>A01N43/90<br>A01N25/00<br>A01P7/00 |
| X,D<br><br>Y | WO 2014/167084 A1 (BASF SE [DE]) 16 October 2014 (2014-10-16)<br>* table 12; compounds III-12 *<br>* page 90; compounds C-38 *<br>* page 43, line 29 - page 46, line 33 *<br>* paragraph [0324] *<br>----- | 1-13,24<br><br>1-13,24 | |
| A | WO 2016/055431 A1 (BASF SE [DE]) 14 April 2016 (2016-04-14)<br>* the whole document *<br>----- | 1-13,24 | |
| Y | Graeme Murphy: "Resistance Management - Pesticide Rotation",<br>,<br>13 October 2007 (2007-10-13), pages 1-4, XP055527364,<br>Ontario [CA]<br>Retrieved from the Internet:<br>URL:https://web.archive.org/web/20071013135858/http://omafra.gov.on.ca/english/crops/hort/news/grower/2005/12gn05a2.htm<br>[retrieved on 2018-11-27]<br>* the whole document *<br>-----<br>-/-- | 1-13,24 | TECHNICAL FIELDS SEARCHED (IPC)<br>A01N |

~~The present search report has been drawn up for all claims~~

1

| Place of search | Date of completion of the search | Examiner |
|---|---|---|
| Munich | 27 November 2018 | Galley, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 18 19 7451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JIAN-ZHOU ZHAO ET AL: "Testing insecticide resistance management strategies: mosaic versus rotations", PEST MANAGEMENT SCIENCE, vol. 66, no. 10, 15 June 2010 (2010-06-15), pages 1101-1105, XP055527440, BOGNOR REGIS; GB ISSN: 1526-498X, DOI: 10.1002/ps.1985 * the whole document * ----- | 1-13,24 | |

TECHNICAL FIELDS SEARCHED (IPC)

~~The present search report has been drawn up for all claims~~

1

| Place of search | Date of completion of the search | Examiner |
|---|---|---|
| Munich | 27 November 2018 | Galley, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number

EP 18 19 7451

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-13(completely); 24(partially)

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION
# SHEET B

Application Number
EP 18 19 7451

The Search Division considers that the present European patent application does not comply with the requirements of unity of invention and relates to several inventions or groups of inventions, namely:

1. claims: 1-13(completely); 24(partially)

A method of controlling insects, which are resistant to an insecticide, which method comprises applying to said insecticide resistant insects compound of formula (I). A method of controlling resistance to one or more insecticides in insects, which comprises alternately applying a compound of formula I, and the insecticide, towards which the insects are resistant, to said insects or to a crop of useful plants susceptible to and/or under attack from said insects. Use of a compound compound of formula I as defined above. The method according to above, wherein the compound of formula I is applied in combination with at least one further pesticidally active compound selected from insecticides or fungicides.

---

2. claims: 14-23, 25-31(completely); 24(partially)

Use of the compound of formula I for reducing virus transmission from insect vectors to plants. A method for reducing virus transmission from insect vectors to plants, which method comprises applying at least one pesticidally active compound of formula I, to the crops, plants, plant propagation materials, such as seeds, or soil or water, in which the plants are growing. The use as above to 23, wherein the compound of formula I is applied in combination with at least one further pesticidally active compound selected from insecticides or fungicides.

---

## ANNEX TO THE EUROPEAN SEARCH REPORT ON EUROPEAN PATENT APPLICATION NO. EP 18 19 7451

This annex lists the patent family members relating to the patent documents cited in the above-mentioned European search report. The members are as contained in the European Patent Office EDP file on
The European Patent Office is in no way liable for these particulars which are merely given for the purpose of information.

27-11-2018

| Patent document cited in search report | Publication date | Patent family member(s) | Publication date |
|---|---|---|---|
| WO 2018177970 A1 | 04-10-2018 | NONE | |
| WO 2014167084 A1 | 16-10-2014 | AR 096022 A1 | 02-12-2015 |
| | | AU 2014253086 A1 | 22-10-2015 |
| | | BR 112015021863 A2 | 18-07-2017 |
| | | CA 2901559 A1 | 16-10-2014 |
| | | CL 2015003001 A1 | 22-04-2016 |
| | | CN 105121441 A | 02-12-2015 |
| | | CR 20150610 A | 12-04-2016 |
| | | EP 2984089 A1 | 17-02-2016 |
| | | JP 6449850 B2 | 09-01-2019 |
| | | JP 2016521264 A | 21-07-2016 |
| | | KR 20150142025 A | 21-12-2015 |
| | | UA 115904 C2 | 10-01-2018 |
| | | US 2016058009 A1 | 03-03-2016 |
| | | US 2018007905 A1 | 11-01-2018 |
| | | WO 2014167084 A1 | 16-10-2014 |
| WO 2016055431 A1 | 14-04-2016 | BR 112017005140 A2 | 23-01-2018 |
| | | CN 106795178 A | 31-05-2017 |
| | | EP 3204390 A1 | 16-08-2017 |
| | | US 2017295791 A1 | 19-10-2017 |
| | | WO 2016055431 A1 | 14-04-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011134819 A
- WO 2010078899 A
- WO 2014167084 A
- WO 2009099929 A, Holyoke
- US 6353006 B, Brian R. Dixon
- EP 237227A1 A
- EP 2011394A1 A
- DD 100135
- WO 2008020998 A
- WO 2011134876 A
- WO 2014079821 A
- WO 20120350015 A
- WO 2010069266 A
- WO 2011069456 A
- CN 103814937
- CN 105367557
- CN 105481839
- WO 2013003977 A
- WO 2007101369 A
- CN 10171577
- CN 102126994
- WO 2014191271 A
- WO 2007101540 A
- WO 2005077934 A
- WO 2007043677 A
- WO 2007006670 A
- WO 2013024009 A
- WO 2013024010 A
- WO 2011085575 A
- WO 2008134969 A
- US 2011046186 A
- WO 2012034403 A
- WO 2012034472 A
- WO 2006089633 A
- WO 2008067911 A
- WO 2006043635 A
- WO 2009124707 A
- WO 2012029672 A
- WO 2013055584 A
- WO 2013050317 A
- WO 2014126208 A
- WO 2010060379 A
- WO 2010018714 A
- WO 2010127926 A
- WO 2010006713 A
- WO 2012000896 A
- WO 2010129497 A
- WO 2010034737 A
- WO 2012084670 A
- WO 2012143317 A
- WO 2015055497 A
- WO 2015038503 A
- US 20140213448 A
- WO 2014036056 A
- WO 2014090918 A
- EP 2910126 A
- WO 2015059039 A
- WO 2015190316 A
- WO 2013050302 A
- WO 2012126766 A
- WO 2011105506 A
- WO 2016104516 A
- WO 2016174049 A
- WO 2017104592 A
- CN 101333213
- WO 20103350 A
- WO 201S125S20 A
- EP 141317 A
- EP 152031 A
- EP 226917 A
- EP 243970 A
- EP 256503 A
- EP 428941 A
- EP 532022 A
- EP 1028125 A
- EP 1035122 A
- EP 1201648 A
- EP 1122244 A
- JP 2002316902 B
- DE 19650197
- DE 10021412
- DE 102005009458
- US 3296272 A
- US 3325503 A
- WO 9846608 A
- WO 9914187 A
- WO 9924413 A
- WO 9927783 A
- WO 0029404 A
- WO 0046148 A
- WO 0065913 A
- WO 0154501 A
- WO 0156358 A
- WO 0222583 A
- WO 0240431 A
- WO 0310149 A
- WO 0311853 A
- WO 0314103 A

- WO 0316286 A
- WO 0353145 A
- WO 0361388 A
- WO 0366609 A
- WO 0374491 A
- WO 0449804 A
- WO 0483193 A
- WO 05120234 A
- WO 05123689 A
- WO 05123690 A
- WO 0563721 A
- WO 0587772 A
- WO 0587773 A
- WO 0615866 A
- WO 0687325 A
- WO 0687343 A
- WO 0782098 A
- WO 0790624 A
- WO 10139271 A
- WO 11028657 A
- WO 2012168188 A
- WO 201177514 A
- WO 13047749 A
- WO 10069882 A
- WO 13047441 A
- WO 0316303 A
- WO 0990181 A
- WO 13007767 A
- WO 13010862 A
- WO 13127704 A
- WO 13024009 A
- WO 13024010 A
- WO 13162072 A
- WO 13092224 A
- WO 11135833 A
- CN 1907024
- CN 1456054
- CN 103387541
- CN 1309897
- WO 1284812 A
- WO 09094442 A
- WO 1460177 A
- WO 13116251 A
- WO 08013622 A
- WO 1565922 A
- WO 9401546 A
- EP 2865265 A
- WO 07129454 A
- WO 12165511 A
- WO 11081174 A
- WO 1347441 A

**Non-patent literature cited in the description**


- **NAUEN ; DENHOLM.** *Archives of Insect Biochemistry and Physiology,* 2005, vol. 58, 200-215
- **GORMAN ; LIU ; DENHOLM ; BRÜGGEN ; NAUEN.** *Pest Manag Be,* 2008, vol. 64, 1122-1125
- **YAMAMOTO.** *Agrochem Jpn,* 1996, vol. 68, 14-15
- **DENOLF, BRAM et al.** *Journal of Organic Chemistry,* 2007, vol. 72 (9), 3211-3217
- **RM PERRIN.** *British Crop Prot Conf-Pests and Diseases,* 1986, vol. 3, 989-996
- **C. GUTIERREZ.** Geminivirus DNA Replication. *Cell. Mol. Life Sci.,* 1999, vol. 56, 313-329
- **R. W. BRIDDON et al.** *Virology,* 1996, vol. 219, 387-394
- **N. A. BOSQUE-PEREZ.** *Virus Res,* 2000, vol. 71, 107-121
- **B. GRONENBORN.** *Nano-viruses: Genome Organization and Protein Function Vet Microbiol.,* 2004, vol. 98, 103-109
- **L. R. NAULT.** Arthropod transmission of Plant Viruses: A New Synthesis. *Ann. Entomol. Soc. Am.,* 1997, vol. 90, 521-541
- **S.T. NICHOL, BUNYAVIRUSES.** Fields Virology. Lippincott Williams & Wilkins, 1603-1633
- Genetic Comparison of the Rhabdoviruses from Animals and Plaut. In: Current Topics in World of Rhabdoviruses. **Z. F. FU.** Current Topics in Microbiology and Immonology. Springer Verlag, 1-24
- **G. P. MARTELLI et al.** The Family Tymoviridae. *Arch. Virol.,* 2002, vol. 147, 1837-1846
- **C. MACBEAN.** The Pesticide Manual. British Crop Protection Council, 2015
- *CHEMICAL ABSTRACTS,* 1104384-14-6
- *CHEMICAL ABSTRACTS,* 1477919-27-9
- *Can. J. Plant Sci.,* 1968, vol. 48 (6), 587-94
- Catalogue of pesticide formulation types and international coding system. Technical Mono-graph. CropLife International, May 2008
- **MOLLET ; GRUBEMANN.** Formulation technology. Wiley VCH, 2001
- New developments in crop protection product formulation. **KNOWLES.** Agrow Reports DS243. T&F Informa, 2005
- International Ed. or North American Ed. McCutcheon's, Vol.1: Emulsifiers & Detergents. McCutcheon's Directories, 2008, vol. 1
- **KNOWLES.** Adjuvants and additives, Agrow Reports DS256. T&F Informa UK, 2006